# EUROPÄISCHE PATENTANMELDUNG

(11) **EP 2 708 680 A2**
(43) Veröffentlichungstag der Anmeldung: **19.03.2014**
(21) Anmeldenummer: 13004551.1
(22) Anmeldetag: 17.09.2013
(51) Int. Cl.: E04H 7/06, B65D 90/50, G01M 3/00, G01M 3/18

(54) **Tankbauwerk und Verfahren zur Abdichtung desselben**

(30) Priorität: 18.09.2012 DE 102012018396
(71) Anmelder: Edmund, Plumbom, 45701 Herten (DE)
(72) Erfinder: Edmund, Plumbom, 45701 Herten (DE)
(74) Vertreter: Gehrke, Peter P.

(57) **Zusammenfassung**

Die Erfindung betrifft ein zylindrisches Tankbauwerk mit einem Kammerüberwachungssystem für Flüssigkeiten, welches einen hohlzylindrischen Tankbehälter mit einem gegen einen festen Untergrund abgestützten Tankboden (1) und einem von dem Tankboden vorstehenden, vorzugsweise zylindrischen, Tankmantel (2) aufweist, wobei das Tankbauwerk eine Kammer als Überwachungskammer (K1, K2, K3, K4) vakuumdicht begrenzendes Randsegment (10) und zwei Bodensegmenten (12) umfasst, welche die Innenseite des Tankbodens (1) und den unteren Bereich der Innenseite des Tankmantels (2) dichtend abschließt, jedes Bodensegment eine Kammer als Überwachungskammer (K1, K2, K3, K4) vakuumdicht begrenzt, das ringförmige Randsegment (10) gegen den unteren, dem Tankboden zugewandten Teil der Innenseite des Tankmantels (2) anliegt, die in Draufsicht halbkreisförmig ausgebildeten Bodensegmente (12) mit ihren inneren, vorzugsweise geradlinig verlaufenden, Randbereichen voneinander beabstandet und über Flacheisen (44) miteinander dicht verbunden, insbesondere mit dem Flacheisen vakuumdicht verschweißt, sind und die Bodensegmente mit ihren halbkreisförmigen Randbereichen mit dem Randsegment dicht verbunden, insbesondere vakuumdicht verschweißt, sind.

## Beschreibung

Die vorliegende Erfindung bezieht sich auf ein Tankbauwerk zur Aufnahme von Flüssigkeiten, wie organischen oder wässrigen Flüssigkeiten, mit metallischen Werkstoffen, und ein zuverlässiges Verfahren zur Abdichtung eines Tankbauwerks mit einem Kammerüberwachungssystem mit Vakuumüberwachung.

Im Sinne der Erfindung wird unter dem Begriff "Tankbauwerk" auch der herkömmliche zylindrische Tankbehälter mit einem großen Durchmesser verstanden, der zur Lagerung großer Mengen von Flüssigkeiten, wie flüssigen, organischen Flüssigkeiten, brennbarer oder wässriger Stoffe, dient. Das herkömmliche Tankbauwerk kann metallene Werkstoffe, z.B. Eisen- oder Stahllegierungen, aufweisen oder mit solchen hergestellt sein; auch kann das herkömmliche Tankbauwerk nicht metallene Werkstoffe, z.B. kunststoffartige Materialien, aufweisen oder mit solchen hergestellt sein.

Unter Tankbauwerk wird aber auch im Sinne der Erfindung jedwedes verstanden, unabhängig von der Größe, der Form und der Beschaffenheit, wie jedweder Tankbehälter zur Lagerung oder zum Transport von Brennstoffen, insbesondere ein Tankbehälter, von Ölraffinerien, Öltankern, in dem Rohöl in großen Mengen gelagert oder transportiert werden können. Der Tankbehälter umfasst zudem einen Tankboden und einen von dem Tankboden vorstehenden Tankmantel, die den Innenraum desselben begrenzen. Der Tankboden kann als Flachboden zur Bereitstellung eines herkömmlichen Flachbodentanks ausgebildet sein. Die Lagerung großer Mengen flüssiger, brennbarer Stoffe wird in der chemischen und petrochemischen Industrie und an Umschlagplätzen für den Transport solcher Stoffe gefordert. Hierbei handelt es sich insbesondere um Rohöle oder Rohöldestillate, die beispielsweise als Treib- oder Brennstoffe, aber auch als Lösungsmittel oder als Rohstoffe oder teilveredelte Rohstoffe für weitere chemische Umwandlungen Anwendung finden. Gerade zur aktuellen Zeit und in der Vergangenheit, z.B. während der Ölkrise der 70er Jahre, wird das Erfordernis der Lagerung großer Mengen an flüssigen, brennbaren Stoffen erkannt, um auch in Krisenzeiten einen kontinuierlichen Betrieb der verfahrenstechnischen Anlagen und die Versorgung der Nutzer mit diesen Stoffen zu gewährleisten.

Es zeigt sich, dass das herkömmliche Tankbauwerk durch Aufnahme von Verunreinigungen zu Korrosionen des Tankbodens und damit zu Lecken führen kann, so dass Schweißfugen und Metalllagen, die den Tankboden des großen Tankbehälters bilden, in regelmäßigen Zeitabständen zu untersuchen sind. Das herkömmliche Tankbauwerk kann z.B. als sogenanntes Flachbodentankbauwerk einen innenseitig mit einer Schutzschicht beschichteten Stahlboden, einen innenseitig mit einer Betonschicht oder einen mit einer Lage mit einem glasfaserverstärkten kunststoffartigen Material beschichteten Tankboden aufweisen. Im Fall des Auftretens von Undichtigkeiten im Bereich dieser Tankböden wurden im Stand der Technik verschiedene Sanierungsverfahren durchgeführt.

Ein herkömmliches Sanierungsverfahren betraf das Entfernen und das Entsorgen der auf der Innenseite des Tankbodens aufgetragenen Lage mit dem glasfaserverstärkten kunststoffartigen Material und das anschließende Einbauen eines neuen Bodens mit einer Stahlmaterialstärke, beispielsweise 7,0mm, in herkömmlichen Tankbauwerken mit der Tankbodenoberflächenbeschichtung.

Die Nachteile dieses Sanierungsverfahrens waren unter Anderem Demontage und Entsorgung der alten Lage mit dem glasfaserverstärkten kunststoffartigen Material, was zu einem unverhältnismäßig hohen Zeitaufwand und Kostenaufwand und im Vorfeld schwer zu kalkulierender enormer Kosten für den Benutzer verbunden war,
Auftreten von hohen Entsorgungskosten für die Entsorgung der alten entfernten Lage mit dem glasfaserverstärkten kunststoffartigen Material,
Durchführen der Sandbestrahlung des alten Tankbodens, wodurch auch ein Anstieg der Kosten für Strahlarbeiten und Strahlgutentsorgung anfiel,
anschließendes Überprüfen des alten bestehenden Tankbodens auf Dichtigkeit mit den entstehenden Kosten für die Prüfung,
Durchführen von Reparaturen an dem alten Tankboden mit den entstehenden hohen Kosten mit anschließenden Nachprüfungen auf Dichtigkeit derselben,
Herstellen von zwangsläufig bedingten Montageöffnungen in dem Tankmantel zwecks Einbringen von großflächigen Bodenblechen in den Innenraum des Tankbauwerks,
zusätzliches Einbauen eines neuen Tankbodens zur Herstellung eines vakuumüberwachten Doppelbodens und Anfall hoher Kosten für den neuen Boden aus Stahl und Prüfkosten,
Durchführen der Reparaturen der Montageöffnungen in dem Tankmantel,
Anfallen von Material-, Schweiß- und Prüfkosten,
Anbringen einer neuen vollflächigen Schutzschicht auf den reparierten Tankboden in dem Innenraum des Tankbauwerks
sowie
die hierfür aufzuwendenden Kosten.

Dieses Sanierungsverfahren ist aufgrund der o.g. Schritte verständlicherweise nicht nur sehr kostspielig, sondern auch aufgrund der vielen durchzuführenden Sanierungsschritte sehr zeitaufwendig, verbunden mit schwer kalkulierbaren Kosten.

Zudem ist durch die Anzahl der Schwimmdachfüße eines Oberteils des Tankbauwerks eine Montage der neuen Bodenbleche nicht möglich und kann nur durch extrem kleine Bleche bewerkstelligt werden, was eine erhöhte Wärmeeinbringung und Verformung des Bodens sowie einen erhöhten Schweiß- und Prüfaufwand mit sich bringt.

Ein weiteres herkömmliches Sanierungsverfahren betrifft das Einbringen eines neuen Doppelbodens aus Stahl, z.B. mit einer Materialstärke von 7,00 mm, mit einer zusätzlich zu erfolgenden Oberflächenbeschichtung auf den alten in dem Innenraum des Tankbauwerks befindlichen Boden mit dem glasfaserverstärkten kunststoffartigen Material.

Das Verschweißen des neuen Doppelbodens mit einer Beabstandung von dem alten Tankboden zwecks Bereitstellung eines vakuumüberprüfbaren Zwischenraums führt jedoch zu hohen Gesundheitsgefahren. Abgesehen davon wird der neue einzubringende Doppelboden aus Stahl unmittelbar auf den Boden mit dem glasfaserverstärkten kunststoffartigen Material Fläche auf Fläche angesetzt, so dass die bei dem herkömmlich durchzuführenden Schweißverfahren entstehende Hitze, z.B. beim Elektrode, MAG- oder Unterpulver (UP)- Schweißen, auf das kunststoffartige Material übertragen wird. Die herkömmlichen Schweißverfahren sind dem Fachmann bekannt. So ist das herkömmliche MAG-Schweißen ein Hochleistungsschweißen mit einer kontinuierlich zugeführten abschmelzenden Drahtelektrode unter Schutzgas. Das UP-Schweißen arbeitet mit einem Lichtbogen zwischen einer kontinuierlich zugeführten abschmelzenden Drahtelektrode und dem Werkstück. Bei dem WIG-Schweißen ist es möglich, dass der Lichtbogen zwischen einer Elektrode, z.B. einer nicht abschmelzenden Wolframelektrode, und dem Werkstück gezündet wird. Z.B. bei dem Lichtbogenschweißen oder Lichtbogenhandschweißen (E-Schweißen) brennt der Lichtbogen zwischen einer umhüllten Metallelektrode und dem Werkstück, der Werkstück und/oder Elektrode aufzuschmelzen vermag.

Unter Schweißen oder Schweißverfahren mit Elektrode oder elektrisch kann im Sinne der Erfindung auch Lichtbogenschweißen, Lichtbogenschmelzschweißen oder Lichtbogenhandschweißen oder dergleichen verstanden werden.

Durch die Vielzahl an Verschweißungen im Bodenbereich wird das glasfaserverstärkte kunststoffartige Material der hohen Hitzeeinwirkung ausgesetzt, so dass eine sehr beträchtliche Brandgefahr besteht und als weiterer Nachteil für den Menschen tödliche Schweißgase entstehen können.

Ein weiteres herkömmliches Verfahren betrifft das Auftragen einer Betonschicht auf den eine Lage mit dem glasfaserverstärkten kunststoffartigen Material aufweisenden Tankboden und das nachträgliche Montieren eines Doppelbodens aus Stahl, z.B. mit einer Materialstärke von 7,00 mm, zur Bereitstellung eines vakuumüberprüfbaren und vakuumüberwachbaren Zwischenraums. Die Nachteile dieses herkömmlichen Verfahrensschrittes stimmen im Wesentlichen mit den Nachteilen der vorhergehenden herkömmlichen Verfahren überein, abgesehen davon treten Nachteile auf, wie
weitere Kosten für das Einbringen der Betonschicht,
Verkürzung der Schwimmdachfüße aufgrund der Erhöhung des den Schwimmdachfüßen zugewandten neuen Tankbodens auf der geringeren Beabstandung der Schwimmdachfüße zu der Oberseite des neuen Tankbodens
und
weitere Kosten für den Umbau von Messanlagen, wie Peiltische, Einperlmessungen vom Dach, Stutzen, innenliegende Rohrleitungen, da das Tankbodenniveau durch den Einbau der zusätzlichen Betonschicht und des neuen Doppelbodens sich deutlich erhöht.

Die weitere Schwierigkeit ergab sich bei dem Prüfen dieser Schweißnaht mittels Vakuumglocke. Da die Schweißnähte der Bleche eines herkömmlichen Tankbauwerks so dicht nebeneinander angeordnet waren, ergaben sich immer wieder große Probleme, ein einwandfreies Abdichten der Vakuumglocke und somit ein sicheres und fehlerfreies Prüfen zu gewährleisten.

Beim Verschweißen von Blechen in dem Tankbauwerk wurde das Schweißverfahren WIG angewandt. Dieses hatte den Nachteil, dass alle Nähte über den Gesamtumfang zweimal abgeklebt werden mussten, so dass die Bleche beidseitig während der gesamten Schweißdauer vollständig mit Argon gespült werden musste. Dabei kam es immer wieder zu Undichtigkeiten, was sich in Form von Porennestern widerspiegelte. Dieser Stand der Technik bedeutete einen erheblichen Zeitverlust durch Nachbesserung, Reparaturen und erhebliche Kosten durch den Verbrauch von Unmengen von Argon zum Spülen.

Die Dichtigkeitsprüfung des oberen Randsegmentes wurde mittels Überdruck (2-3 bar) und Abschäumen mit einem herkömmlichen Lecksuchspray geprüft. Bei dieser Art des Prüfens besteht die Gefahr, dass die Schweißnähte abreißen. Durch den hohen Überdruck besteht zudem ein hohes Risiko, das Fehler in den Nähten nicht erkannt werden können, da der Lecksuchspray über den Fehler nicht kontinuierlich Blasen erzeugt, sondern weggeblasen wird.

Aufgabe der Erfindung soll es sein, ein Tankbauwerk und ein Verfahren bereitzustellen, welches die Nachteile des Stands der Technik nicht verwirklichen.

Das bereitzustellende Tankbauwerk soll einen Doppelboden mit einem überprüfbaren, beispielsweise vakuumüberprüfbaren und -überwachbaren, Zwischenraum aufweisen, welches nicht die Entfernung der bereits vorhandenen Lagen auf dem Tankboden, wie die Entfernung des glasfaserverstärkten kunststoffartigen Materials, vermeidet.

Weiterhin soll das kostenträchtige Sandstrahlen des alten Tankbodens des herkömmlichen Tankbauwerks mit oder ohne Böden mit einem glasfaserverstärkten kunststoffartigen Material vermieden werden.

Hinzutretend soll die Höhenbeweglichkeit der Schwimmdachfüße des Schwimmdachs des herkömmlichen Tankbauwerks nicht eingeschränkt werden und keine Anpassung derselben erforderlich sein.

Auch sollen keine Durchbrüche durch den Tankmantel des herkömmlichen Tankbauwerks durchgeführt werden, um die Kosten sowohl für die Durchbruchbereitstellung als auch die erneute Abdichtung desselben zu vermeiden.

Zudem soll die bereitzustellende Kammerüberwachungsanordnung eine hohe Stabilität aufweisen, so dass der Einbau der Kammerüberwachungsanordnung in das Tankbauwerk die Stabilität des Tankmantels und damit die des Tankbauwerks nicht beeinträchtigt, um im Gegensatz zu herkömmlichen Abdichtungsvorrichtungen die Kraftbeaufschlagung des Tankmantels derart zu verringern, dass nach Einbau derselben kein Auftreten von Rissen und Spalten in dem Tankmantel, in dem Übergangsbereich von Tankmantel zu Tankboden und in dem Tankboden zu beobachten ist.

Ebenfalls sollen die Kosten für den Umbau von weiteren Messanlagen vermieden werden zur Überwachung der Dichtigkeit des Tankbauwerks.

Auch soll die Zeit für die Durchführung der Sanierung zwecks Bereitstellung einer erneuten Dichtigkeit des Tankbauwerks möglichst kurz sein, um das Tankbauwerk rasch der erneuten Lagerung von Flüssigkeiten zuzuführen.

Ebenso sollen die voraussehbaren Kosten für die Durchführung der Sanierung durch die wenigen durchzuführenden Verfahrensschritte überschaubar sein und gering sein.

Die Aufgabe wird gelöst durch den Hauptanspruch und dem Nebenanspruch. Die Unteransprüche betreffen bevorzugte Ausgestaltungen und Weiterentwicklungen der Erfindung.

Die Erfindung betrifft eine Kammerüberwachungsanordnung zum Einbau in einem Tankbauwerk für Flüssigkeiten, insbesondere für organische Flüssigkeiten, z.B. Dieselkraftstoffe, vorzugsweise mit einem oder mehreren metallischen Werkstoffen, welches einen, vorzugsweise hohlzylindrischen, Tankbehälter mit einem, vorzugsweise gegen einen festen Untergrund abgestützten, Tankboden und einem von dem Tankboden vorstehenden, vorzugsweise hohlzylindrischen, Tankmantel aufweist,
die Kammerüberwachungsanordnung mindestens ein Randsegment und mindestens ein Bodensegment und mindestens einen gas- und flüssigkeitsdichten Zwischenraum als Überwachungskammer zur Überwachung der Dichtigkeit der Kammerüberwachungsanordnung gegenüber Flüssigkeiten umfasst, welche dadurch gekennzeichnet ist, dass
das Randsegment und/oder das Bodensegment mindestens eine Überwachungskammer aufweisen,
vorzugsweise das Randsegment und das Bodensegment zum Aufliegen auf der oder gegen die Innenseite des Tankbodens geeignet sind,
das Randsegment mit dem Bodensegment vakuumdicht verbunden, vorzugsweise vakuumdicht verschweißt, ist,
vorzugsweise das Randsegment mit dem Tankmantel des Tankbehälters vakuumdicht verbindbar, vorzugsweise verschweißbar, ist.

Die Erfindung ist auch gerichtet auf ein Tankbauwerk mit einer Kammerüberwachungsanordnung für Flüssigkeiten, insbesondere für organische Flüssigkeiten, z.B. Dieselkraftstoffe, vorzugsweise mit metallischen Werkstoffen, welches einen, vorzugsweise hohlzylindrischen, Tankbehälter mit einem, vorzugsweise gegen einen festen Untergrund abgestützten, Tankboden und einem von dem Tankboden vorstehenden, vorzugsweise hohlzylindrischen, Tankmantel aufweist, welches dadurch gekennzeichnet ist, dass
die Kammerüberwachungsanordnung mindestens ein Randsegment und mindestens ein Bodensegment und mindestens einen gas- und flüssigkeitsdichten Zwischenraum als Überwachungskammer zur Überwachung der Dichtigkeit des Tankbauwerks gegenüber Flüssigkeiten umfasst, das Randsegment und/oder das Bodensegment je mindestens eine Überwachungskammer aufweisen,
das Randsegment oder Teil desselben und/oder das Bodensegment auf der Innenseite des Tankbodens aufliegen,
das Randsegment gegen die Innenseite des Tankmantels angesetzt ist,
das Randsegment und das Bodensegment, vorzugsweise miteinander in einem Randsegment-Bodensegment-Übergangsbereich, vakuumdicht verbunden, vorzugsweise vakuumdicht verschweißt, sind,
das Randsegment mit dem Tankmantel vakuumdicht verbunden, vorzugsweise verschweißt, ist.

Ein weiterer Gegenstand der Erfindung ist gerichtet auf ein Tankbauwerk mit einer Kammerüberwachungsanordnung, welche mindestens ein Randsegment und mindestens ein Bodensegment sowie mindestens einen gas- und flüssigkeitsdichten Zwischenraum als Überwachungskammer zur Überwachung der Dichtigkeit des Tankbauwerks gegenüber Flüssigkeiten umfasst, wobei das Randsegment oder ein Teil desselben den Zwischenraum begrenzt,
das Bodensegment oder ein Teil desselben den Zwischenraum begrenzt,
das Randsegment mit dem Tankmantel vakuumdicht verbunden, vorzugsweise verschweißt, ist,
das Randsegment mit dem Bodensegment vakuumdicht verbunden ist,
das Randsegment mindestens ein Liegeblech und/oder mindestens ein Stehblech und/oder das Bodensegment mindestens ein Bodenblech umfassen,
mindestens ein Liegeblech und/oder mindestens ein Stehblech auf Abstand zu der Innenseite des Tankmantels und /oder der Innenseite des Tankbodens gehalten sind,
mindestens ein Bodenblech auf Abstand zu der Innenseite des Tankbodens oder zu einem weiteren Bodenblech angeordnet ist, vorzugsweise das Bodenblech und/oder das weitere Bodenblech parallel zu der Innenseite des Tankbodens ausgerichtet sind.

Ein zusätzlicher Gegenstand der Erfindung bezieht sich auf ein Verfahren zur Abdichtung eines Tankbauwerkes mit einer Kammerüberwachungsanordnung für Flüssigkeiten, insbesondere für organische Flüssigkeiten, z.B. Dieselkraftstoffe, vorzugsweise mit metallischen Werkstoffen, welches einen, vorzugsweise hohlzylindrischen, Tankbehälter mit einem, vorzugsweise gegen einen festen Untergrund abgestützten, Tankboden und einem von dem Tankboden vorstehenden, vorzugsweise als Hohlzylinder ausgebildeten, Tankmantel aufweist, die Kammerüberwachungsanordnung mit mindestens einem Bodensegment und mindestens einem Randsegment in das Tankbauwerk eingebaut wird, wobei
das von einem inneren Randbereich BX bis zu einem äußeren Randbereich B des Tankbehälters sich erstreckende Randsegment mit einem im Längsschnitt L-förmigen Zwischenraum als Überwachungskammer und das Bodensegment mit einem Zwischenraum als Überwachungskammer auf den Tankboden angeordnet und das Bodensegment und das Randsegment miteinander vakuumdicht verbunden, vorzugsweise verschweißt, und das gegen eine Innenseite des Tankmantels angesetzte Randsegment mit der Innenseite des Tankmantels vakuumdicht verbunden, vorzugsweise verschweißt, werden,
vorzugsweise mindestens ein Zwischenraum als Überwachungskammer zur Überprüfung auf Dichtheit oder Dichtigkeit derselben an eine Vakuum-Überwachungseinrichtung, an einen Leckanzeiger etc., anschließbar ausgebildet wird
und/oder
mindestens ein Zwischenraum als Überwachungskammer des Bodensegments mit mindestens einem der Zwischenräume, die von übereinander angeordneten voneinander beabstandeten Bodensumpfbehältern und/oder von übereinander angeordneten voneinander beabstandeten Schlammtassen und/oder von übereinander angeordneten voneinander beabstandeten Auflagebleche, welche Auflagebleche zur Auflage von Schwimmdachfüßen geeignet sind, ausgebildet werden, flüssigkeits- und/oder gasmäßig zum Austausch von Flüssigkeiten und Gasen zwischen den Zwischenräumen von Schlammtassen und /oder von Bodensumpfbehältern und mindestens einem Zwischenraum vom Bodensegment verbindbar ausgestaltet oder verbunden werden.
Ein zusätzlicher Gegenstand der Erfindung betrifft ein Verfahren zur Abdichtung eines Tankbauwerkes mittels eines Leckanzeigers, welcher gekennzeichnet ist, dass
a. eine in einem Sprühbehälter enthaltende Flüssigkeit, welche eine Flüssigseife in einer wässrigen Lösung enthält,
b. mittels einer handbetätigbaren Pumpe auf eine vorbestimmte Fläche einer zu überprüfenden Schweißnaht aufgesprüht wird,
c. gegen die vorbestimmte Fläche einer einen Zwischenraum vakuumdicht verschließenden Schweißnaht eine Vakuumhaube angesetzt wird,
d. der Innenraum der Vakuumhaube evakuiert wird, insbesondere in der Vakuumhaube ein Vakuum, vorzugsweise von -0,8 bis -1,0 bar, erzeugt wird, welche Vakuumhaube mit einer an einen Rahmen gekoppelten Scheibe mit mindestens zwei ventilgesteuerte Öffnungen ausgebildet wird,
e. der Zwischenraum mit Argon mit einem Prüfdruck, vorzugsweise von 0,3 bis 0,8 bar, beaufschlagt wird und die zu überprüfende Fläche auf Blasenentstehen in der aufgesprühten Flüssigseife geprüft wird.

Der Erfindung liegt auch die Verwendung der Kammerüberwachungsanordnung eines doppelwandigen Randsegments und eines doppelbödigen Bodensegments zugrunde. Unter anderem liegt der Erfindung die Verwendung von Randsegmenten zugrunde, die in Draufsicht kreisförmig, wie ringförmig oder oval, oder eckig ausgebildet sein können oder die in Draufsicht teilkreisförmig, wie halbkreisförmig oder viertelkreisförmig, ausgebildet und miteinander vakuumdicht verbunden, vorzugsweise vakuumdicht verschweißt, sein können,
die Überwachungskammern vakuumdicht umschließen können,
die mit dem Tankmantel vakuumdicht verschweißt sind,
welches als untere Teile untere Liegebleche und untere Stehbleche sowie als obere Teile obere Liegebleche und obere Stehbleche umfassen können und mit diesen Blechen einen oder mehrere Zwischenräume als Überwachungskammern vakuumdicht verschließen oder begrenzen können:

In einer Ausgestaltung der erfindungsgemäßen Kammerüberwachungsanordnung kann das untere Liegeblech auf dem Tankboden oder auf einer zu dem Tankboden hin oder zu dem Kreismittelpunkt des Tankbodens hin geneigten Betonschicht aufliegen,
wobei die Betonschicht auf einer auf den Tankboden aufgetragenen Schicht mit einem glasfaserverstärkten kunststoffartigen Material Fläche auf Fläche in dem dem Tankmantel zugewandten Randbereich des Tankbodens aufgetragen sein kann,
das in Richtung zu dem Tankboden hin oder zu dem Kreismittelpunkt des kreisrunden Tankbodens hin geneigte oder auf dem Tankboden aufgelegte untere Stehblech kann sowohl gegen den Tankmantel als auch gegen das untere Liegeblech unter Bildung von Ansatzstellen angesetzt sein,
das zum Tankboden geneigte oder zu dem Kreismittelpunkt des Tankbodens hin geneigte obere Liegeblech kann gegen das untere Liegeblech und gegen auf dem unteren Liegeblech angeordnete Abstandshalter unter Bildung von Ansatzstellen angesetzt werden,
das in Richtung zu dem Tankboden hin geneigte oder zu dem Kreismittelpunkt des Tankbodens hin geneigte obere Stehblech kann sowohl gegen den Tankmantel als auch gegen das obere Liegeblech unter Bildung von Ansatzstellen angesetzt werden sowie die Ansatzstellen können vakuumdicht verschweißt werden zur Bildung des vakuumdichten Zwischenraums.

Das erfindungsgemäße Tankbauwerk kann auch nur einen vakuumdichten Zwischenraum als Überwachungskammer umfassen, wobei das Randsegment mindestens ein Liegeblech und das Bodensegment mindestens ein Bodenblech umfassen, das Randsegment mit dem Bodensegment vakuumdicht verbunden ist, das Randsegment oder ein Teil desselben und das Bodensegment oder ein Teil desselben den Zwischenraum begrenzen, das Randsegment mit dem Tankmantel vakuumdicht verbunden ist, mindestens ein Liegeblech und/oder mindestens ein Stehblech auf Abstand zu der Innenseite des Tankmantels und /oder der Innenseite des Tankbodens und das Bodenblech auf Abstand zu der Innenseite des Tankbodens angeordnet sind.

So umfasst in einer Ausgestaltung des erfindungsgemäßen Tankbauwerks das Randsegment ein im Längsschnitt L-förmiges Liegeblech und ein Bodenblech. Das L-förmige Liegeblech ist mit seinem äußeren Randbereich gegen den Tankmantel angesetzt und mit diesem verbunden, vorzugsweise unter Bildung von vakuumdichten Schweißnähten verschweißt. Zwischen dem Bodenblech und der Innenseite des Tankbodens befindet sich eine Schicht mit Stahlgittergewebe, z.B. mit verzinktem Stahlgittergewebe, um das Bodenblech von der Innenseite des Tankbodens auf Abstand zu halten. Der äußere Randbereich des Bodenblechs ist mit dem Tankboden lediglich verheftet unter Bildung von gehefteten Verschweißungsstellen. Der innere Randbereich des Liegeblechs ist mit dem äußeren Randbereich des Bodenblechs vakuumdicht verbunden, z.B. verschweißt unter Bildung von vakuumdichten Schweißnähten. Der Zwischenraum als Überwachungskammer wird begrenzt im Wesentlichen von dem L-förmigen Liegeblech und dem von dem Tankboden auf Abstand gehaltenen Bodenblech sowie von den dem Liegeblech und Bodenblech zugewandten Bereichen des Tankmantels und Tankbodens. Die gehefteten Verschweißungsstellen des äußeren Randbereichs des Bodenblechs mit dem Tankboden ermöglichen wegen der lediglich punktuellen Verschweißungsstellen die Durchgängigkeit für Gase und/oder·Flüssigkeiten zwischen den von dem Bodenblech und dem Tankboden einerseits und den von dem Liegeblech und Tankboden und Tankmantel gebildeten Räumen als Zwischenraum.

Eine weitere Ausführungsform des erfindungsgemäßen Tankbauwerks mit einem vakuumdichten Zwischenraum als Überwachungskammer umfasst ein Randsegment mit einem im Längsschnitt L-förmigen Liegeblech, einem bodenseitigen Liegeblech, welches von der Innenseite des Tankbodens auf Abstand gehalten wird, und einem parallel zu der Innenseite des Tankbodens verlaufenden Bodenblech. Der äußere Randbereich des Liegeblechs ist gegen den Tankmantel angesetzt und vakuumdicht verbunden, vorzugsweise unter Bildung von vakuumdichten Schweißnähten vakuumdicht verschweißt, der innere Randbereich des L-förmigen Liegeblechs ist mit der Oberseite des bodenseitigen Liegeblechs, die dem Tankboden abgewandt ist, gleichfalls vakuumdicht verbunden, vorzugsweise unter Bildung von vakuumdichten Schweißnähten verschweißt. Das von dem Tankboden auf Abstand gehaltene Bodenblech liegt mit seinem äußeren Randbereich auf dem inneren Randbereich des bodenseitigen Liegeblechs auf und ist mit diesem vakuumdicht verbunden, vorzugsweise unter Bildung von vakuumdichten Schweißnähten verschweißt. Das bodenseitige Liegeblech ist sowohl mit seinem äußeren Randbereich als auch mit seinem inneren Randbereich mit dem Tankboden lediglich verheftet unter Bildung von gehefteten Verschweißungsstellen, so dass sich ein gas- und flüssigkeitsmäßig durchgängiger - oder -lässiger Zwischenraum bildet, der begrenzt wird im Wesentlichen von dem L-förmigen Liegeblech, dem bodenseitigen Liegeblech und dem Bodenblech und den jeweiligen den Liegeblechen und Bodenblechen zugewandten Bereichen von Tankmantel und Tankboden.

Eine weitere Ausgestaltung des erfindungsgemäßen Tankbauwerks mit einem vakuumdichten Zwischenraum als Überwachungskammer umfasst ein Randsegment mit einem Liegeblech und einem Bodensegment mit einem Bodenblech. Das Liegeblech und das Bodenblech sind parallel zu der Innenseite des Tankbodens ausgerichtet. Das Liegeblech ist mit seinem äußeren Randbereich gegen den Tankmantel angesetzt und mit diesem vakuumdicht verbunden, vorzugsweise unter Bildung von vakuumdichten Schweißnähten vakuumdicht verschweißt; der innere Randbereich des Liegeblechs liegt auf dem äußeren Randbereich des Bodenblechs auf und mit diesem gleichfalls vakuumdicht verbunden, vorzugsweise unter Bildung von vakuumdichten Schweißnähten vakuumdicht verschweißt. Der äußere Randbereich des Bodenblechs, welches durch eine zwischen dem Bodenblech und der Innenseite des Tankbodens angeordnete Schicht mit Stahlgittergewebe auf Abstand gehalten ist, ist mit dem Tankboden lediglich unter Bildung von gehefteten Verschweißungsstellen verheftet. Im Sinne der Erfindung kann unter einer Schicht mit Stahlgittergewebe auch eine Schicht mit einem Gewebe mit sonstigen Werkstoffe, wie metallene Werkstoffe, deren Legierungen, z.B. Eisenoder Stahllegierungen, kunststoffartige oder Mischungen derselben, verstanden werden. Der Zwischenraum wird begrenzt im Wesentlichen von dem Liegeblech und dem Bodenblech und den entsprechenden dem Liegeblech und Bodenblech zugewandten Bereichen von dem Tankmantel und dem Tankboden.

Eine zusätzliche Ausgestaltung des erfindungsgemäßen Tankbauwerks mit einem vakuumdichten Zwischenraum als Überwachungskammer umfasst als Randsegment zwei Liegebleche und als Bodensegment zwei Bodenbleche, welche parallel zu der Innenseite des Tankbodens ausgerichtet sind. Das bodenseitige Liegeblech wird von dem bodenseitigen Bodenblech von der Innenseite des Tankbodens auf Abstand gehalten, da ein Teil des bodenseitigen Bodenblechs, vorzugsweise sein äußerer Randbereich, zwischen dem bodenseitigen Liegeblech und dem Tankboden sich befindet. Der äußere Randbereich des bodenseitigen Liegeblechs ist mit dem Tankmantel vakuumdicht verbunden, vorzugsweise unter Bildung von vakuumdichten Schweißnähten vakuumdicht verschweißt. Der innere Randbereich des bodenseitigen Liegeblechs ist mit dem bodenseitigen Bodenblech gleichfalls vakuumdicht verbunden, vorzugsweise unter Bildung von vakuumdichten Schweißnähten vakuumdicht verschweißt. Zwischen dem bodenseitigen Bodenblech und dem oberen Bodenblech ist eine Schicht aus Stahlgittergewebe angeordnet, so dass das obere Bodenblech von dem bodenseitigen Bodenblech gleichfalls beabstandet ist. Der äußere Randbereich des oberen Bodenblechs ist mit dem bodenseitigen Liegeblech lediglich unter Bildung von gehefteten Verschweißungsstellen verheftet. Das obere Liegeblech ist von dem bodenseitigen Liegeblech durch den Einzug des äußeren Randbereichs des oberen Bodenblechs zwischen dem oberen Liegeblech und dem bodenseitigen Liegeblech auf Abstand gehalten. Der äußere Randbereich des oberen Liegeblechs ist mit dem Tankmantel vakuumdicht verbunden, vorzugsweise unter Bildung von vakuumdichten Schweißnähten vakuumdicht verschweißt; der innere Randbereich des oberen Liegeblechs ist gleichfalls mit dem äußeren Randbereich des oberen Bodenblechs vakuumdicht verbunden, vorzugsweise unter Bildung von vakuumdichten Schweißnähten vakuumdicht verschweißt. Der Zwischenraum wird begrenzt im Wesentlichen von dem oberen Liegeblech, dem oberen Bodenblech, dem bodenseitigen Liegeblech und dem bodenseitigen Bodenblech.

In einer weiteren Ausgestaltung des erfindungsgemäßen Tankbauwerks mit einem vakuumdichten Zwischenraum als Überwachungskammer umfasst das Randsegment ein Stehblech, ein Liegeblech und das Bodensegment ein Bodenblech. Das Stehblech ist in Richtung zu dem Tankboden hin geneigt, so dass sein äußerer Randbereich einen größeren Abstand zu der Innenseite des Tankbodens aufweist als sein innerer Randbereich. Der äußere Randbereich des Stehblechs ist gegen den Tankmantel angesetzt und mit diesem vakuumdicht verbunden, vorzugsweise unter Bildung von vakuumdichten Schweißnähten vakuumdicht verschweißt; der innere Randbereich des Stehblechs ist gegen den äußeren Randbereich des Liegeblechs angesetzt und vakuumdicht verbunden, vorzugsweise unter Bildung von vakuumdichten Schweißnähten vakuumdicht verschweißt. Auch das Liegeblech ist wie das Stehblech in Richtung zu dem Tankboden hin geneigt, wobei die Neigung des Liegeblechs unterstützt wird durch einen Abstandshalter, der im äußeren Randbereich des Liegeblechs zwischen dem Liegeblech und dem Tankmantel angeordnet ist. Das Liegeblech ist mit seinem inneren Randbereich gegen die Innenseite des Tankbodens angesetzt und lediglich mit dem Tankmantel unter Bildung von gehefteten Verschweißungsstellen verheftet. Das Bodenblech ist von der Innenseite des Tankmantels durch eine zwischen dem Bodenblech und dem Tankmantel angeordnete Schicht mit Stahlgittergewebe beabstandet. Der äußere Randbereich des Bodenblechs liegt auf dem inneren Randbereich des Liegeblechs auf und ist mit diesem vakuumdicht verbunden, vorzugsweise unter Bildung von vakuumdichten Schweißnähten vakuumdicht verschweißt. Der Zwischenraum wird begrenzt im Wesentlichen von dem Stehblech, dem Liegeblech und dem Bodenblech und den jeweiligen dem Stehblech, dem Liegeblech und dem Bodenblech zugewandten Bereichen des Tankmantels und des Tankbodens.

In einer weiteren Ausgestaltung des erfindungsgemäßen Tankbauwerks mit einem vakuumdichten Zwischenraum als Überwachungskammer umfasst das Randsegment zwei im Längsschnitt L-förmige Liegebleche, die voneinander auf Abstand gehalten sind. Das Bodensegment umfasst zwei Bodenbleche. Die äußeren Randbereiche der Liegebleche sind gegen den Tankmantel angesetzt und mit dem Tankmantel vakuumdicht verbunden, vorzugsweise unter Bildung von vakuumdichten Schweißnähten vakuumdicht verschweißt. Der innere Randbereich des unteren Liegeblechs ist gegen die Oberseite des bodenseitigen Bodenblechs angesetzt und mit diesem vakuumdicht verbunden, vorzugsweise unter Bildung von vakuumdichten Schweißnähten vakuumdicht verschweißt. Der innere Randbereich des oberen Liegeblechs ist gegen die Oberseite des oberen Bodenblechs angesetzt und mit diesem vakuumdicht verbunden, vorzugsweise unter Bildung von vakuumdichten Schweißnähten vakuumdicht verschweißt. Der innere Randbereich des unteren Liegeblechs hat einen geringeren Abstand zu dem Tankmantel als der innere Randbereich des oberen Liegeblechs zu dem Tankmantel. Das bodenseitige Bodenblech liegt auf der Innenseite des Tankbodens auf, wobei der äußere Randbereich des Bodenblechs mit dem Tankboden verheftet ist unter Bildung von gehefteten Verschweißungsstellen. Zwischen dem oberen Bodenblech und dem bodenseitigen Bodenblech ist eine Schicht mit Stahlgittergewebe angeordnet, so dass das obere Bodenblech von dem bodenseitigen Bodenblech beabstandet ist. Der äußere Randbereich des oberen Bodenblechs ist mit dem bodenseitigen Bodenblech lediglich unter Bildung von gehefteten Verschweißungsstellen verheftet. Der Zwischenraum wird begrenzt im Wesentlichen von den beiden auf Abstand gehaltenen Liegeblechen und den beiden auf Abstand gehaltenen Bodenblechen.

Das erfindungsgemäße Tankbauwerk kann zwei vakuumdichte Zwischenräume als Überwachungskammern umfassen, wobei das Randsegment mindestens ein Liegeblech und das Bodensegment mindestens ein Bodenblech umfassen, das Randsegment mit dem Bodensegment vakuumdicht verbunden ist, das Randsegment oder ein Teil desselben einen Zwischenraum und das Bodensegment oder ein Teil desselben einen weiteren Zwischenraum begrenzen, das Randsegment mit dem Tankmantel vakuumdicht verbunden ist, mindestens ein Liegeblech und/oder mindestens ein Stehblech auf Abstand zu der Innenseite des Tankmantels und /oder der Innenseite des Tankbodens und das Bodenblech auf Abstand zu der Innenseite des Tankbodens angeordnet sind.

Das erfindungsgemäße Tankbauwerk kann auch mindestens zwei Zwischenräume als vakuumdichte Überwachungskammern aufweisen. So umfasst eine Ausgestaltung des erfindungsgemäßen Tankbauwerks das Randsegment ein Stehblech und ein Liegeblech sowie das Bodensegment lediglich ein Bodenblech. Das Stehblech und das Liegeblech sind in Richtung zu dem Tankboden hin geneigt, so dass die äußeren Randbereiche des Stehblechs und des Liegeblechs einen größeren Abstand zu dem Tankboden aufweisen als die inneren Randbereiche des Stehblechs und des Liegeblechs. Der äußere Randbereich des Stehblechs ist gegen den Tankmantel angesetzt und vakuumdicht verbunden, vorzugsweise unter Bildung von vakuumdichten Schweißnähten vakuumdicht verschweißt. So sind der innere Randbereich des Stehblechs mit dem äußeren Randbereich des Liegeblechs sowie der innere Randbereich des Liegeblechs mit dem Tankboden vakuumdicht verbunden, vorzugsweise unter Bildung von vakuumdichten Schweißnähten vakuumdicht verschweißt. Die Neigung des Liegeblechs wird unterstützt durch einen Abstandshalter, welcher im äußeren Randbereich des Liegeblechs zwischen dem Liegeblech und dem Tankboden angeordnet ist und auf welchem das Liegeblech aufliegt. Das Bodenblech erstreckt sich im weitgehend parallel zu der Innenseite des Tankbodens, wobei der äußere Randbereich des Bodenblechs auf dem inneren Randbereich des Liegeblechs aufliegt und vakuumdicht verbunden, vorzugsweise unter Bildung von vakuumdichten Schweißnähten vakuumdicht verschweißt, ist. Der eine Zwischenraum wird begrenzt im Wesentlichen von dem Stehblech und dem Liegeblech und den jeweiligen dem Stehblech und Liegeblech zugewandten Bereichen von dem Tankmantel und dem Tankboden. Der zweite Zwischenraum wird begrenzt im Wesentlichen von dem Bodenblech und dem dem Bodenblech zugewandten Bereich des Tankmantels.

Eine weitere Ausgestaltung des erfindungsgemäßen Tankbauwerks mit zwei vakuumdichten Zwischenräume als vakuumdichte Überwachungskammern umfasst ein Randsegment mit einem Stehblech und einem Liegeblech und einem Bodensegment mit zwei Bodenblechen. Das Stehblech und das Liegeblech sind wiederum in Richtung zu dem Tankboden hin geneigt, wobei der äußere Randbereich des Stehblechs gegen den Tankmantel angesetzt und mit diesem vakuumdicht verbunden, vorzugsweise unter Bildung von vakuumdichten Schweißnähten vakuumdicht verschweißt, sind. Der innere Randbereich des Stehblechs ist gegen den inneren Randbereich des Liegeblechs angesetzt und mit diesem vakuumdicht verbunden, vorzugsweise unter Bildung von vakuumdichten Schweißnähten vakuumdicht verschweißt. Der innere Randbereich des Liegeblechs ist gegen den Tankboden angesetzt und gleichfalls mit diesem vakuumdicht verbunden, vorzugsweise unter Bildung von vakuumdichten Schweißnähten vakuumdicht verschweißt oder unter Bildung von gehefteten Verschweißungsstellen verheftet. Das bodenseitige Bodenblech verläuft im Wesentlichen parallel zu der Innenseite des Tankbodens, wobei zwischen dem oberen Bodenblech und dem bodenseitigen Bodenblech eine Schicht mit Stahlgittergewebe eingezogen ist bzw. angeordnet ist, so dass das obere Bodenblech von dem bodenseitigen Bodenblech auf Abstand gehalten ist. Der äußere Randbereich des oberen Bodenblechs und der des bodenseitigen Bodenblechs liegen voneinander beabstandet auf dem Liegeblech auf und sind vakuumdicht verbunden, vorzugsweise unter Bildung von vakuumdichten Schweißnähten vakuumdicht verschweißt, wobei der äußere Randbereich des oberen Bodenblechs einen kürzeren Abstand zu dem Tankmantel aufweist als der äußere Randbereich des bodenseitigen Bodenblechs. Der eine Zwischenraum wird begrenzt im Wesentlichen von dem Stehblech und dem Liegeblech und den jeweiligen dem Stehblech und dem Liegeblech zugewandten Bereichen von dem Tankmantel und dem Tankboden; der zweite Zwischenraum wird gebildet im Wesentlichen von den beiden Bodenblechen, die voneinander beabstandet sind.

Eine weitere Ausgestaltung des erfindungsgemäßen Tankbauwerks mit zwei vakuumdichten Zwischenräumen als Überwachungskammern umfasst als Randsegment ein im Längsschnitt L-förmiges Liegeblech und ein bodenseitiges Liegeblech, sowie als Bodensegment zwei Bodenbleche mit einem oberen Bodenblech und einem bodenseitigen Bodenblech. Das L-förmige Liegeblech ist mit seinem äußeren Randbereich gegen den Tankmantel angesetzt und mit ihm vakuumdicht verbunden, vorzugsweise unter Bildung von vakuumdichten Schweißnähten vakuumdicht verschweißt. Der innere Randbereich des L-förmigen Liegeblechs ist gegen die dem Tankboden abgewandte Oberseite des bodenseitigen Liegeblechs angesetzt und gleichfalls mit diesem vakuumdicht verbunden, vorzugsweise unter Bildung von vakuumdichten Schweißnähten vakuumdicht verschweißt. Das bodenseitige Liegeblech, welches von der Innenseite des Tankmantels beabstandet ist, ist lediglich mit seinem äußeren Randbereich mit dem Tankmantel unter Bildung von gehefteten Verschweißungsstellen verheftet; hingegen ist der innere Randbereich des bodenseitigen Liegeblechs mit dem Tankboden vakuumdicht verbunden, vorzugsweise unter Bildung von vakuumdichten Schweißnähten vakuumdicht verschweißt. Zwischen den beiden Bodenblechen ist eine Schicht mit Stahlgittergewebe eingezogen, so dass beide voneinander beabstandet sind. Der äußere Randbereich des oberen Bodenblechs und der äußere Randbereich des bodenseitigen Bodenblechs sind mit der Oberseite des bodenseitigen Liegeblechs vakuumdicht verschweißt, wobei der äußere Randbereich des oberen Bodenblechs zu dem Tankmantel einen kürzeren Abstand aufweist als der äußere Randbereich des bodenseitigen Bodenblechs. Der eine Zwischenraum wird begrenzt im Wesentlichen von dem L-förmigen Liegeblech und dem bodenseitigen Liegeblech und den jeweiligen dem L-förmigen Liegeblech und dem bodenseitigen Liegeblech zugewandten Bereichen von dem Tankmantel und dem Tankboden. Der andere Zwischenraum wird begrenzt von den beiden gegenüberliegenden Bodenblechen.

Eine zusätzliche Ausgestaltung des erfindungsgemäßen Tankbauwerks mit zwei vakuumdichten Zwischenräumen umfasst ein Randsegment mit einem Stehblech und zwei Liegeblechen, sowie ein Bodensegment mit drei Bodenblechen. Das bodenseitige Liegeblech verläuft parallel zu der Innenseite des Tankbodens und liegt auf diesem auf. Der äußere Randbereich des bodenseitigen Liegeblechs ist mit dem Tankmantel und der innere Randbereich des bodenseitigen Liegeblechs ist mit dem Tankboden vakuumdicht verbunden, vorzugsweise unter Bildung von vakuumdichten Schweißnähten vakuumdicht verschweißt. Das Stehblech und das von dem bodenseitigen Liegeblech beabstandete obere Liegeblech sind zu dem Tankboden hin geneigt, so dass die äußeren Randbereiche von Stehblech und Liegeblech einen größeren Abstand zu dem Tankmantel aufweisen als die inneren Randbereiche von Stehblech und Liegeblech. Der äußere Randbereich des Stehblechs ist gegen den Tankmantel gesetzt und der innere Randbereich des Stehblechs ist gegen den äußeren Randbereich des Liegeblechs angesetzt und diese im Bereich der Ansatzstellen vakuumdicht verbunden, vorzugsweise unter Bildung von vakuumdichten Schweißnähten vakuumdicht verschweißt. Auf dem inneren Randbereich des bodenseitigen Liegeblechs liegt ein bodenseitiges Bodenblech auf, welches parallel zu der Innenseite des Tankbodens verläuft. Der äußere Randbereich und der innere Randbereich des bodenseitigen Bodenblechs sind mit dem bodenseitigen Liegeblech vakuumdicht verbunden, vorzugsweise unter Bildung von vakuumdichten Schweißnähten vakuumdicht verschweißt. Das untere Bodenblech liegt teilweise auf dem bodenseitigen Bodenblech auf, wobei sein äußerer Randbereich mit dem bodenseitigen Bodenblech vakuumdicht verbunden, vorzugsweise unter Bildung von vakuumdichten Schweißnähten vakuumdicht verschweißt, ist. Das obere Bodenblech liegt mit seinem äußeren Randbereich auf dem inneren Randbereich des oberen Liegeblechs auf. Der äußere Randbereich des oberen Bodenblechs ist mit dem Liegeblech vakuumdicht verbunden, vorzugsweise unter Bildung von vakuumdichten Schweißnähten vakuumdicht verschweißt. Zwischen dem oberen Bodenblech und dem unteren Bodenblech ist eine Schicht mit Stahlgittergewebe eingezogen, so dass das obere Bodenblech von dem unteren Bodenblech auf Abstand gehalten wird. Der eine Zwischenraum wird begrenzt von dem Stehblech, dem bodenseitigen Liegeblech und dem dem bodenseitigen Liegeblech beabstandeten Liegeblech und dem Bereich des Tankmantels, welcher dem Stehblech und Liegeblech zugewandt ist. Der zweite Zwischenraum wird begrenzt von dem oberen Bodenblech, dem unteren Bodenblech und einem Teil des bodenseitigen Liegeblechs und einem Teil des bodenseitigen Bodenblechs.

In einer weiteren Ausgestaltung des erfindungsgemäßen Tankbauwerks mit zwei vakuumdichten Zwischenräumen umfasst das Randsegment zwei Stehbleche, zwei Liegebleche und das Bodensegment drei Bodenbleche. Die Stehbleche und die Liegebleche sind in Richtung zu dem Tankboden hin geneigt. Die äußeren Randbereiche der Stehbleche sind gegen den Tankmantel angesetzt und mit diesem unter Bildung von vakuumdichten Schweißnähten vakuumdicht verbunden, vorzugsweise unter Bildung von vakuumdichten Schweißnähten vakuumdicht verschweißt. Das untere Stehblech ist mit seinem inneren Randbereich gegen den äußeren Randbereich des unteren Liegeblechs angesetzt und mit diesem vakuumdicht verbunden, vorzugsweise unter Bildung von vakuumdichten Schweißnähten vakuumdicht verschweißt. Das obere Stehblech ist gleichfalls mit seinem inneren Randbereich gegen den äußeren Randbereich des oberen Liegeblechs angesetzt und mit diesem vakuumdicht verbunden, vorzugsweise unter Bildung von vakuumdichten Schweißnähten vakuumdicht verschweißt. Das untere Liegeblech ist mit seinem inneren Randbereich gegen das parallel zu der Innenseite des Tankbodens verlaufende bodenseitige Bodenblech angesetzt und mit diesem gleichfalls vakuumdicht verbunden, vorzugsweise unter Bildung von vakuumdichten Schweißnähten vakuumdicht verschweißt. Das obere Liegeblech ist mit seinem inneren Randbereich gegen den inneren Randbereich des unteren Liegeblechs angesetzt und mit diesem vakuumdicht verbunden, vorzugsweise unter Bildung von vakuumdichten Schweißnähten vakuumdicht verschweißt. Das untere Liegeblech weist eine geringere Neigung auf als das obere Liegeblech. Das bodenseitige Bodenblech liegt auf der Innenseite des Tankbodens auf, wobei die äußeren und inneren Randbereiche des bodenseitigen Bodenblechs mit dem Tankboden unter Bildung von gehefteten Verschweißungsstellen verheftet sind. Das untere Bodenblech liegt mit seinem äußeren Randbereich auf dem inneren Randbereich des bodenseitigen Bodenblechs auf und ist mit seinem äußeren Randbereich mit dem bodenseitigen Bodenblech vakuumdicht verbunden, vorzugsweise unter Bildung von vakuumdichten Schweißnähten vakuumdicht verschweißt. Das obere Bodenblech liegt mit seinem äußeren Randbereich auf dem inneren Randbereich des oberen Liegeblechs auf und ist mit dem Liegeblech vakuumdicht verbunden, vorzugsweise unter Bildung von vakuumdichten Schweißnähten vakuumdicht verschweißt. Das obere Bodenblech ist durch eine zwischen oberen Bodenblech und unteren Bodenblech angeordnete Schicht mit Stahlgittergewebe von dem unteren Bodenblech und von dem bodenseitigen Bodenblech beabstandet. Der eine Zwischenraum wird begrenzt von dem oberen Stehblech, dem unteren Stehblech, dem unteren Liegeblech und dem oberen Liegeblech und einem Teil des dem oberen Stehblech zugewandten Bereichs des Tankmantels. Der zweite Zwischenraum wird im Wesentlichen von dem oberen Bodenblech, dem unteren Bodenblech und einem Teil des bodenseitigen Bodenblechs, sowie einem Teil des oberen Liegeblechs und unteren Liegeblechs.

Der Begriff von "im Wesentlichen" bei der Offenbarung der Begrenzung von z.B. Zwischenräumen wird verwendet, da die Begrenzung des Zwischenraums abgestellt werden kann auf die hier erfolgenden obere und untere Begrenzung, gleichwohl die seitliche Begrenzung des Zwischenraums von z.B. zwischen den Bodenblechen eingeschobene Flacheisen und deren vakuumdichten Verbindung mit den Bodenblechen oder durch die gas- oder flüssigkeitsmäßige Verbindung mit dem von Bodensumpfbehältern und/oder Schlammtassen und/oder Auflagen für Schwimmdachfüße ausgestalteten Zwischenräumen bereitgestellt werden kann.

Unter anderem liegt der Erfindung auch zugrunde die Verwendung eines Bodensegments, vorzugsweise von zwei in Draufsicht halbkreisförmigen Bodensegmenten. Das Bodensegment kann ein oberes Bodenblech und ein unteres Bodenblech umfassen, die den Doppelboden des Bodensegmentes bilden können und welche voneinander, z.B. durch eine zwischen beiden Bodenblechen angeordnete Schicht mit Stahlgittergewebe, unter Bildung des Zwischenraums als Überwachungskammer beabstandet sein können. Das untere Bodenblech und das obere Bodenblech des Bodensegments begrenzen oder verschließen vakuumdicht ober- und unterseitig die Überwachungskammer des Bodensegments. In einer Ausgestaltung des erfindungsgemäßen Tankbauwerks sind die unteren Bodenbleche mit ihren unteren Bodenblechbahnen und /oder die oberen Bodenbleche mit ihren oberen Bodenblechbahnen in Draufsicht auf ein hohlzylindrisches Tankbauwerk quer zu einer Mitte-Querachse Q desselben ausgerichtet.

In dem seitlichen Bereich des Bodensegments, z.B. dem Randsegment abgewandten Bereich des Bodensegments, kann der Zwischenraum des Bodensegmentes ebenso begrenzt oder vakuumdicht verschlossen sein; so kann der Zwischenraum des Bodensegmentes seitlich von Einrichtungen, z.B. von oberseitigen und unterseitigen Unterlegflacheisen im Bereich der Kammertrennung, oder von Flacheisen, vakuumdicht begrenzt oder vakuumdicht verschlossen sein, In dem seitlichen Bereich des Bodensegments, z.B. der dem Randsegment zugewandten Bereich des Bodensegments, kann der Zwischenraum des Bodensegmentes ebenso begrenzt oder vakuumdicht verschlossen sein, so dass der Zwischenraum des Bodensegmentes seitlich von Teilen des Randsegmentes vakuumdicht begrenzt oder vakuumdicht verschlossen sein, z.B. durch die vakuumdichte Verschweißung des oberen Bodenblechs, z.B. von dessen äußeren Randbereich, mit dem oberen Liegeblech und/oder des unteren Bodenblechs, z.B. von dessen äußeren Randbereich, mit dem unteren Liegeblech. Der seitliche Verschluss des Bodensegmentes oder dessen Zwischenraums kann bereitgestellt werden z.B. durch einen Übergang des Randsegments zu dem Bodensegment, wobei das obere Bodenblech gegen einen Teil des oberen Liegeblechs Fläche auf Fläche und das untere Bodenblech gegen einen Teil des unteren Liegeblechs Fläche auf Fläche aufzuliegen vermögen und einander vakuumdicht verschweißt werden.

Auch kann der Zwischenraum des Bodensegmentes seitlich in den Zwischenraum, der von der oberen Schlammtasse und der unteren Schlammtasse und/oder von dem oberen Bodensumpfbehälter und dem unteren Bodensumpfbehälter ausgebildet ist, übergehen, so dass auch diese Zwischenräume eine aus zwei oder mehreren Räumen, sprich Zwischenräumen, bestehende, z.B. für Gas bzw. Flüssigkeit durchgängige, Überwachungskammer bilden können und auch der Zwischenraum, der von oberer Schlammtasse und unterer Schlammtasse und/oder von oberem Bodensumpfbehälter und unterem Bodensumpfbehälter ausgebildet ist, mittels des an die Überwachungskammer des Bodensegmentes angeschlossenen Leckanzeigers oder einer Vakuum-Überwachungseinrichtung, überwachbar ist. Das Auftreten von Undichtigkeit oder einer Leckage des z.B. von den Schlammtassen gebildeten Zwischenraums ist aufgrund der vorteilhaften Durchgängigkeit oder -lässigkeit der miteinander gas- oder flüssigkeitsmäßig verbundenen Räume von Bodensegment und von Schlammtassen zu einem Zwischenraum sofort auf einfache Weise über einen z.B. im Bereich des Zwischenraums des Bodensegments angebrachten Leckanzeiger erkennbar.

Ebenso kann der Zwischenraum des Bodensegmentes seitlich in den Zwischenraum des Randsegmentes in einer Ausführungsform des erfindungsgemäßen Tankbauwerks mit nur einer Überwachungskammer als Zwischenraum übergehen, so dass diese Zwischenräume ebenso eine aus zwei Zwischenräumen bestehende Überwachungskammer bilden.

Unter gasmäßiger Durchgängigkeit wird auch im Sinne der Erfindung die Durchlässigkeit für Gas verstanden. Unter Heften, Verheften oder Anheften kann auch im Sinne der Erfindung das punktweise Verschweißen oder das Punktschweißen von Teilen miteinander verstanden werden; so können vorzugsweise die miteinander ge- oder verhefteten Teile, wie Blechbahnen, zwar lagesicher zueinander gehalten werden, jedoch sind insbesondere die Heftung und die geheftete Verschweißungstelle keine vakuumdichte Verbindung der Bauteile miteinander, sondern können die Durchgängigkeit der Gase und Flüssigkeiten zwischen den Schweißstellen oder an denselben zulassen.

Unter Neigung z.B. eines Blechs, wie eines Stehblechs, in Richtung zu dem Tankboden hin wird im Sinne der Erfindung auch die Neigung des Blechs in Richtung zu dem Tankboden oder zu dem Kreismittelpunkt des Tankbodens hin unter Bildung eines von dem Tankboden und der Fläche oder Ebene des Blechs, wie Steh- oder Liegeblechs, eingeschlossenen Winkels kleiner als 90° verstanden. So wird unter Neigung im Sinne der Erfindung auch verstanden ein Gefälle, welches sich im Längsschnitt des Tankbauwerks von außen, z.B. von dem äußeren Randbereich B, nach innen, z.B. bis zu einem inneren Randbereich BX des Tankbodens, erstreckt, wobei der Abstand des äußeren Randbereichs, z.B. des Blechs, zu dem Tankboden größer ist als der Abstand des inneren Randbereichs, z.B. des Blechs, zu dem Tankboden; die Neigung der Betonschicht kann dergestalt verlaufen, dass der Abstand der dem Tankboden abgewandten Innenseite der Betonschicht von dem Tankboden von außen nach innen z.B. fortlaufend oder unterbrochen abnimmt.

Unter äußerem Randbereich B kann auch im Sinne der Erfindung der dem Tankmantel zugewandte Bereich des Tankbehälters oder des Tankbodens verstanden werden.

Unter innerem Randbereich BX kann auch im Sinne der Erfindung der Bereich zwischen dem Randbereich B und der Mitte-Längsachse eines hohlzylindrischen Tankbehälters oder dem Kreismittelpunkt eines kreisrunden Tankbodens verstanden werden.

Die vakuumdichte Verschweißung von zwei Teilen miteinander kann mittels WIG-Schweißverfahren mit oder ohne Argonspülung und/oder mittels Verschweißen mittels Elektrode durchgeführt werden.

Unter Untergrund wird im Sinne der Erfindung auch verstanden jedwede Fläche zur Auflage des Tankbauwerks, zum Beispiel auch die eines Schiffes, Erdreichs, oder dergleichen.

Unter vakuumdichtem Abschluss wird im Sinne der Erfindung auch die vakuumdichte oder gas- oder flüssigkeitsdichte Abtrennung oder der vakuumdichte oder gas- oder flüssigkeitsdichte Verschluss verstanden.

Unter vakuumdichter Begrenzung wird im Sinne der Erfindung auch der vakuumdichte Abschluss, vakuumdichte Abdichtung oder vakuumdichte Verschluss nach außen und / oder nach innen verstanden.

Unter vakuumdichter Verbindung kann im Sinne der Erfindung auch die Kopplung mit gleichzeitigem vakuumdichten Abschluss oder vakuumdichten Verschluss oder fehlender Durchgängigkeit für Gase und Flüssigkeiten der Kopplungsstelle, z.B. der Verschweißungsstellen oder -nähte, verstanden werden, wobei z.B. in der Ausgestaltung der vakuumdichten Verbindung des Boden- mit dem Randsegment der von dem Randsegment oder einem Teil desselben begrenzte Zwischenraum und der von dem Bodensegment oder einem Teil desselben begrenzte Zwischenraum miteinander gas- und flüssigkeitsmäßig verbunden sein können, gleichwohl die Zwischenräume vakuumdicht sind, so dass eine Überwachungskammer aus den beiden Zwischenräumen ausgebildet ist. Unter vakuumdichter Verbindung kann im Sinne der Erfindung auch die Kopplung mit gleichzeitigem vakuumdichten Abschluss oder vakuumdichten Verschluss oder fehlender Durchgängigkeit für Gase und Flüssigkeiten der Kopplungsstelle verstanden werden, wobei der von dem Randsegment oder einem Teil desselben begrenzte Zwischenraum oder Zwischenräume nicht mit dem von dem Bodensegment oder einem Teil desselben begrenzten Zwischenraum oder Zwischenräumen miteinander gas- und flüssigkeitsmäßig verbunden sein können, sondern jeder Zwischenraum für sich vakuumdicht ist, so dass zwei Überwachungskammern ausgebildet sind.

Unter vakuumdichter Verschweißung als eine Ausgestaltung der vakuumdichten Verbindung von zwei Bauteilen wird im Sinne der Erfindung auch verstanden, dass der Verschweißungsbereich, wie die Verschweißungsnaht, nach außen und /oder nach innen hin dicht, wie vakuum- oder gasdicht, begrenzt, wie abgeschlossen oder verschlossen, oder abgedichtet, ist.

Unter flüssigkeitsmäßiger oder gasmäßiger Verbindung wird im Sinne der Erfindung auch die Durchgängigkeit für Flüssigkeiten oder Gase verstanden. Unter vakuumdichten Verschließen wird im Sinne der Erfindung auch der vakuumdichte Abschluss, die Abdichtung gegenüber Gasen und Flüssigkeiten oder die Undurchlässigkeit für Gase und Flüssigkeiten verstanden.

Der Erfindung liegt auch das Verlegen der Bodenbleche in Form von Bodenblechbahnen zugrunde, wobei im Bereich der sogenannten Bahnentrennung, auch Bahnentrennungsbereich genannt, oder Kopplung von benachbarten Bodenblechbahnen eines Bodensegmentes
die Seitenbereiche der beiden benachbarten oberen Bodenblechbahnen eines Bodensegmentes einander überlappend angeordnet sind, wobei
ein Seitenbereich einer ersten oberen auf den oberseitigen Unterlegflacheisen angeordneten Bodenblechbahn mit den oberseitigen Unterlegflacheisen geheftet ist,
der auf diesem Seitenbereich angeordnete Seitenbereich der zweiten oberen Bodenblechbahn mit diesem vakuumdicht verschweißt ist,
so dass die überlappenden Seitenbereiche der Bodenblechbahnen auf oberseitigen Unterlegflacheisen, welche z.B.
auf den bodenseitigen mit der auf dem Tankboden angeordneten GFK-Schicht und/oder dem Tankboden vernieteten Unterlegflacheisen ruhen und mit diesen geheftet sind, angeordnet sind,
die oberseitigen Unterlegflacheisen mit den unterseitigen Unterlegflacheisen geheftet sind,
die Seitenbereiche der beiden benachbarten unteren Bodenblechbahnen dieses Bodensegmentes auf den bodenseitigen Unterflacheisen angeordnet sind und mit diesen vakuumdicht verschweißt sind.

Der Erfindung liegt auch das Verlegen der Bodenbleche in Form von Bodenblechbahnen zugrunde, wobei
im Bereich der sogenannten Kammertrennung von zwei, z.B. in Draufsicht halbkreisförmigen, Bodensegmenten, auch Kammertrennungsbereich genannt, wie der Bereitstellung eines vakuumdichten Abschlusses der Überwachungskammer des einen Bodensegmentes von der Überwachungskammer des anderen Bodensegmentes, auf den mit der auf dem Tankboden angeordneten GFK-Schicht und/oder unmittelbar auf dem Tankboden vernieteten bodenseitigen Unterlegflacheisen mittig die oberseitigen Unterlegflacheisen geringerer Abmessungen angeordnet sind,
die oberseitigen Unterlegflacheisen mit den bodenseitigen Unterlegflacheisen mit ihrer einen Seite geheftet und mit ihrer anderen der einen Seite gegenüberliegenden Seite vakuumdicht verschweißt sind,
auf einem Teil der bodenseitigen Unterlegflacheisen voneinander beabstandete gegenüber liegende untere Bodenblechbahnen von zwei Bodensegmenten mit ihren inneren Randbereichen angeordnet sind,
die auf den bodenseitigen Unterlegflacheisen angeordneten inneren Randbereiche der unteren Bodenblechbahnen mit den bodenseitigen Unterlegflacheisen vakuumdicht verschweißt sind,
auf den oberseitigen Unterlegflacheisen die gegenüber liegenden, voneinander beabstandeten oberen Bodenblechbahnen von zwei Bodensegmenten mit ihren inneren Randbereichen angeordnet sind,
die auf den oberseitigen Unterlegflacheisen angeordneten inneren Randbereiche der oberen Bodenblechbahnen mit den oberseitigen Unterlegflacheisen vakuumdicht verschweißt sind.

Der Erfindung liegt auch zugrunde, dass die Bleche des Randsegmentes ein oder mehrere Liegebleche umfassen, wie das untere Liegeblech, das untere Stehblech, das obere Stehblech und/oder das obere Liegeblech; die Bleche des Bodensegmentes können ein oder mehrere Bodenbleche umfassen, wie das obere Bodenblech und/oder das untere Bodenblech, so dass das Bodensegment eine Wand oder eine Doppelwand aufweisen kann. Das untere Liegeblech, das untere Stehblech, das obere Stehblech, das obere Liegeblech, das obere Bodenblech und das untere Bodenblech können aus einer oder mehreren Bahnen, auch als Segmente oder Blechbahnen bezeichnet, zusammengesetzt sein oder werden, wobei diese als untere Liegeblechbahnen, untere Stehblechbahnen, obere Stehblechbahnen und obere Liegeblechbahnen, obere Bodenblechbahnen und untere Bodenblechbahnen bezeichnet werden können. Die Blechbahnen können jeweils als plattenförmige, z.B. Stoß auf Stoß, einander angelegt oder teilweise mit ihren Rand- oder Seitenbereichen aufeinander gelegt werden. Die Segmente oder Blechbahnen können aus einem hochwertigen Material, wie Edelstahl, hergestellt sein und/oder in Form von Rollen von der Fabrikationsstätte angeliefert sowie vor Ort plattenförmig ausgelegt werden.

Gleichartig ausgebildete Bleche können unter- oder rückseitig an dieselben angeheftete plattenförmige Flacheisen aufweisen, die um ein vorbestimmtes Maß von dem Blech bzw. Blechen über die gesamte Länge der dem Flacheisen zugewandten Seite der Bleche vorstehen; auf das vorstehende Teil des Blechs kann ein benachbartes Blech aufgelegt werden zur Bereitstellung einer bündigen und ebenen Oberseite. Unter einem Flacheisen oder einem Unterlegflacheisen wird im Sinne der Erfindung auch verstanden ein flaches Blech, eine Platte oder ein plattenförmiges flaches Stück, vorzugsweise mit übereinstimmender Wanddicke, mit einem metallenen und/oder kunststoffartigen Werkstoff oder Material. Unter Bleche, wie Stehbleche, Liegebleche, Bodenbleche, Auflagebleche, und deren Bahnen, wie Stehblechbahnen, Liegeblechbahnen, Bodenblechbahnen, Auflageblechbahnen, werden im Sinne der Erfindung auch verstanden solche, die nicht nur metallene Werkstoffe enthalten oder aus diesen bestehen, sondern auch solche, die kunststoffartige enthalten oder aus diesen bestehen können.

Die Flacheisen können mit der Rückseite der Bleche verbunden, wie verschweißt, z.B. vakuumdicht verschweißt oder geheftet sein. Die mit den Flacheisen versehenen Bleche können sich bei Zusammensetzen der Bleche in Reihe oder in Ringform gegenseitig mit den Flacheisen untergreifen, auch gegenseitiger Untergriff oder mit Untergriff genannt, so dass z.B. jeweils ein Blech mit seinem Flacheisen das ihm benachbarte untergreift. Die mit den Flacheisen versehenen Bleche können als sogenannte Schweißbadsicherung dienen, so dass z.B. bei Verlegen der Bleche auf dem Tankboden oder bei Ansetzen derselben gegen den Tankmantel der vorstehende Teil des Flacheisens des einen Blechs als Auflage für das anzulegende benachbarte Blech dienen kann. Zudem stabilisiert dieser Untergriff der Flacheisen die Zusammenstellung der Bleche bei Verlegen in Reihe und die Stoßstelle der einander benachbarten Bleche. Durch den flächigen Untergriff kann sich vorzugsweise rückwärtige Beflutung mit z.B. Argon, z.B. beim WIG-Schweißverfahren, kostensenkend erübrigen.

Ein zusätzlicher Gegenstand der Erfindung bezieht sich auf ein Verfahren zur Abdichtung eines herkömmlichen Tankbauwerkes, z.B. eines Flachbodentankbauwerks, insbesondere eines hohlzylindrischen Tankbauwerks, für Flüssigkeiten, insbesondere organische Flüssigkeiten, mit einer Kammerüberwachungsanordnung, z.B. eine Ein-, oder Mehr-, wie Zwei- oder Dreikammerüberwachungsanordnung, als Kammerüberwachungssystem für Flüssigkeiten, insbesondere organische Flüssigkeiten, mit metallischen Werkstoffen, welches einen, vorzugsweise hohlzylindrischen, Tankbehälter mit einem, vorzugsweise gegen einen festen Untergrund abgestützten, Tankboden und einem von dem Tankboden vorstehenden, vorzugsweise hohlzylindrischen, Tankmantel aufweist, mit den Verfahrensschritten, die das Ansetzen oder Anordnen von Rand- und Bodensegmenten im Tankbehälter mit dem vakuumdichten Verschließen oder Begrenzen des Tankbodens und des unteren Bereichs des Tankmantels unter Bereitstellung mindestens eines, vorzugsweise aber von drei vakuumdichten über die gesamte Innenseite oder zumindest einen Teil der Innenseite des Tankbodens sich erstreckbaren Zwischenräumen umfassen. Ein zusätzlicher Gegenstand der Erfindung bezieht sich auf das Verfahren zur Abdichtung eines herkömmlichen Tankbauwerkes, z.B. eines Flachbodentankbauwerks, welches eine auf dem Tankboden aufgetragene Schicht mit einem glasfaserverstärkten kunststoffartigen Material aufweist, mit den o.g. Verfahrensschritten.

Der Tankbehälter und der Tankboden können mit metallischen Werkstoffen, wie Eisen, Stahl, usw. hergestellt sein; der Tankboden kann eine Innenseite mit einem metallischen Werkstoff oder mit einem, z.B. glasfaserverstärkten, kunststoffartigen Material aufweisen; z.B. kann innenseitig zusätzlich eine auf dem metallenen Tankboden aufgetragene Schicht mit einem, z.B. glasfaserverstärkten, kunststoffartigen Material angeordnet sein.

Für Tankbehälter geringerer Größe kann sich das erfindungsgemäße Tankbauwerk mit einer Überwachungskammer eignen, das ein in Draufsicht kreisrundes Bodensegment und ein in Draufsicht ringförmiges Randsegment umfasst, die gemeinsam eine Überwachungskammer aufweist, wobei das Randsegment als unterer Teil untere Liege- und Stehbleche sowie als oberer Teil obere Liege- und Stehbleche und das Bodensegment obere Bodenbleche und untere Bodenbleche umfassen kann, die unteren und oberen Liegebleche, die unteren und oberen Stehbleche sowie die oberen Bodenbleche und unteren Bodenbleche nur eine im Längsschnitt des erfindungsgemäßen Tankbauwerks U-förmige Überwachungskammer vakuumdicht begrenzen oder verschließen, das Bodensegment und das Randsegment auf dem Tankboden ruhen können, das obere Bodenblech weitgehend von dem unteren Bodenblech durch eine zwischen beiden angeordnete Schicht mit Stahlgittergewebe beabstandet ist, das Randsegment gegen den unteren dem Tankboden zugewandten Bereich der Innenseite des Tankmantels anliegt und mit diesem vakuumdicht verschweißt ist und das Randsegment in das Bodensegment übergeht.

Auch für Tankbehälter geringerer Größe, deren Tankböden zusätzlich oberseitig eine Schicht mit glasfaserverstärktem Material und eine auf dieser Schicht dem Tankmantel zugewandte im äußeren Randbereich des Tankbodens umlaufende Betonschicht aufweisen, kann sich das erfindungsgemäße Tankbauwerk mit einer Überwachungskammer eignen, das ein in Draufsicht kreisrundes Bodensegment und ein in Draufsicht ringförmiges Randsegment umfasst, die gemeinsam eine im Längsschnitt des Tankbauwerks U-förmige Überwachungskammer aufweisen, wobei das mit dem Randsegment vakuumdicht verschweißte Bodensegment auf dem Tankboden und das Randsegment auf der Betonschicht ruhen können, das Randsegment gegen den unteren dem Tankboden zugewandten Bereich der Innenseite des Tankmantels anliegt und mit diesem vakuumdicht verschweißt ist und das Randsegment in das Bodensegment übergeht.

Für Tankbehälter größerer Ausmaße kann sich das erfindungsgemäße Tankbauwerk mit z.B. drei Überwachungskammern besonders eignen, das zwei in Draufsicht halbkreisförmige Bodensegmente und ein in Draufsicht ringförmiges Randsegment umfasst; z.B. kann das o.g. Randsegment die Überwachungskammer mit dem unteren Liegeblech, dem oberen Liegeblech sowie dem unteren Stehblech und dem oberen Stehblech vakuumdicht umschließen oder begrenzen, jedes Bodensegment kann eine Überwachungskammer mit seinem oberen Bodenblech oberseitig und seinem unteren Bodenblech unterseitig und seitlich die inneren und/oder äußeren Randbereichen seiner Bodenbleche mit Einrichtungen, z.B. oberseitige und unterseitige Unterlegflacheisen, Kragenblechen, mit Teilen der Randsegmente, usw. vakuumdicht begrenzen oder verschließen, das obere Bodenblech ist weitgehend von dem unteren Bodenblech durch eine zwischen beiden angeordnete Schicht mit Stahlgittergewebe beabstandet, die Bodensegmente und das Randsegment können auf dem Tankboden angeordnet sein, das Randsegment liegt gegen den unteren dem Tankboden zugewandten Bereich der Innenseite des Tankmantels an und ist mit diesem vakuumdicht verbunden, z.B. verschweißt, die Bodensegmente sind im Bereich der Kammertrennung oder Kammertrennungsbereich miteinander vakuumdicht verbunden, z.B. verschweißt, unter Bildung von zwei hermetisch voneinander getrennten Überwachungskammern und das Randsegment ist mit den Bodensegmenten ebenso zur hermetischen Trennung der von dem Randsegment ausgebildeten Überwachungskammer von den von den Bodensegmenten gebildeten Überwachungskammern vakuumdicht verschweißt.

Auch für Tankbehälter größerer Ausmaße, deren Tankböden zusätzlich oberseitig eine Schicht mit glasfaserverstärktem Material und eine auf dieser Schicht dem Tankmantel zugewandte im äußeren Randbereich des Tankbodens umlaufende Betonschicht aufweisen, kann sich das erfindungsgemäße Tankbauwerk mit drei Überwachungskammern eignen, das zwei in Draufsicht halbkreisförmige Bodensegmente und ein in Draufsicht ringförmiges Randsegment umfassen kann; es ist vorteilhaft, dass das o.g. Randsegment eine Überwachungskammer mit dem unteren Liegeblech, dem oberen Liegeblech sowie dem unteren Stehblech und dem oberen Stehblech vakuumdicht umschließen kann, jedes Bodensegment eine Überwachungskammer mit seinem oberen Bodenblech oberseitig und unteren Bodenblech unterseitig und seitlich die inneren und äußeren Randbereichen seiner Bodenbleche mit Einrichtungen, z.B. Unterlegflacheisen, Kragenblechen, mit Teilen der Randsegmente usw., vakuumdicht begrenzen oder verschließen kann, das obere Bodenblech weitgehend von dem unteren Bodenblech jedes Bodensegments durch eine zwischen beiden angeordnete Schicht mit Stahlgittergewebe beabstandet ist, die Bodensegmente auf dem Tankboden und das Randsegment auf der Betonschicht ruhen können, das Randsegment gegen den unteren dem Tankboden zugewandten Bereich der Innenseite des Tankmantels anliegt und mit diesem vakuumdicht verschweißt ist, Bodensegmente im Bereich der Kammertrennung oder Kammertrennungsbereich miteinander vakuumdicht verschweißt sind unter Bildung von zwei hermetisch voneinander getrennten Überwachungskammern und das Randsegment mit den Bodensegmenten zur hermetischen Trennung der von dem Randsegment ausgebildeten Überwachungskammer von den von den Bodensegmenten gebildeten Überwachungskammern vakuumdicht verschweißt sind.

In entsprechender Weise kann auch ein erfindungsgemäßes Tankbauwerk mit dem ringförmigen Randsegment und vier viertelkreisförmigen Bodensegmenten mit fünf Überwachungskammern Anwendung finden. In entsprechender Weise kann ebenso ein erfindungsgemäßes Tankbauwerk mit einem in Draufsicht in mehrere Abschnitte getrennten ringförmigen Randsegment mit mehreren Überwachungskammern und vier viertelkreisförmigen Bodensegmenten mit mehr als fünf Überwachungskammern Anwendung finden.

In einer Ausgestaltung des erfindungsgemäßen Verfahrens und des erfindungsgemäßen Tankbauwerks können mehrere bodenseitige plattenförmige Flacheisen kranz- oder ringförmig um eine Mitte-Längsachse M des Tankbehälters verlaufend auf die auf dem Tankboden angeordnete GFK-Schicht, die Flacheisen oder unmittelbar auf dem Tankboden angeordnet werden und mit der Schicht und/oder dem Tankboden vernietet, ggf. zusätzlich, falls erforderlich, verschweißt werden. In einer Ausführungsform des erfindungsgemäßen Tankbauwerks mit der GFK-Schicht kann eine in der Draufsicht um die Mitte-Längsachse M verlaufende ringförmige Betonschicht zwischen einem inneren Randbereich BX und einem äußeren Randbereich B des Tankbehälters unter Einziehen der Oberseite der Betonschicht in dem äußeren Randbereich derselben zur Bildung einer Kehle so aufgetragen werden, dass deren zu dem Tankboden abgewandte Oberseite in Richtung zu dem Tankboden oder Kreismittelpunkt desselben hin geneigt ist. Nach dem Aushärten der Betonschicht kann eine Zweischichtenanordnung mit einer dem Tankboden zugewandten Feuerschutzdecke und einer dem Tankboden abgewandten Schicht mit einer Aluminium-Folie gegen die Kehle der Betonschicht und den der Kehle benachbarten Bereich der Innenseite des Tankmantels angelegt werden, so dass diese im Längsschnitt L-förmig ausgestaltet ist.

Gleichartig ausgebildete untere Liegeblechbahnen mit unterseitig angehefteten plattenförmigen Flacheisen als Schweißbadsicherung mit Untergriff der Flacheisen können für das untere ringförmige Liegeblech auf die Betonschicht und die bodenseitigen Flacheisen ringförmig um den Kreismittelpunkt des Tankbodens aufgelegt oder aneinander angesetzt werden, so dass benachbarte untere Liegeblechbahnen einander an gemeinsamen Stoßstellen Stoß auf Stoß einander angrenzen. Anschließend können die benachbarten unteren Liegeblechbahnen an ihren Stoßstellen und/oder Flacheisen miteinander und die inneren dem Kreismittelpunkt zugewandten Randbereiche der unteren Liegeblechbahnen an die bodenseitigen angehefteten Flacheisen geheftet werden.

So kann in einer Ausführungsform des erfindungsgemäßen Tankbauwerks und Verfahrens eine gleichartig ausgebildete untere Stehblechbahn mit unterseitig angeheftetem Flacheisen als Schweißbadsicherung mit Untergriff der Flacheisen für das untere in Draufsicht ringförmige Stehblech gegen eine benachbarte untere Stehblechbahn Stoß auf Stoß ringförmig um den Kreismittelpunkt des Tankbodens aneinander angesetzt, z.B. gegen oder auf das untere Liegeblech bzw. untere Liegeblechbahnen und gegen den Tankmantel an- oder aufgesetzt, und an der Stoßstelle und/oder Flacheisen geheftet werden. Nach Zusammenstellen der ringförmig verlaufenden unteren Stehblechbahnen mit gegenseitigen Untergriff erfolgt das Heften der äußeren Randbereiche der unteren Stehblechbahnen an den Tankmantel und der inneren Randbereiche der unteren Stehblechbahnen an die unteren Liegeblechbahnen. Das vakuumdichte Verschweißen, insbesondere das WIG-Schweißverfahren, vorzugsweise ohne Argonspülung, der benachbarten unteren Liegeblechbahnen, an deren gemeinsamen Stoßstellen, auch -nähte genannt, miteinander und der benachbarten unteren Stehblechbahnen an deren gemeinsamen Stoßstellen, auch -nähte genannt, miteinander sowie das vakuumdichte Verschweißen, insbesondere Verschweißen mittels Elektrode, der inneren dem Kreismittelpunkt des Tankbodens zugewandten Randbereiche der unteren Stehblechbahnen mit den unteren Liegeblechbahnen und der äußeren dem Kreismittelpunkt des Tankbodens abgewandten Randbereiche derselben mit dem Tankmantel schließen sich an. Die Dichtigkeit der Schweißnähte kann mit Hilfe des erfindungsgemäßen Verfahrens zur zuverlässigen Überprüfung von Undichtigkeiten von Schweißnähten durchgeführt werden.

In einer Ausführungsform des erfindungsgemäßen Tankbauwerks und Verfahrens können nach dem Ansetzen von Abstandshaltern, ringförmig um den Kreismittelpunkt des Tankbodens, gegen die unteren Liegeblechbahnen und dem Heften derselben an die unteren Liegeblechbahnen die gleichartig ausgebildeten oberen Liegeblechbahnen mit unterseitig angehefteten Flacheisen als Schweißbadsicherung mit gegenseitigem Untergriff der Flacheisen für das obere ringförmige Liegeblech unter Bildung von Stoßstellen ringförmig um den Kreismittelpunkt des Tankbodens aneinander gegen das untere Liegeblech und Abstandshalter angesetzt und die oberen Liegeblechbahnen an Stoßstellen geheftet werden. Nach dem Zusammenstellen der ringförmig verlaufenden oberen Liegeblechbahnen mit gegenseitigen Untergriff können das ringförmige Ansetzen von gleichartig ausgebildeten oberen Stehblechbahnen mit unterseitig angehefteten Flacheisen als Schweißbadsicherung mit gegenseitigem Untergriff der Flacheisen aneinander zur Bereitstellung des oberen ringförmigen Stehblechs unter Bildung von Stoßstellen gegen den Tankmantel und das obere Liegeblech, das Heften der oberen Liegeblechbahnen an Stoßstellen miteinander und Flacheisen, der inneren Randbereiche der oberen Liegeblechbahnen an die unteren Liegeblechbahnen, der äußeren Randbereiche der oberen Stehblechbahnen an den Tankmantel und/oder der inneren Randbereiche der oberen Stehblechbahnen an die oberen Liegeblechbahnen zwecks Lagesicherung erfolgen. Das vakuumdichte Verschweißen, insbesondere das WIG-Schweißverfahren, vorzugsweise ohne Argonspülung, benachbarter oberer Liegeblechbahnen an deren Stoßstellen und -nähte miteinander, benachbarter oberer Stehblechbahnen an deren Stoßstellen und -nähte miteinander und sowie das vakuumdichte Verschweißen, insbesondere Verschweißen mittels Elektrode, der inneren Randbereiche der oberen Stehblechbahnen mit den oberen Liegeblechbahnen und der äußeren Randbereiche derselben mit dem Tankmantel erfolgen auch. Die Dichtigkeit der Schweißnähte wird mit Hilfe des erfindungsgemäßen Verfahrens zur zuverlässigen Überprüfung von Undichtigkeiten von Schweißnähten durchgeführt.

Unter Dichtigkeit kann im Sinne der Erfindung auch Dichtheit oder Dichtsein verstanden werden.

In einer weiteren Ausführungsform des erfindungsgemäßen Verfahrens werden die unteren Liegeblechbahnen mit unterseitig angehefteten Flacheisen als Schweißbadsicherung
mit gegenseitigem Untergriff der Flacheisen für das untere ringförmige Liegeblech auf den Tankboden gelegt und mit diesem geheftet, welcher keine GFK-Schicht aufweist.

In einer Ausführungsform des erfindungsgemäßen Tankbauwerks und Verfahrens erfolgen zur Herstellung von zwei Bodensegmenten das Auflegen von parallel zu einer Mitte-Querachse Q im Kammertrennungsbereich der benachbarten Bodensegmente sich in Reihe erstreckender gleichartig ausgebildeter plattenförmiger bodenseitiger Unterlegflacheisen mit unterseitig angehefteten Flacheisen als Schweißbadsicherung mit gegenseitigem Untergriff der Flacheisen auf den Tankboden oder auf eine auf der GFK-Schicht angeordneten Dreischichtenanordnung und das Vernieten der bodenseitigen Unterlegflacheisen mit dem Tankboden oder mit der GFK-Schicht und dem Tankboden und mit angrenzenden Teilen des Randsegments, insbesondere mit dem unteren Liegeblech, sowie das Auflegen von mehreren quer zu der Mitte-Querachse Q parallel zueinander sich erstreckenden Reihen von gleichartig ausgebildeter bodenseitiger Unterlegflacheisen, die keine an deren Rückseiten angeschweißte Flacheisen und keine Schweißbadsicherung aufweisen, auf den Tankboden oder auf die auf der GFK-Schicht angeordneten Dreischichtenanordnung und das Vernieten der bodenseitigen Unterlegflacheisen mit dem Tankboden oder mit der auf dem Tankboden angeordneten GFK-Schicht und dem Tankboden. Danach wird das Heften der entlang der Mitte-Querachse Q verlaufenden bodenseitigen Unterlegflacheisen an Stoßstellen und/oder an die unterseitig angehefteten Flacheisen der bodenseitigen Unterlegflacheisen, der quer zu der Mitte-Querachse verlaufenden bodenseitigen Unterlegflacheisen an deren Stoßstellen sowie das, vorzugsweise vakuumdichte, Verschweißen, vorzugsweise ohne Argonspülung, von benachbarten Unterlegflacheisen an Stoßstellen und/oder -nähten miteinander durchgeführt.

Danach erfolgen das Auflegen von gleichartig ausgebildeten plattenförmigen oberseitigen Unterlegflacheisen, die eine geringere Flächengröße als die bodenseitigen aufweisen, mit unterseitig angehefteten Flacheisen als Schweißbadsicherung mit gegenseitigem Untergriff der Flacheisen im Kammertrennungsbereich mittig auf die längs der Mitte-Querachse Q verlaufenden bodenseitigen Unterlegflacheisen und das Auflegen von gleichartig ausgebildeten oberseitigen Unterlegflacheisen, welche eine geringere Flächengröße als die bodenseitigen und keine unterseitig angehefteten Flacheisen als Schweißbadsicherung aufweisen, im Bahnentrennungsbereich mittig auf die quer zu der Mitte-Querachse verlaufenden bodenseitigen Unterlegflacheisen und das Auflegen von unteren Bodenblechbahnen auf die bodenseitigen Unterlegflacheisen -beabstandet von den oberseitigen Unterlegflacheisen- sowie das Heften der unteren Bodenblechbahnen an die bodenseitigen Unterlegflacheisen.

Für die Bereitstellung der im Kammertrennungsbereich von zwei benachbarten Bodensegmenten, auch Kammertrennung von benachbarten Bodensegmenten genannt, im Bereich der Mitte-Querachse Q verlaufenden Verbindung von zwei benachbarten Bodensegmenten in Form von zwei aufeinander angeordneten Unterlegflacheisenreihen können das vakuumdichte Verschweißen, insbesondere WIG-Verschweißen, vorzugsweise ohne Argonspülung, der inneren Randbereiche der quer zu der Mitte-Querachse verlaufenden, auf einem Teil der bodenseitigen Unterlegflacheisen angeordneten unteren Bodenblechbahnen mit den längs zu der Mitte-Querachse verlaufenden bodenseitigen Unterlegflacheisen und der einen Seite der oberseitigen Unterlegflacheisen mit den bodenseitigen Unterlegflacheisen und das Heften der der einen Seite gegenüber liegenden anderen Seite der oberseitigen Unterlegflacheisen an die längs zu der Mitte-Querachse verlaufenden bodenseitigen Unterlegflacheisen durchgeführt werden.

Danach kann das Auflegen je einer Schicht mit Stahlgittergewebe auf die unteren Bodenblechbahnen und das Auflegen von quer zu der Mitte-Querachse verlaufenden oberen Bodenblechbahnen auf die auf den unteren Bodenblechbahnen angeordneten Schicht mit Stahlgittergewebe und die längs zu der Mitte-Querachse verlaufenden oberseitigen Unterlegflacheisen mit voneinander beabstandeten inneren Randbereichen der oberen Bodenblechbahnen sowie das Heften der voneinander beabstandeten inneren Randbereichen der oberen Bodenblechbahnen an die längs zu der Mitte-Querachse verlaufenden oberseitigen Unterlegflacheisen sich anschließen. Anschließend wird das vakuumdichte Verschweißen, insbesondere WIG-Verschweißen, vorzugsweise ohne Argonspülung, der voneinander beabstandeten inneren Randbereichen der oberen Bodenblechbahnen mit den längs zu der Mitte-Querachse verlaufenden oberseitigen Unterlegflacheisen durchgeführt werden.

Für die Bereitstellung der im Bahnentrennungsbereich, auch Bahnentrennung eines Bodensegments genannt, im Bereich quer zu der Mitte-Querachse Q verlaufenden Verbindung von benachbarten Bodenblechen eines Bodensegmentes können das vakuumdichte Verschweißen, vorzugsweise ohne Argonspülung, der Seitenbereiche der quer zu der Mitte-Querachse Q verlaufenden unteren auf einem Teil der bodenseitigen Unterlegflacheisen aufliegenden Bodenblechbahnen mit den quer zu der Mitte-Querachse Q verlaufenden bodenseitigen Unterlegflacheisen und das Verheften der oberseitigen auf den bodenseitigen Unterlegflacheisen aufliegenden Unterlegflacheisen an die bodenseitigen Unterlegflacheisen sich anschließen. Danach kann
das Auflegen je einer Schicht mit Stahlgittergewebe auf die beiden unteren Bodenblechbahnen,
das Auflegen der einen quer zu der Mitte-Querachse Q verlaufenden oberen Bodenblechbahn auf die quer zu der Mitte-Querachse Q verlaufenden oberseitigen Unterlegflacheisen und auf die eine Schicht mit Stahlgittergewebe sowie das Heften des Seitenbereichs der einen oberen Bodenblechbahn an die oberseitigen Unterlegflacheisen erfolgen.

Nunmehr werden das Auflegen einer weiteren oberen Bodenblechbahn auf die oberseitigen Unterlegflacheisen und auf die andere Schicht mit Stahlgittergewebe sowie auf die eine obere Bodenblechbahn mit einer Überlappung des dem Tankboden zugewandten Seitenbereichs der einen oberen Bodenblechbahn durch einen Seitenbereich der weiteren oberen Bodenblechbahn im Überlappungsbereich und das vakuumdichte Verschweißen, insbesondere WIG-Verschweißen, vorzugsweise ohne Argonspülung, des von dem Tankboden abgewandten Seitenbereichs der weiteren oberen Bodenblechbahn mit der einen oberen Bodenblechbahn, ggf. und der quer zu der Mitte-Querachse verlaufenden oberseitigen Unterlegflacheisen, durchgeführt.

Unter Ansetzen gegen oder Ansetzen an Bauteile wird im Sinne der Erfindung auch verstanden das Anlegen, das Auflegen, Aufliegen, das Aufbringen oder das Anordnen, zum Beispiel Fläche auf Fläche, wie das flächige Anordnen des unteren Liegeblechs auf oder gegen die Innenseite des Tankbodens, oder zum Beispiel Kante des oberen Stehblechs auf Fläche, wie im Bereich der Ansatzstelle des oberen Stehblechs mit dem Tankmantel bzw. das Anordnen des oberen Stehblechs gegen den Tankmantel.

Das erfindungsgemäße Tankbauwerk mit einer Kammerüberwachungsanordnung als Kammerüberwachungssystem für Flüssigkeiten, insbesondere für organische Flüssigkeiten, z.B. Dieselkraftstoffe, mit metallischen Werkstoffen, umfasst einen, vorzugsweise hohlzylindrischen, Tankbehälter mit einem gegen einen festen Untergrund abgestützten Tankboden und einem von dem Tankboden vorstehenden, vorzugsweise zylindrischen, Tankmantel. Das erfindungsgemäße Tankbauwerk kann nicht nur metallene Werkstoffe, sondern auch kunststoffartige oder Mischungen derselben enthalten; so kann auch die Kammerüberwachungsanordnung metallene Werkstoffe, sondern auch kunststoffartige oder Mischungen derselben enthalten. Das Kammerüberwachungssystem umfasst mindestens eine Zwischenkammer zur Überwachung der Dichtigkeit des Tankbauwerks gegenüber Flüssigkeiten, wobei mindestens eine Zwischenkammer von einem Randsegment und/oder einem Bodensegment gebildet ist. Das Randsegment und das Bodensegment können gemeinsam mindestens eine Zwischenkammer vakuumdicht begrenzen. Das Bodensegment schließt zumindest einen Teil der Innenseite des Tankbodens und das Randsegment zumindest einen Teil der Innenseite des Tankbodens und den unteren Bereich der Innenseite des Tankmantels dicht, wie vakuumdicht, ab. Das in dem äußeren Randbereich des Tankbodens, vorzugsweise in Draufsicht um den Kreismittelpunkt des Tankbodens umlaufende, ringförmige Randsegment liegt gegen den unteren Bereich der dem Tankboden zugewandten Innenseite des Tankmantels an und ist mit diesem vakuumdicht verbunden, insbesondere verschweißt. Das Randsegment des erfindungsgemäßen Tankbauwerks umfasst das untere Liegeblech, das obere Liegeblech, das untere Stehblech und das obere Stehblech, welche den im Längsschnitt L-förmigen Zwischenraum, hier Überwachungskammer, vakuumdicht verschließen oder begrenzen.

In einer Ausgestaltung des erfindungsgemäßen Tankbauwerk begrenzt das Randsegment mindestens einen Teil der Innenseite des Tankbodens und den unteren Bereich der Innenseite des Tankmantels vakuumdicht, das Bodensegment begrenzt mindestens einen Teil der Innenseite des Tankbodens vakuumdicht, der Zwischenraum des Bodensegments ist unterseitig von einem unteren Bodenblech und oberseitig von einem oberen Bodenblech begrenzt, das in dem äußeren Randbereich des Tankbodens in Draufsicht um den Kreismittelpunkt KM des Tankbodens umlaufende Randsegment ist gegen den unteren Bereich der dem Tankboden zugewandten Innenseite des Tankmantels angesetzt und mit diesem vakuumdicht verschweißt und der Zwischenraum des Randsegments ist im Längsschnitt L-förmig ausgestaltet sowie der Zwischenraum des Bodensegments von dem Zwischenraum des Randsegments vakuumdicht verschlossen. Zudem ist es möglich, dass der Zwischenraum des Randsegments von einem unteren Stehblech, dem oberen Stehblech, dem unteren Liegeblech und dem oberen Liegeblech ausgebildet ist und /oder der Zwischenraum des Bodensegments seitlich mit einem oder mehreren von übereinander angeordneten Schlammtassen und /oder übereinander angeordneten Bodensumpfbehältern ausgebildeten Zwischenräumen flüssigkeits- und/oder gasmäßig zum Austausch von Flüssigkeiten und Gasen zwischen den Zwischenräumen verbunden ist. In einer Ausgestaltung des erfindungsgemäßen Tankbauwerk umfasst der Tankboden innenseitig eine Schicht mit einem glasfaserverstärktem kunststoffartigen Material, so dass die Innenseite des Tankbodens sowohl von der in Draufsicht auf den Tankboden um den Kreismittelpunkt KM des Tankbodens umlaufenden, auf der Schicht angeordneten, im Längsschnitt in Richtung zu dem Kreismittelpunkt KM hin geneigten Betonschicht als auch von dem von der Betonschicht (3) seitlich begrenzten Teil der Schicht, die nicht oberseitig von der Betonschicht begrenzt wird, ausgebildet ist. Zudem können das obere Bodenblech mit dem oberen Liegeblech sowie das untere von dem oberen Bodenblech auf Abstand angeordnete Bodenblech mit dem unteren Liegeblech oder mit einem bodenseitigen, unter dem unteren Liegeblech angeordneten Liegeblech oder mit einem mit dem unteren Liegeblech verbundenen Bodenblech (203) vakuumdicht verschweißt sein, Vorzugsweise sind sowohl das zu dem Tankboden hin geneigte, untere Stehblech und das zu dem Tankboden hin geneigte obere Stehblech mit dem Tankmantel als auch das untere Stehblech mit dem, vorzugsweise zu dem Tankboden hin geneigten, unteren Liegeblech vakuumdicht verschweißt und das obere Stehblech mit dem zu dem Tankboden hin geneigten, oberen Liegeblech vakuumdicht verschweißt.

Das Randsegment ist mit dem dem Tankboden zugewandten unteren Bereich der Innenseite des Tankmantels vakuumdicht verschweißt. Der untere Bereich der Innenseite des Tankmantels, der von dem Randsegment vakuumdicht begrenzt wird, erstreckt sich nicht über die gesamte Höhe des Tankmantels, sondern nur über diejenige Höhe, über die eine Überwachung gefordert ist.

In einer weiteren Ausführungsform des erfindungsgemäßen Tankbauwerks liegt das untere Liegeblech flächig auf der Innenseite des Tankbodens, welche dem Tankmantel zugewandt ist, auf. In einer weiteren Ausgestaltung kann die Innenseite des Tankbodens mit einer Schicht mit Glasfaser verstärktem kunststoffartigen Material beschichtet sein, so dass es erforderlich ist, eine Betonschicht ausgehend von dem äußeren Randbereich B des Tankbodens bis zu dem inneren Randbereich BX des Tankbodens mit absteigender, dem Tankboden abgewandten Oberseite auf diese Schicht aufzutragen. Die Oberseite der Betonschicht ist in Richtung zu dem Kreismittelpunkt des Tankbodens oder der Mitte-Längsachse des Tankmantels hin geneigt. Der Tankboden kann im Sinne der Erfindung den gegen den Untergrund abgestützten Boden des Tankbauwerks mit der Schicht mit einem, z.B. glasfaserverstärktem, kunststoffartigem Material und der Betonschicht oder keine Schicht mit glasfaserverstärktem kunststoffartigem Material und keine Betonschicht, sondern eine Schicht oder Lage mit metallenem Werkstoff umfassen. Daher kann die Innenseite des Tankbodens auch von der dem Tankboden abgewandten Oberfläche oder Seite der Betonschicht und der Schicht mit glasfaserverstärktem kunststoffartigem Material oder nur von der Schicht oder Lage mit metallenem Werkstoff gebildet sein.

Auf der Oberseite der Betonschicht, die dem Tankboden abgewandt ist, liegt in dieser Ausgestaltung das untere Liegeblech flächig auf. Die Verbindung des unteren Liegeblechs des Randsegmentes wird bei dieser Ausgestaltung des erfindungsgemäßen Tankbauwerks durch Heften des inneren Randbereichs des unteren Liegeblechs an auf dem Tankboden angeordnete bodenseitige plattenförmige Unterlegflacheisen bereitgestellt und die bodenseitigen Unterlegflacheisen sind mit der GFK-Schicht und /oder dem Tankboden fest verbunden, vorzugsweise vernietet. Der L-förmige Zwischenraum des Randsegments verläuft innenseitig an seinen beiden Enden spitz zu; der vakuumdichte Verschluss des Zwischenraums durch die hermetische Abdichtung der Bleche sichert die Dichtigkeit des Tankbauwerks in seinem äußeren Randbereich. Der Zwischenraum des Randsegments wird als Kammer oder Überwachungskammer bezeichnet, wobei dessen Dichtheit oder Dichtigkeit mit Hilfe von herkömmlichen und erfindungsgemäßen Leckanzeigern oder Vakuumüberwachungseinrichtungen überprüft werden kann.

Das untere Liegeblech, das untere Stehblech, das obere Stehblech und das obere Liegeblech können aus plattenförmigen Bahnen, plattenförmigen Blechbahnen oder plattenförmigen Segmenten zusammengesetzt werden, die als untere Liegeblechbahnen, untere Stehblechbahnen, obere Stehblechbahnen und obere Liegeblechbahnen bezeichnet werden. Die unteren Liegeblechbahnen, unteren Stehblechbahnen, oberen Stehblechbahnen und oberen Liegeblechbahnen werden im Folgenden kurz auch als Bahnen, Blechbahnen oder Segmenten genannt.

An einem Teil der Rückseite jeder Bahn oder jedes Segments, vorzugsweise an einer Hälfte derselben, ist ein plattenförmiges Flacheisen angeschweißt, vorzugsweise geheftet, so dass ein Teil des Flacheisens über die eine Seite der Bahn um ein vorbestimmtes Maß übersteht. Das Flacheisen kann sich über die gesamte Länge dieser Seite der Bahn erstrecken. Bei dem Zusammensetzen oder -fügen der solcherart ausgebildeten, gleichartig ausgebildeten Bahnen stößt die dem vorragenden Teil des Flacheisens zugewandte Seite einer gleichartig ausgebildeten Bahn gegen die dieser zugewandten Seite einer anderen gleichartig ausgebildeten Bahn an einer gemeinsamen Stoßstelle Stoß an Stoß an, so dass die andere gleichartig ausgebildete Bahn mit einem Teil ihrer Rückseite, vorzugsweise mit der Hälfte derselben, gegen das Flacheisen der einen ihr benachbarten gleichartig ausgebildeten Bahn Fläche auf Fläche zum Anliegen gelangt. Nach dem Zusammensetzen der beiden gleichartig ausgebildeten Bahnen werden diese an ihrer gemeinsamen Stoßstelle miteinander unter Bildung von Stoßnähten geheftet, danach werden beide vorzugsweise mittels WIG-Schweißverfahren ohne Argonspülung miteinander verschweißt.

Im Sinne der Erfindung wird unter mit Untergriff der Flacheisen auch das Ansetzen des Flacheisens einer Blechbahn gegen die Rückseite der dieser benachbarten anderen Blechbahn bei dem Zusammensetzen oder -fügen derselben verstanden. Im Sinne der Erfindung wird unter Schweißbadsicherung auch das Abdecken der Rückseiten der zusammengesetzten Blechbahnen durch an deren Rückseiten angeschweißte Flacheisen verstanden, so dass z.B. eine Argonspülung bei dem vakuumdichten Verschweißen der Stoßstellen mittels WIG-Schweißverfahren, zum Beispiel im rückwärtigen Bereich, sich erübrigen kann.

In einer Ausgestaltung des erfindungsgemäßen Tankbauwerks kann der Abstand W3, der dem Abstand der Kante des Seitenbereichs der einen oberen Bodenblechbahn von der Kante des Seitenbereichs von der anderen benachbarten oberen Bodenblechbahn im Überlappungsbereich entspricht, gleich oder kleiner sein als der Abstand W2, der dem Abstand zwischen dem äußeren Randbereich des oberen Stehblechs und dem äußeren Randbereich des unteren Stehblechs entspricht. Auch kann in einer weiteren Ausgestaltung des erfindungsgemäßen Tankbauwerks der Abstand A4, der dem Abstand der gegenüberliegenden inneren Randbereiche der unteren Bodenbleche voneinander im Kammertrennungsbereich entspricht, gleich oder größer sein als der Abstand W2 oder W1, der dem Abstand zwischen dem inneren Randbereich des oberen Liegeblechs und dem äußeren Randbereich des oberen Bodenblechs entspricht. Der Abstand A3, der dem Abstand der gegenüberliegenden inneren Randbereiche der oberen Bodenblechbahnen voneinander im Kammertrennungsbereich entspricht, kann gleich oder größer sein als der Abstand W2 oder W1.

Das untere Liegeblech mit seinen unteren Liegeblechbahnen kann im Längsschnitt einen Winkel α mit dem Tankboden oder mit der GFK-Schicht von 10 bis 25°, vorzugsweise 25⁰, einschließen; das obere Liegeblech kann einen Winkel β mit dem unteren Liegeblech von 2 bis 5°, vorzugsweise 3,5°, einschließen; das obere Stehblech kann mit dem Tankmantel einen Winkels δ, vorzugsweise 3-10⁰, noch mehr bevorzugt 2 bis 5⁰, einschließen. Das untere Stehblech wird gegen das untere Liegeblech und gegen den Tankmantel gesetzt und schließt mit dem Tankmantel einen Winkel γ, ein, der vorzugsweise halb so groß wie der Winkel δ sein kann oder 2 bis 5°, vorzugsweise 3,0°, sein kann.

So kann das untere Liegeblech plattenförmige Liegeblechbahnen umfassen. An der Rückseite einer jeden unteren Liegeblechbahn ist ein Flacheisen angeschweißt. Das Flacheisen ragt um ein vorbestimmtes Maß mit einem Teil über die dem Flacheisen zugewandten Seite der unteren Liegeblechbahn vor. Das Flacheisen erstreckt sich über die gesamte Seite der unteren Liegeblechbahn. Zur Bereitstellung des unteren Liegeblechs werden gleichartig ausgebildete untere Liegeblechbahnen flächig auf die Innenseite des Tankbodens oder flächig auf die Innenseite der Betonschicht und gegen auf dem Tankboden angeordnete der Betonschicht zugewandte und/oder an diese angrenzende, sog. bodenseitige, Flacheisen aufgelegt, so dass der über die Seite vorragende Teil des Flacheisens der einen Liegeblechbahn gegen die Rückseite der benachbarten gleichartig ausgebildeten Liegeblechbahn mindestens teilweise anliegt. Die Rückseite der einen gleichartig ausgebildeten Liegeblechbahn ist teilweise, vorzugsweise zur Hälfte, mit dem Flacheisen verschweißt, vorzugsweise geheftet. In derselben Weise können auch die oberen Liegeblechbahnen, die unteren Stehblechbahnen und oberen Stehblechbahnen, die bodenseitigen und oberseitigen Flacheisen und die unter- und oberseitige Unterlegflacheisen ausgebildet sein und kann mit diesen verfahren bzw. vorgegangen werden.

Das Auslegen von gleichartig ausgebildeten Bahnen, wie untere Stehblechbahnen, obere Stehblechbahnen, untere Liegeblechbahnen und obere Liegeblechbahnen mit an deren Rückseite angeschweißten Flacheisen und das Aufliegen der Bahnen auf den Flacheisen gleichartig ausgebildeter Bahnen und das Anliegen von benachbarten Bahnen Stoß an Stoß an deren gemeinsamen Stoßstelle ermöglicht ein Verschweißen der Bahnen, vorzugsweise mittels WIG-Schweißverfahren, miteinander im Bereich deren durch Heftung bereitgestellten Stoßnähte und Stoßstellen ohne Verwendung von Argon-Spülung im Gegensatz zu herkömmlichen Schweißverfahren.

Das Bodensegment umfasst ein oberes Bodenblech und ein unteres Bodenblech, welche voneinander durch eine zwischen beiden angeordnete Schicht mit Stahlgittergewebe voneinander beabstandet sind. Das Bodensegment begrenzt den vakuumdichten Zwischenraum, der als Überwachungskammer benutzt wird, oberseitig durch sein oberes Bodenblech und unterseitig durch sein unteres Bodenblech. Der Zwischenraum des Bodensegments kann seitlich durch Einrichtungen, beispielsweise durch Flacheisen, durch das Randsegment und deren Bleche, wie durch das untere Liegeblech, Verstärkungsplatten, usw. vakuumdicht begrenzt oder abgedichtet sein. Ebenso kann der Zwischenraum des Bodensegments sich seitlich erstrecken, z.B. in einen oder in mehrere Zwischenräume, die z.B. von den beiden übereinander, beabstandet voneinander angeordneten Schlammtassen, oder von den beiden übereinander, beabstandet voneinander angeordneten Bodensumpfbehälter, usw., ausgebildet werden können.

Im Sinne der Erfindung wird unter Kammertrennungsbereich des erfindungsgemäßen Tankbauwerks auch derjenige Bereich verstanden, welcher zwischen zwei benachbarten, z.B. in Draufsicht halbkreisförmigen, Bodensegmenten im Bereich der Mitte-Querachse Q des Tankbodens oder des Tankmantels sich befindet; der Kammertrennungsbereich ermöglicht den vakuumdichten Verschluss der Zwischenkammern von zwei benachbarten Bodensegmenten voneinander, ohne dass ein Austausch an Gasen und/oder Flüssigkeiten zwischen den beiden Zwischenräumen stattfindet.

Im Sinne der Erfindung wird unter Bahnentrennungsbereich des Bodensegmentes auch derjenige Bereich verstanden, welcher die Seitenbereiche von zwei benachbarten unteren parallel zueinander verlaufenden Bodenblechbahnen eines Bodensegments und die Seitenbereiche von zwei benachbarten über den oder oberhalb von den unteren Bodenblechbahnen angeordneten oberen parallel zueinander verlaufenden Bodenblechbahnen umfassen kann, wobei die Seitenbereiche der oberen Bodenblechbahnen sich einander im Überlappungsbereich überlappen können. So kann ein Bodensegment ein oberes Bodenblech mit oberen Bodenblechbahnen, wobei die Seitenbereiche benachbarter Bodenblechbahnen sich überlappen, sowie ein unteres Bodenblech mit unteren Bodenblechbahnen umfassen, wobei die Seitenbereiche benachbarter Bodenblechbahnen sich überlappen.

Der Kammertrennungsbereich umfasst bodenseitige und oberseitige Unterlegflacheisen. In der Ausgestaltung des Tankbodens ohne GFK-Schicht können die unteren Unterlegflacheisen auf dem Tankboden bzw. auf dessen Innenseite aufliegen und mit dem Tankboden vernietet werden. In der weiteren Ausgestaltung des Tankbodens mit einer aufgetragenen GFK-Schicht können die unteren Unterlegflacheisen auf einer Dreischichtenanordnung aufliegen, welche auf der auf dem Tankboden angeordneten GFK-Schicht aufgetragen ist; und mit dem Tankboden vernietet werden. An der Rückseite eines bodenseitigen Unterlegflacheisens kann ein Flacheisen angeschweißt sein, welches mit einem Teil über die dem Flacheisen zugewandte Seite des Unterlegflacheisens um ein vorbestimmtes Maß hervorragen kann. Die Rückseite des einen bodenseitigen Unterlegflacheisens kann teilweise von dem Flacheisen begrenzt werden, z.B. hälftig. Das Flacheisen kann sich über die gesamte Länge der dem Flacheisen zugewandten Seite des bodenseitigen Unterlegflacheisens erstrecken. Gleichartig ausgebildete Unterlegflacheisen werden in Reihe entlang der Mitte-Querachse des kreisrunden Tankbodens im gegenseitigen Untergriff mit Flacheisen verlegt auf denselben, so dass der über die Seite vorragende Teil des Flacheisens der einen Liegeblechbahn gegen die Rückseite der benachbarten gleichartig ausgebildeten Liegeblechbahn mindestens teilweise anzuliegen vermag. Die Rückseite einer gleichartig ausgebildeten Liegeblechbahn ist teilweise, vorzugsweise zur Hälfte, mit dem Flacheisen verschweißt, vorzugsweise geheftet. In derselben Weise können auch die oberen Liegeblechbahnen, untere Stehblechbahnen und obere Stehblechbahnen, unterseitige Unterlegflacheisen und oberseitige Unterlegflacheisen ausgebildet sein und es kann mit diesen derart verfahren oder vorgegangen werden.

Bei der Ausgestaltung des erfindungsgemäßen Tankbauwerks im Bereich der Kammertrennung werden oberseitige gleichartig ausgebildete Unterlegflacheisen mittig auf die bodenseitigen Unterlegflacheisen gelegt, unter Bereitstellung von beidseitigen Auflageflächen der bodenseitigen Unterlegflacheisen für die unteren Bodenblechbahnen.

An der Rückseite eines oberseitigen Unterlegflacheisens ist ein Flacheisen angeschweißt, welches mit einem Teil über die dem Flacheisen zugewandte Seite des einen oberseitigen Unterlegflacheisens um ein vorbestimmtes Maß hervorragt. Die Rückseite des einen oberseitigen Unterlegflacheisens kann teilweise von dem Flacheisen begrenzt werden, z.B. hälftig. Das Flacheisen kann sich über die gesamte Länge der dem Flacheisen zugewandten Seite des oberseitigen Unterlegflacheisens erstecken. Ein weiteres oder anderes gleichartig ausgebildetes oberseitiges Unterlegflacheisen kann in Reihe entlang der Mitte-Querachse des kreisrunden Tankbodens im gegenseitigen Untergriff mit Flacheisen verlegt werden auf demselben, so dass der über die Seite vorragende Teil des Flacheisens des einen Unterlegflacheisens gegen die Rückseite des benachbarten gleichartig ausgebildeten Unterlegflacheisens mindestens teilweise anzuliegen vermag. Die Rückseite des gleichartig ausgebildeten Unterlegflacheisens ist teilweise, vorzugsweise zur Hälfte, mit dem Flacheisen verschweißt, vorzugsweise geheftet.

Da die oberseitigen Unterlegflacheisen eine geringere Breite als die bodenseitigen Unterlegflacheisen aufweisen können, können aufgrund der mittigen Anordnung des oberseitigen Unterlegflacheisens auf dem unterseitigen Unterlegflacheisens zu beiden Seiten der oberseitigen Unterlegflacheisen Auflageflächen der bodenseitigen Unterlegflacheisen bereitgestellt werden, auf denen die unteren Bodenblechbahnen mit ihren inneren Randbereichen vorzugsweise von den oberseitigen Unterlegflacheisen beabstandet aufgelegt und mit ihren inneren Randbereichen mit den unteren Unterlegflacheisen vakuumdicht verbunden, vorzugsweise ver- oder durchgeschweißt, werden können. Die oberseitigen Unterlegflacheisen werden auf ihrer einen Seite gleichfalls vakuumdicht mit den bodenseitigen Unterlegflacheisen verschweißt und auf ihrer anderen Seite lediglich mit dem bodenseitigen Unterlegflacheisen geheftet. Auf die unteren Bodenblechbahnen liegt jeweils eine Schicht mit Stahlgittergewebe auf. Auf den beiden Schichten liegen obere Bodenblechbahnen auf, deren innere Randbereiche ebenso auf der Oberseite der oberseitigen Unterlegflacheisen aufliegen und mit diesen vakuumdicht verschweißt sind.

Auch werden gleichartig ausgebildete Unterlegflacheisen in mehreren voneinander beabstandeten Reihen quer zueinander quer zu der Mitte-Querachse verlegt zur Bereitstellung des Bereichs der Bahnentrennung. Die Verlegung der bodenseitigen Unterlegflacheisen erfolgt dergestalt, dass die dem Flacheisen zugewandte Seite des einen gleichartig ausgebildeten Unterlegflacheisens gegen die der Seite des weiteren bodenseitigen Unterlegflacheisens Stoß an Stoß unter Bildung der Stoßstelle anliegt, welche dem Flacheisen des einen Unterlegflacheisens zugewandt ist. Die einander anstoßenden Seiten der Unterlegflacheisen werden miteinander, vorzugsweise auch mit Flacheisen, geheftet zwecks Lagesicherung. Nach der Heftung können die Seiten mit Hilfe eines erfindungsgemäßen Schweißverfahrens ohne Argon-Spülung als WIG-Schweißverfahren vakuumdicht verschweißt werden. In der Ausgestaltung des erfindungsgemäßen Tankbauwerks sind im Bereich der Bahnentrennung ebenfalls die bodenseitigen Unterlegflacheisen oberseitig mittig mit gleichartig ausgebildeten oberseitigen Unterlegflacheisen versehen, welche jedoch keine rückseitig angeschweißte Flacheisen aufweisen. Eine Verbindung zwischen den oberseitigen und den bodenseitigen Unterlegflacheisen erfolgt lediglich mittels Heftung. Da die oberseitigen Unterlegflacheisen eine geringere Breite als die bodenseitigen Unterlegflacheisen aufweisen, werden zu beiden Seiten der oberseitigen Unterlegflacheisen Auflageflächen bereitgestellt, auf denen die Seitenbereiche der unteren Bodenblechbahnen anliegen und mit denen die Seitenbereiche der unteren Bodenblechbahnen vakuumdicht durchgeschweißt sein können.

Im Sinne der Erfindung wird unter vakuumdichter Durchschweißung oder Verschweißung verstanden, dass die Schweißnaht vakuumdicht ausgebildet ist. Auf den unteren Bodenblechbahnen ist jeweils mindestens eine Schicht mit Stahlgittergewebe aufliegend. Auf den oberseitigen Unterlegflacheisen liegt eine obere Bodenblechbahn soweit auf, dass deren Seitenbereich zumindest teilweise auf der Oberseite der oberseitigen Unterlegflacheisen aufliegen kann. Dieser Seitenbereich ist mit dem oberseitigen Unterlegflacheisen geheftet.

Eine zu dieser oberen Bodenblechbahn benachbarte weitere obere Bodenblechbahn liegt derart auf dieser einen Bodenblechbahn auf, dass der Seitenbereich der weiteren oberen Bodenblechbahn den Seitenbereich der einen oberen Bodenblechbahn überlappt und den sogenannten Überlappungsbereich bildet. Der Seitenbereich bzw. die Kante des Seitenbereichs der weiteren oberen Bodenblechbahn ist mit dem Seitenbereich der oberen Bodenblechbahn vakuumdicht verschweißt.

Das erfindungsgemäße Tankbauwerk kann einen Tankbehälter mit einem Tankboden und einem an dem Tankboden senkrecht von diesen vorstehenden in der Draufsicht runden oder zylindrisch angeordneten Tankmantel umfassen, auf dessen Tankboden eine Schicht mit einem glasfaserverstärktem kunststoffartigen Material aufgebracht sein kann. Für die auf diese Schicht im Bereich des Tankmantels aufzubringende Betonschicht kann ein Estrichmörtel verwendet werden, der hoch abriebfest, eine hohe Stoß- und Schlagfestigkeit, eine gute Biegezug- und Druckfestigkeit, einfache Verarbeitung und ein sehr gutes Glättverhalten aufweisen kann. Beispielsweise eignet sich als Estrich ein Sikaflor-Estrichmörtel KH. Auch eignet sich für die Betonschicht ein Beton-Estrich mit der Festigkeitsklasse C20/25 nach DIN EN 206, einem Estrichmörtel CT-C25/F4 nach DIN EN 13813. Der Betonestrich wird z.B. auf der Basis von Zement gemäß DIN EN 197 und Gesteinskörnungen von 0 bis 8mm oder 0 bis 4mm gemäß DIN 4226 hergestellt. Die Betonschicht kann eine Druckfestigkeit von 25 N/mm², eine Biegezugfestigkeit von 4 N/mm² und/oder eine Wärmeleitzahl R von ca. 1,6 W/(m k), und eine Baustoffklasse A1 nicht brennbar nach 4102, sowie Körnung von 0 bis 8mm oder 0 bis 4mm aufweisen.

Unter Estrich für die Herstellung der Betonschicht sind auch im Sinne der Erfindung Feinüberzüge zu verstehen, die auf dem Tankboden aufgebracht werden. Die Betonschicht zeichnet sich beispielsweise durch hinreichende Abriebfestigkeit, Zugfestigkeit und Druckfestigkeit aus. Unter Estriche wird im Sinne der Erfindung auch verstanden ein Gemenge von Zuschlägen und Bindemitteln, wobei Zuschläge, Feinkies, Sand, Splitt oder Steinmehl sein können. Als Bindemittel können sich eignen Zement, Anhydrid, Magnesia, Betumen und Kunstharz. Auch können als Estrich für die Betonschicht herkömmlicherweise Verbundestrich, Estrich auf Trennschicht verwendet werden. Der Estrich kann aus Zement, Gips (Estrich-Gips), wie Calciumsulfat, und andere Bindemittel mit verschiedenen Zuschlägen, die dem Fachmann bekannt sind, zusammengesetzt sein.

Unter glasfaserverstärktes kunststoffartiges Material wird im Sinne der Erfindung auch verstanden ein herkömmlicher Verbundwerkstoff mit einer Kombination von einer Matrix aus Polymeren und als Verstärker wirkende Glasfasern. Die zur Faserverstärkung verwendeten Glasmaterialien liegen beispielsweise als Fasern, Garne, oder Rovings (Glasseidenstränge), Fliese, Gewebe oder Matten vor. Polymere Matrixsysteme für das glasfaserverstärkte kunststoffartige Material können sowohl Duroplaste als auch Thermoplaste üblicherweise sein. Als Duroplaste eignen sich beispielsweise Epoxidharze, ungesättigte Polyesterharze, Phenol und Furanharze. Als Thermoplaste können sich eignen Polyamide, Polykarbonate, Polyphenylenoxide usw.

Die L-förmige Zweischichtenanordnung umfasst vorzugsweise eine Lage mit einer Feuerschutzdecke und einer Lage mit Aluminiumfolie. Der eine dem Tankmantel abgewandte Schenkel der Lage mit Aluminium der Zweischichtenanordnung liegt zusammen mit dem einen Schenkel der L-förmigen Feuerschutzdecke auf der Oberseite der Kehle der Betonschicht auf und der andere Schenkel der der Lage mit Aluminium und der der Feuerschutzdecke liegen beispielsweise gegen die Innenseite des Tankmantels an. Die Lage mit der Feuerschutzdecke ist vorzugsweise dem Tankboden abgewandt. Als Feuerschutzdecke können sich sogenannte herkömmliche Hochtemperatur-Feuerschutzdecken eignen, die gesundheitlich unbedenklich sind bis zu einem Temperaturbereich von 700°C. Die herkömmliche Feuerschutzdecke kann herkömmliche anorganische und / oder organische Stoffe als sogenannte Flammschutzmittel umfassen, die das Gewebe, mit welchem die Feuerschutzdecke hergestellt ist, flammfest oder flammhemmend machen können. Das Gewebe von Feuerschutzdecken kann beispielsweise mit einem sauerstoff-absperrenden, dünnen Überzug versehen sein. Ebenso kann das Gewebe mit Glasfasern hergestellt und mit den herkömmlichen Flammschutzmitteln beschichtet sein. Die herkömmliche Feuerschutzdecke weist beispielsweise ein Gewicht von 1.050 g/m² auf.

Auch bei der Ausgestaltung der seitlichen Anbindung des Bodensegmentes an eine Schlammtasse wird das untere Kragenblech der unteren Schlammtasse, die die Öffnung derselben begrenzt, als Auflagefläche für die untere Bodenblechbahn benutzt in ihrem der unteren Schlammtasse abgewandten Bereich. Auf dem der unteren Schlammtasse zugewandten Bereich des unteren Kragenblechs liegt das obere Kragenblech der oberen Schlammtasse, die die Öffnung derselben begrenzt, auf oder kann mittels einer Schicht mit Stahlgittergewebe von diesem beabstandet sein. Das obere Kragenblech ist mit dem unteren Kragenblech verschweißt, z.B. geheftet. Auf dem unteren Bodenblech ist teilweise eine Schicht mit Stahlgittergewebe angeordnet. Das obere Bodenblech liegt auf der Schicht mit Stahlgittergewebe und auf dem oberen Kragenblech beabstandet von dem unteren Bodenblech auf und ist mit dem oberen Kragenblech vakuumdicht verschweißt. Auch ist der Randbereich des unteren Bodenblechs, welcher der Schlammtasse zugewandt ist, mit dem unteren Kragenblech vakuumdicht verschweißt. Vorteilhafterweise geht der Zwischenraum zwischen den beiden voneinander beabstandeten Schlammtassen in den von den beiden voneinander beabstandeten oberen und unteren Bodenblechen gebildeten Zwischenraum über und sind beide miteinander gasmäßig bzw. flüssigkeitsmäßig verbunden, so dass Undichtigkeiten des Zwischenraums der Schlammtassen als Undichtigkeit in dem von den beabstandeten oberen und unteren Bodenblech gebildeten Zwischenraum messbar sind.

Dasselbe Prinzip von Zwischenraumverbindung oder -übergang wird auch im Wesentlichen bei der Anordnung oder Verbindung des Bodensegmentes mit Bodensumpfbehältern verwirklicht. Der untere Bodensumpfbehälter ist mit einem unteren mit dem Tankboden vernieteten Kragenblech verbunden, welcher den unteren Bodensumpfbehälter öffnungsmäßig begrenzt. Auf dem Bereich des unteren Kragenblechs, welcher dem unteren Bodensumpfbehälter abgewandt ist, liegt das untere Bodenblech auf und ist mit diesem vakuumdicht verschweißt, insbesondere der Bereich des unteren Bodenblechs, der dem unteren Bodensumpfbehälter zugewandt ist. Auf dem Bereich des unteren Kragenblechs, der dem unteren Bodensumpfbehälter zugewandt ist, liegt eine Schicht mit Stahlgittergewebe, auf welcher das obere Kragenblech des oberen Bodensumpfbehälters ruht, das die Öffnung des oberen Bodenbehälters begrenzt. Das obere Kragenblech ist mit dem unteren Kragenblech geheftet. Eine weitere Schicht mit Stahlgittergewebe ist auf dem äußeren Randbereich des unteren Kragenblech angeordnet, auf welcher das untere Bodenblech aufliegt. Das obere Bodenblech erstreckt sich in Richtung zu den Bodensumpfbehältern und liegt beabstandet von dem unteren Bodenblech auf dem oberen Kragenblech. Der den Bodensumpfbehältern zugewandte Randbereich des unteren Bodenblechs ist mit dem unteren Kragenblech vakuumdicht verschweißt. Der dem Bodensumpfbehälter zugewandte Randbereich des oberen Bodenblechs ist vakuumdicht mit dem oberen Kragenblech verschweißt. Vorteilhafterweise geht der Zwischenraum zwischen den beiden voneinander beabstandeten Bodensumpfbehältern in den von den beiden voneinander beabstandeten oberen und unteren Bodenblechen gebildeten Zwischenraum über und sind beide miteinander gasmäßig bzw. flüssigkeitsmäßig verbunden, so dass Undichtigkeiten des Zwischenraums der Bodensumpfbehältern als Undichtigkeit in dem von den beabstandeten oberen und unteren Bodenblech gebildeten Zwischenraum messbar sind.

In der Ausgestaltung des erfindungsgemäßen Tankbauwerks mit einer auf dem Tankboden aufgetragenen GFK-Schicht befindet sich unter dem unteren Kragenblech der unteren Schlammtasse und/oder des unteren Bodensumpfbehälters die Dreischichtenanordnung, welche flächenmäßig mit der Unterseite des unteren Kragenblechs übereinstimmt. Das untere Kragenblech ruht auf der Dreischichtenanordnung. Das untere Kragenblech mit der Dreischichtenanordnung ist mit der GFK-Schicht und dem Tankboden vernietet. Der weitere Aufbau erfolgt wie oben ausgeführt. In einer Ausgestaltung des erfindungsgemäßen Tankbauwerks wird zur Bereitstellung der Bodensümpfe ein unterer tassenförmiger Bodensumpfbehälter, an dessen oberen Rand oberseitig ein um den Rand umlaufendes unteres Kragenblech vakuumdicht verschweißt ist, in den Tankboden eingelassen. Der untere Bodensumpfbehälter nimmt einen von seiner Oberseite unter Bildung eines Zwischenraums beabstandeten oberen Bodensumpfbehälter auf, an dessen oberen Rand randseitig -wie seitlich- das untere Kragenblech vakuumdicht verschweißt und oberseitig ein um die Ränder umlaufendes oberes Kragenblech vakuumdicht verschweißt sein kann, welches durch eine Schicht mit Stahlgittern von dem unteren Kragenblech beabstandet ist. Der äußere Randbereich des oberen Kragenblechs kann mit dem unteren Kragenblech vakuumdicht verschweißt sein, wobei der äußere Randbereich des unteren Kragenbleches über den äußeren Randbereich des oberen Kragenblechs um ein Maß vorragend übersteht. Zwischen dem unteren Kragenblech und dem oberen Kragenblech ist eine um die Bodensumpfbehälter umlaufende Schicht mit Stahlgitter flächig angeordnet. Das untere Bodenblech liegt auf einem Teil des unteren Kragenblechs auf und auf dem unteren Bodenblech ist eine Schicht mit Stahlgitter flächig angeordnet. Das obere Bodenblech ist auf dem oberen Kragenblech und auf der auf dem unteren Kragenblech angeordneten Schicht mit Stahlgittern so angeordnet, dass das obere Bodenblech mit seinem inneren Randbereich auf dem oberen Kragenblech im Bereich des unteren Bodensumpfbehälters aufliegt und mit diesem vakuumdicht verschweißt ist; vorzugsweise ist unter dem unteren Kragenblech auf der Schicht mit glasfaserverstärktem kunststoffartigem Material eine Dreischichtenanordnung mit einer oberen Lage und einer unteren Lage mit Aluminium-Folie und einer zwischen beiden angeordneten mittleren Lage mit einem Stahlgittergewebe angeordnet, wobei das untere Kragenblech mit der Schicht und dem Tankboden vernietbar ist.

Die Bahnen von Bodenblechen, Stehblechen, Liegeblechen, usw. können mit Hilfe von Inertgas-Schweißungen verschweißt sein. Als besonders vorteilhaft erweist sich das Verschweißen mittels Wolfram-Inert-Schweißung (=WIG-Schweißverfahren). Herkömmlicherweise wird zwischen einer sich nicht verbrauchenden Wolfram-Elektrode und dem Werkstück der Lichtbogen gezogen, wobei um die Wolfram-Elektrode eine Ringdüse angeordnet sein kann, aus der bei Argonspülung Argon auf das Werkstück strömt. Der Argonstrom verdrängt die atmosphärische Luft, so dass unter neutraler Schutzschicht geschweißt werden kann. Beim Verschweißen der Steh- und Liegebleche wurden im Stand der Technik WIG-Schweißverfahren mit Argonspülung verwendet. Der Nachteil des WIG-Schweißverfahrens mit Argonspülung macht erforderlich, dass alle Schweißnähte über deren gesamten Umfang zweimal abgeklebt werden mussten und das vollständige Randsegment während der gesamten Schweißdauer vollständig mit Argon gespült werden musste. Hierbei konnten Undichtigkeiten auftreten, so dass sich Poren oder Porennester einstellten. Durch das herkömmliche WIG-Schweißverfahren mit Argonspülung traten auch erhebliche Zeitverluste durch Nachbesserungen, Reparaturen und erhebliche Kosten durch den Verbrauch von großen Mengen an Argon zum Spülen auf. Bei dem erfindungsgemäßen Verfahren kann ein WIG-Schweißverfahren ohne Argonspülung, aber mit Schweißbadsicherung verwendet werden.

In einer weiteren Ausgestaltung des erfindungsgemäßen Tankbauwerks weist der Bereich des Tankbodens als Auflage für Schwimmdachfüße der Schwimmdecke zwei mittig übereinander angeordnete voneinander beabstandete Auflagenbleche auf, zwischen denen eine Schicht mit Stahlgittergewebe Fläche auf Fläche angeordnet sein kann, wobei das obere Auflagenblech geringer an Fläche ist als das untere und auf dem dem oberen Bodenblech zugewandten Randbereich des oberen Auflagenblechs das obere Bodenblech Fläche an Fläche aufliegt und mit dem oberen Auflageblech vakuumdicht verschweißt ist, vorzugsweise WIG-Verschweißung ohne Zusatz. Der dem oberen Bodenblech zugewandte Randbereich des oberen Auflagenblechs kann mit dem unteren mit dem Tankboden vernieteten Auflageblech geheftet, vorzugsweise herkömmlicher Schweißverfahren mittels Elektrode, sein. Da das obere Auflageblech eine geringere Fläche als das untere Auflageblech hat, können randständige Auflageflächen des unteren Auflageblechs bereitgestellt werden, auf denen das untere Bodenblech aufgelegt und mit dem unteren Auflageblech vakuumdicht ver- oder durchgeschweißt sein kann, vorzugsweise mittels WIG-Schweißverfahren ohne Zusatz. Das untere Bodenblech ist von dem oberen Bodenblech vorzugsweise aufgrund der auf dem unteren Bodenblech angeordneten Schicht mit Stahlgittergewebe beabstandet. Vorteilhafterweise kann der vakuumdichte Zwischenraum zwischen den beiden voneinander beabstandeten Auflagenbleche in den von den beiden voneinander beabstandeten oberen und unteren Bodenblechen gebildeten Zwischenraum übergehen und können beide miteinander gasmäßig bzw. flüssigkeitsmäßig verbunden sein, so dass Undichtigkeiten des Zwischenraums der Auflagenbleche als Undichtigkeit in dem von den beabstandeten oberen und unteren Bodenblech gebildeten Zwischenraum messbar sind. Unter gasmäßiger Verbindung wird im Sinne der Erfindung auch die flüssigkeitsmäßige Verbindung verstanden.

In der Ausführung mit der auf dem Tankboden aufgebrachten GFK-Schicht liegt das untere Auflageblech auf der Dreischichtenanordnung auf, welche auf der GFK-Schicht angeordnet ist. Das untere Auflageblech ist mit der Dreischichtenanordnung, der GFK-Schicht und dem Tankboden vernietet. Die weitere Ausgestaltung entspricht der o.g. Ausgestaltung ohne GFK-Schicht. Der Bereich des Tankbodens, welcher als Auflage für die Schwimmdachfüße vorgesehen ist, kann einen Aufbau aufweisen, welcher mit der Ausführungsform des erfindungsgemäßen Tankbauwerks zur Bereitstellung von Bodensümpfen weitgehend übereinstimmen kann.

Die Erfindung betrifft auch die Anordnung und die Halterung von Stutzen für die Prüfung, Absaugung, Messung, Befüllung usw., beispielsweise von einem zu überprüfenden Zwischenraum des Randsegmentes und /oder des Bodensegmentes. Der Tankmantel weist einen Durchbruch zur Aufnahme eines Verstärkungsrohrs auf, durch welches Verstärkungsrohr ein Rohr, beispielsweise der Stutzen, hindurchgeführt werden kann. Die Erfindung betrifft auch die Anordnung und die Halterung von Stutzen für die Prüfung, Absaugung, Messung, Befüllung usw., beispielsweise von einem zu überprüfenden Zwischenraum des Randsegmentes und /oder des Bodensegmentes. Der Tankmantel weist einen Durchbruch zur Aufnahme eines Verstärkungsrohrs auf, durch welches Verstärkungsrohr ein Rohr, beispielsweise der Stutzen, hindurchgeführt ist. Die den Durchbruch begrenzenden Bereiche des Tankmantels nehmen das Verstärkungsrohr auf und werden mit dem Verstärkungsrohr vakuumdicht verschweißt. Die die beiden Öffnungen des Verstärkungsrohrs begrenzenden Bereiche sind mit dem Rohr vakuumdicht verschweißt. Aus dem oberen Liegeblech des Randsegmentes kann ein Durchbruch herausgefräst werden, gegen den den Durchbruch begrenzenden Bereich ein Verstärkungsring angesetzt wird, dessen Öffnung einen größeren Durchmesser hat als der Durchbruch des Liegeblechs.

Auch können aus dem Tankmantel ein Durchbruch zur Aufnahme eines Verstärkungsrohrs und aus dem oberen Liegeblech ein Durchbruch herausgefräst werden, über das Rohr das Verstärkungsrohr geführt und mit dem Tankmantel punktweise verschweißt, vorzugsweise geheftet, wird, ein Verstärkungsring über das Rohr geführt ist und gegen den an das Rohr angrenzenden Bereich des oberen Liegeblechs angesetzt und unter Bildung von vakuumdichten Schweißnähten verschweißt wird, wobei das Rohr gegen den den Durchbruch begrenzenden Bereich des oberen Liegeblechs angesetzt ist, das Rohr mit dem Verstärkungsring vakuumdicht verschweißt wird, sowie die Vakuumdichtigkeit von Schweißnähten sowie der von dem von dem oberen Stehblech, dem oberen Liegeblech, dem unteren Liegeblech und dem unteren Stehblech gebildete Zwischenraum als Kammer überprüft wird durch Anschließen des Rohrs an Einrichtungen zum Messen, Absaugen und Befüllen der Kammer, wie Leckanzeiger. In einer Ausführungsform des erfindungsgemäßen Tankbauwerks kann ein Durchbruch in dem oberen Liegeblech bereitgestellt werden. Gegen den Bereich des Liegeblechs, welcher den Durchbruch seitlich begrenzt, wird ein Verstärkungsring angesetzt. Dessen Öffnung wird mit dem Durchbruch ausgerichtet. Vorzugsweise weist die Öffnung des Verstärkungsrings ein größeren Durchmesser auf als der Durchbruch des oberen Liegeblechs, so dass ein Teil des Bereichs des oberen Liegeblechs, welcher den Durchbruch begrenzt, als Kragen vorsteht, gegen welchen ein Rohr angesetzt werden kann. Das Rohr wird mit dem Verstärkungsring vakuumdicht mit seinem einen Ende verschweißt. Das andere Ende des Rohrs wird durch einen Durchbruch, welcher in dem Tankmantel, z.B. durch Herausfräsen, bereitgestellt wird, herausgeführt. Der Bereich des Tankmantels, der den Durchbruch seitlich begrenzt, wird mit der Außenseite des Verstärkungsrohrs, welches von dem Durchbruch mittig aufgenommen wird, umlaufend vakuumdicht verschweißt. Ebenfalls werden die beiden Enden des Verstärkungsrohrs, welche die Öffnungen des Verstärkungsrohrs begrenzen, umlaufend vakuumdicht mit der Außenseite des Rohrs verschweißt. Über das Rohr kann ein Vakuum in dem Zwischenraum angelegt werden, zwecks Überprüfung auf Dichtigkeit des Zwischenraums als Kammer 1 des Randsegments. Ebenso können Rohre mit den Kammern 2 und 3 der Bodensegmente nach derselben Vorgehensweise über Durchbrüche der oberen Bodenbleche zwecks Überprüfung auf Dichtigkeit des Zwischenraums verbunden werden.

In den bevorzugten Ausgestaltungen des erfindungsgemäßen Verfahrens wird das Herstellen der Bahnentrennung eines Bodensegments im Bahnentrennungsbereich der Übersichtlichkeit halber getrennt von dem Herstellen des Kammertrennungsbereichs, dem Herstellen des Randsegments, der Bodensumpfbehälter, des Rohranschlusses an Bodenbleche und der Schlammtassen usw. beschrieben, jedoch können ohne Weiteres die Verfahren zum Herstellen des Bahnentrennungsbereichs mit dem zum Herstellen des Kammertrennungsbereichs, dem des Herstellens des Randsegments, dem des Herstellens der Bodensumpfbehälter und/oder dem des Herstellens der Schlammtassen usw. kombiniert und z.B. zeitgleich durchgeführt werden.

Das untere Teil des Randsegmentes kann mit Hilfe des erfindungsgemäßen Verfahrens hergestellt werden durch:
a. Anlegen von um eine Mitte-Längsachse M des Tankbehälters verlaufenden bodenseitigen Flacheisen auf den Tankboden und Vernieten der Flacheisen mit dem Tankboden,
b. Auflegen von gleichartig ausgebildeten unteren Liegeblechbahnen mit unterseitig angehefteten vorstehenden Flacheisen als Schweißbadsicherung mit Untergriff der Flacheisen für das untere ringförmige Liegeblech auf den Tankboden und Verheften der benachbarten unteren Liegeblechbahnen miteinander,
c. Heften der inneren dem Tankmantel abgewandten Randbereiche der unteren Liegeblechbahnen an die bodenseitigen angehefteten Flacheisen,
d. Ansetzen von gleichartig ausgebildeten unteren Stehblechbahnen mit unterseitig angehefteten vorstehenden Flacheisen zur Schweißbadsicherung mit Untergriff der Flacheisen für das untere ringförmige Stehblech gegen die unteren Liegeblechbahnen und gegen den Tankmantel und Verheften der benachbarten unteren Stehblechbahnen miteinander unter Ausbildung von gehefteten Verschweißungsstellen,
e. Heften der äußeren dem Tankmantel zugewandten Randbereiche der unteren Stehblechbahnen an den Tankmantel unter Ausbildung von gehefteten Verschweißungsstellen,
f. Heften der inneren dem Tankmantel abgewandten Randbereiche der unteren Stehblechbahnen an die unteren Liegeblechbahnen,
g. vakuumdichtes Verschweißen, vorzugsweise ohne Argonspülung, der benachbarten unteren Liegeblechbahnen miteinander,
h. vakuumdichtes Verschweißen, vorzugsweise ohne Argonspülung, der benachbarten unteren Stehblechbahnen miteinander,
i. vakuumdichtes Verschweißen der inneren dem Tankmantel abgewandten Randbereiche der unteren Stehblechbahnen mit den Liegeblechbahnen und der äußeren Randbereiche der unteren Stehblechbahnen mit dem Tankmantel und/oder
j. Überprüfen der Dichtigkeit der Schweißnähte.

In einer weiteren Ausführungsform des erfindungsgemäßen Verfahrens kann statt des in Schritt a. zu erfolgenden Anlegens der Flacheisen auf den Tankboden auf diesen Schritt a. verzichtet werden, so dass im Schritt b. das Auflegen von gleichartig ausgebildeten unteren Liegeblechbahnen mit unterseitig angehefteten vorstehenden Flacheisen als Schweißbadsicherung mit Untergriff der Flacheisen auf den Tankboden erfolgt und das Verheften dieser mit demselben sowie weitere Schritte sich, wie oben ausgeführt, anschließen können.

In einer Ausführungsform des hohlzylindrischen Tankbauwerks zum Abdichten desselben werden die Flacheisen, die Blechbahnen, wie die unteren Liegeblechbahnen und die unteren Stehblechbahnen, radial um den Kreismittelpunkt des Tankbodens oder die Mitte-Längsachse des Tankmantels ausgerichtet. In einer besonders vorteilhaften Ausführungsform des hohlzylindrischen Tankbauwerks zum Abdichten desselben werden die Flacheisen, die Blechbahnen, wie die unteren Liegeblechbahnen und die unteren Stehblechbahnen, quer zu der Mitte-Querachse ausgerichtet. Die sichere Lage der Bleche und Formstabilität der erfindungsgemäßen Kammerüberwachungsanordnung und des erfindungsgemäßen Tankbauwerks werden vorteilhafterweise unterstützt durch die an deren Unterseiten angehefteten Flacheisen, da eine Blechbahn mit ihrem vorstehenden Teil formschlüssig jeweils die benachbarte Blechbahn zu untergreifen vermag, so dass je zwei benachbarte Blechbahnen auf einem Flacheisen sich abstützen und die durch Stoß gegen Stoß ausgestalteten auf dem Flacheisen angeordnete Stoßstelle je zwei benachbarter Blechbahnen vakuumdicht verschweißt werden können.

Das obere Teil des Randsegmentes kann mit Hilfe des erfindungsgemäßen Verfahrens hergestellt werden durch:
a. Ansetzen von Abstandshaltern auf die unteren Liegeblechbahnen und Heften der Abstandshalter an die unteren Liegeblechbahnen,
b. Ansetzen von gleichartig ausgebildeten oberen Liegeblechbahnen mit unterseitig angehefteten Flacheisen als Schweißbadsicherung mit Untergriff der Flacheisen für das obere ringförmige Liegeblech gegen die Abstandshalter und gegen das untere Liegeblech und Verheften der benachbarten oberen Liegeblechbahnen miteinander,
c. Ansetzen von gleichartig ausgebildeten oberen Stehblechbahnen mit unterseitig angehefteten Flacheisen als Schweißbadsicherung mit Untergriff der Flacheisen für das obere ringförmige Stehblech gegen die oberen Liegeblechbahnen und gegen den Tankmantel und Verheften der benachbarten oberen Stehblechbahnen miteinander,
d. Heften der inneren dem Tankmantel abgewandten Randbereiche der oberen Liegeblechbahnen an die unteren Liegeblechbahnen ,
e. Heften der äußeren dem Tankmantel zugewandten Randbereiche der oberen Stehblechbahnen an den Tankmantel unter Ausbildung von gehefteten Verschweißungsstellen,
f. Heften der inneren dem Tankmantel abgewandten Randbereiche der oberen Stehblechbahnen an die oberen Liegeblechbahnen unter Ausbildung von gehefteten Verschweißungsstellen,
g. vakuumdichtes Verschweißen, vorzugsweise ohne Argonspülung, benachbarter oberer Liegeblechbahnen miteinander,
h. vakuumdichtes Verschweißen, vorzugsweise ohne Argonspülung, benachbarter oberer Stehblechbahnen miteinander und der äußeren dem Tankmantel zugewandten Randbereiche der oberen Stehblechbahnen mit dem Tankmantel,
i. vakuumdichtes Verschweißen der inneren dem Tankmantel abgewandten Randbereiche der oberen Stehblechbahnen mit den oberen Liegeblechbahnen und/oder
j. Überprüfen der Dichtigkeit der Schweißnähte.

In einer Ausführungsform des hohlzylindrischen Tankbauwerks zum Abdichten desselben werden die Flacheisen, die Blechbahnen, wie die oberen Liegeblechbahnen und die oberen Stehblechbahnen, radial um den Kreismittelpunkt des Tankbodens oder die Mitte-Längsachse des Tankmantels ausgerichtet. In einer weiteren besonders vorteilhaften Ausführungsform des hohlzylindrischen Tankbauwerks zum Abdichten desselben werden die Flacheisen, die Blechbahnen, wie die unteren Liegeblechbahnen und die unteren Stehblechbahnen, quer zu der Mitte-Querachse ausgerichtet. Die sichere Lage der Bleche und Formstabilität der erfindungsgemäßen Kammerüberwachungsanordnung und des erfindungsgemäßen Tankbauwerks werden vorteilhafterweise unterstützt durch die an deren Unterseiten angehefteten Flacheisen, da eine Blechbahn mit ihrem vorstehenden Teil formschlüssig jeweils die benachbarte Blechbahn zu untergreifen vermag, so dass je zwei benachbarte Blechbahnen auf dem Flacheisen sich abstützen und die durch Stoß gegen Stoß ausgestalteten auf dem Flacheisen angeordnete Stoßstelle je zwei benachbarter Blechbahnen vakuumdicht verschweißt werden können.

Ein Teil des Bodensegmentes kann mit Hilfe des erfindungsgemäßen Verfahrens hergestellt werden durch:
a. Auflegen von parallel zu der Mitte-Querachse Q sich in einer Reihe erstreckenden bodenseitigen Unterlegflacheisen mit unterseitig angehefteten Flacheisen als Schweißbadsicherung mit Untergriff der Flacheisen Fläche auf Fläche auf den Tankboden und Vernieten der bodenseitigen Unterlegflacheisen mit dem Tankboden,
b. Auflegen von quer zu der Mitte-Querachse Q parallel zueinander sich erstreckenden voneinander beabstandeten Reihen von, vorzugsweise in Reihe angeordneten, bodenseitigen Unterlegflacheisen mit unterseitig angehefteten Flacheisen als Schweißbadsicherung mit Untergriff der Flacheisen Fläche auf Fläche auf den Tankboden und Vernieten der bodenseitigen Unterlegflacheisen mit denselben und im Bereich der Stoßstellen Verheften der benachbarten längs zu der Mitte-Querachse Q verlaufenden bodenseitigen Unterlegflacheisen miteinander und Verheften der quer zu einer Mitte-Querachse Q verlaufenden benachbarten bodenseitigen Unterlegflacheisen miteinander,
   vorzugsweise Heften der längs zu der Mitte-Querachse Q verlaufenden bodenseitigen Unterlegflacheisen an an diese angrenzenden quer zu einer Mitte-Querachse Q verlaufenden bodenseitigen Unterlegflacheisen,
   vorzugsweises Verschweißen der an das Randsegment angrenzenden bodenseitigen Unterlegflacheisen mit dem unteren Teil des Randsegmentes, wie mit dem unteren Liegeblech,
c. vakuumdichtes Verschweißen, vorzugsweise ohne Argonspülung, benachbarter Unterlegflacheisen miteinander,
d. Auflegen von gleichartig ausgebildeten oberseitigen Unterlegflacheisen mit unterseitig angehefteten Flacheisen als Schweißbadsicherung mit Untergriff der Flacheisen mittig auf die längs der Mitte-Querachse Q verlaufenden bodenseitigen Unterlegflacheisen und von gleichartig ausgebildeten oberseitigen Unterlegflacheisen ohne Flacheisen mittig auf die quer zu der Mitte-Querachse verlaufenden bodenseitigen Unterlegflacheisen unter Bildung von Auflageflächen für untere Bodenblechbahnen und /oder
e. Auflegen der unteren, parallel zu den quer zur Mitte-Querachse Q angeordneten bodenseitigen Unterlegflacheisen und parallel zueinander sich erstreckenden Bodenblechbahnen auf die Auflageflächen der bodenseitigen parallel zur Mitte-Querachse Q oder im Bereich derselben verlaufenden Unterlegflacheisen und/oder auf die Auflageflächen der bodenseitigen quer zur Mitte-Längsachse Q verlaufenden Unterlegflacheisen unter Überbrückung des jeweils zwischen zwei benachbarten quer zur Mitte-Längsachse Q verlaufenden Reihen von bodenseitigen Unterlegflacheisen angeordneten Bereichs, vorzugsweise zusätzlich Auflegen von äußeren dem Tankmantel zugewandten Randbereichen der unteren Bodenblechbahnen auf zumindest einen Teil des unteren Liegeblechs des Randsegments und Heften der unteren Bodenblechbahnen an die bodenseitigen Unterlegflacheisen, und vorzugsweise auch an das untere Liegeblech.

Das Herstellen des Kammertrennungsbereichs von zwei benachbarten Bodensegmenten kann mit Hilfe des erfindungsgemäßen Verfahrens hergestellt werden durch:
a. vakuumdichtes Verschweißen, vorzugsweise ohne Argonspülung, der inneren dem Tankmantel abgewandten Randbereiche der unteren Bodenblechbahnen mit den parallel zu einer Mitte-Querachse Q verlaufenden bodenseitigen Unterlegflacheisen,
b. vakuumdichtes Verschweißen einer Seite der parallel zu einer Mitte-Querachse Q verlaufenden oberseitigen Unterlegflacheisen mit den parallel zu einer Mitte-Querachse Q verlaufenden bodenseitigen Unterlegflacheisen,
c. Heften der der einen Seite gegenüber liegenden anderen Seite der parallel zu einer Mitte-Querachse Q verlaufenden oberseitigen Unterlegflacheisen an die parallel zu einer Mitte-Querachse Q verlaufenden bodenseitigen Unterlegflacheisen,
d. Auflegen je einer Schicht mit Stahlgittergewebe auf die unteren Bodenblechbahnen oder einen Teil derselben,
e. Auflegen von oberen parallel zu den quer zur Mitte-Querachse Q angeordneten bodenseitigen oder oberseitigen Unterlegflacheisen und parallel zueinander sich erstreckenden Bodenblechbahnen auf die Schicht mit Stahlgittergewebe und auf die parallel zu der Mitte-Querachse Q verlaufenden oberseitigen Unterlegflacheisen bzw. auf deren Auflageflächen mit voneinander beabstandeten inneren dem Tankmantel abgewandten Randbereichen der oberen Bodenblechbahnen und vorzugsweise auch Auflegen der äußeren dem Tankmantel zugewandten Randbereiche der oberen Bodenblechbahnen Fläche auf Fläche auf einen Teil des oberen Liegeblechs des Randsegments,
f. Heften der voneinander beabstandeten inneren dem Tankmantel abgewandten Randbereichen der oberen Bodenblechbahnen an die parallel zu einer Mitte-Querachse Q verlaufenden oberseitigen Unterlegflacheisen, und vorzugsweise an das obere Liegeblech, und/oder
g. vakuumdichtes Verschweißen, vorzugsweise ohne Argonspülung, der voneinander beabstandeten inneren dem Tankmantel abgewandten Randbereichen der oberen Bodenblechbahnen mit den oberseitigen Unterlegflacheisen.

In einem Ausführungsbeispiel wird das Herstellen der Bahnentrennung eines Bodensegments im Bahnentrennungsbereich der Übersichtlichkeit halber getrennt von den Verfahren zum Herstellen des Kammertrennungsbereichs, von Bodensumpfbehältern, Schlammtaschen, Auflagenblechen und dem Herstellen des Randsegments, usw. beschrieben, jedoch können die Verfahren zum Herstellen des Bahnentrennungsbereichs mit dem zum Herstellen des Kammertrennungsbereichs, dem zum Herstellen von Bodensumpfbehältern, dem zum Herstellen der Schlammtaschen, dem zum Herstellen der Auflagenbleche und dem des Herstellens des Randsegments kombiniert und vorzugsweise zeitgleich durchgeführt werden.

Das Herstellen des Bahntrennungsbereichs kann mit Hilfe des erfindungsgemäßen Verfahrens hergestellt werden durch:
a. vakuumdichtes Verschweißen, vorzugsweise ohne Argonspülung, der Seitenbereiche der unteren Bodenblechbahnen mit den quer zu einer Mitte-Querachse Q verlaufenden bodenseitigen Unterlegflacheisen,
b. Heften der quer zu einer Mitte-Querachse Q verlaufenden oberseitigen Unterlegflacheisen an die quer zu einer Mitte-Querachse Q verlaufenden bodenseitigen Unterlegflacheisen, vorzugsweise Heften der längs zu der Mitte-Querachse Q verlaufenden oberseitigen Unterlegflacheisen an an diese angrenzenden quer zu einer Mitte-Querachse Q verlaufenden oberseitigen Unterlegflacheisen,
c. Auflegen je einer Schicht mit Stahlgittergewebe auf die unteren Bodenblechbahnen,
d. Auflegen der einen oberen Bodenblechbahn mit seinem Seitenbereich auf einen Teil der oberseitigen Unterlegflacheisen und auf die Schicht mit Stahlgittergewebe, so dass auch der jeweils zwischen zwei benachbarten quer zur Mitte-Längsachse Q verlaufenden Reihen von oberseitigen Unterlegflacheisen angeordnete Bereich mit der von der unteren Bodenblechbahn beabstandeten oberen Bodenblechbahn überbrückt werden kann, sowie Heften des Seitenbereichs der einen oberen Bodenblechbahn an die quer zu einer Mitte-Querachse Q verlaufenden oberseitigen Unterlegflacheisen,
e. Auflegen einer weiteren oberen Bodenblechbahn auf die quer zu einer Mitte-Querachse Q verlaufenden oberseitigen Unterlegflacheisen, die andere Schicht mit Stahlgittergewebe sowie auf den Seitenbereich der einen oberen Bodenblechbahn zwecks Überlappung der Seitenbereiche im Überlappungsbereich, so dass auch der jeweils zwischen zwei benachbarten quer zur Mitte-Längsachse Q verlaufenden Reihen von oberseitigen Unterlegflacheisen angeordnete Bereich mit der von der unteren Bodenblechbahn beabstandeten oberen Bodenblechbahn überbrückt werden kann, und/oder
f. vakuumdichtes Verschweißen, vorzugsweise ohne Argonspülung, des von dem Tankboden abgewandten Seitenbereichs der weiteren oberen Bodenblechbahn mit der einen oberen Bodenblechbahn.

Nach dem erfindungsgemäßen Verfahren können aus dem Tankmantel ein Durchbruch zur Aufnahme eines Verstärkungsrohrs und aus dem oberen Bodenblech ein Durchbruch herausgefräst, über das Rohr das Verstärkungsrohr geführt und mit dem Tankmantel punktweise verschweißt, vorzugsweise geheftet, werden. Eine Verstärkungsplatte mit Durchbruch kann gegen den den Durchbruch begrenzenden Bereich des oberen Bodenblechs unterseitig angesetzt werden und ist mittels einer Schicht mit Stahlgittergewebe von einem Flacheisen, welches mit dem Tankboden oder mit einer auf dem Tankboden angeordneten GFK-Schicht vernietet ist, beabstandet und kann mit seinem dem Rohr abgewandten Randbereich mit dem Flacheisen verschweißt, wie geheftet, sein. Das untere Bodenblech kann auf dem dem Durchbruch abgewandten Randbereich des Flacheisens aufliegen und mit diesem, vorzugsweise vakuumdicht, vorzugsweise mittels WIG-Schweißverfahren ohne Zusatz, verschweißt sein.

Unter WIG-Schweißverfahren ohne Zusatz kann im Sinne der Erfindung auch das WIG-Schweißverfahren ohne Argonspülung verstanden werden. Eine weitere Schicht mit Stahlgittergewebe kann auf dem unteren Bodenblech und auf dem Abschnitt des Flacheisens zwischen dem Randbereich desselben und dem dem Durchbruch zugewandten Bereich desselben aufgelegt sein. Das obere Bodenblech, welches oberhalb des unteren Bodenblechs und oberhalb des Abschnitts des Flacheisens zwischen dem Randbereich desselben und dem dem Durchbruch zugewandten Bereich desselben aufgrund der Schicht mit Stahlgittergewebe beabstandet angeordnet ist und sich bis zu dem Durchbruch abgewandten Randbereich der Verstärkungsplatte erstreckt und auf diesem aufliegt, kann mit dem dem Durchbruch abgewandten Randbereich der Verstärkungsplatte vakuumdicht, vorzugsweise mittels WIG-Schweißverfahren, verschweißt sein. Ein Verstärkungsring kann über das Rohr geführt und gegen den den Durchbruch der Verstärkungsplatte begrenzenden Bereich derselben angesetzt und unter Bildung von vakuumdichten Schweißnähten mit der Verstärkungsplatte und dem Rohr, mittels vorzugsweise WIG-Schweißverfahren, verschweißt sein. Ein Zwischenraum wird ausgebildet von Flacheisen, Verstärkungsplatte und von den beiden voneinander beabstandeten unteren und oberen Bodenblechen, welcher auch mit dem Innenraum des Rohrs flüssigkeits- und gasmäßig verbunden sein kann. Der Zwischenraum kann mit dem des Bodensegmentes flüssigkeits- und gasmäßig verbunden sein. Die Vakuumdichtigkeit von Schweißnähten sowie die des von dem unteren und dem oberen Bodenblech gebildeten Zwischenraums als Überwachungskammer können überprüft werden durch das Anschließen des Rohrs an Einrichtungen zum Messen, Absaugen und Befüllen der Kammer.

Die Dichtigkeitsprüfung umfasst die Prüfung des Überdrucks und die zweimalige Prüfung des Randsegments. Die erste Prüfung (z.B. Überdruck 0,3 bar) zeigt größere Fehler wie Poren, Porennester, Risse, Schlackeneinschüsse usw., die zweite Prüfung (z.B. Prüfdruck 0,8 bar) zeigt sehr kleine Fehler, wie Haarrisse, Bindefehler usw. Als Prüfmittel wird Flüssigseife verwendet, welche mit Hilfe eines Handdrucksprühgerätes aufgesprüht wird, ersetzt. Zudem findet noch eine zusätzliche Vakuumprüfung statt. Ein Druckschreiber und ein Wetterschreiber werden über einen Zeitraum von 24 Stunden am Randsegment angeschlossen. Die Bodennähte des Unter- und Oberbodens werden mit Wasser und einer Vakuumglocke (z.B. Prüfdruck minus 0,8 bis 1,0 bar) geprüft und während der Gesamtprüfdauer unter dem zu prüfenden Bodensegment ein leichter Argon-Überdruck erzeugt wird. Daher ist gewährleistet, dass eine ungewollte Abdeckung von Schweißnahtfehlern durch den Schaum ausgeschlossen ist. Die klare Sicht in der Vakuumhaube und erhöhte Überdruck mittels Argon unter dem zu prüfenden Boden ermöglicht eine 100%ige Prüfung.

Nach dem erfindungsgemäßen Verfahren werden eine in einem Sprühbehälter enthaltende Flüssigkeit, welche eine Flüssigseife in einer wässrigen Lösung enthält, mittels einer handbetätigbaren Pumpe auf eine vorbestimmte Fläche einer zu überprüfenden Schweißnaht aufgesprüht, gegen die vorbestimmte Fläche einer einen Zwischenraum vakuumdicht verschließenden Schweißnaht eine Vakuumhaube angesetzt, der Innenraum der Vakuumhaube evakuiert wird, insbesondere in der Vakuumhaube ein Vakuum, vorzugsweise von -0,8 bis - 1,0 bar, erzeugt wird, welche Vakuumhaube mit einer an einen Rahmen gekoppelten Scheibe mit mindestens zwei ventilgesteuerte Öffnungen ausgebildet wird, der Zwischenraum mit Argon mit einem Prüfdruck von 0,3 bis 0,8 bar beaufschlagt und die zu überprüfende Fläche auf Blasenentstehen in der aufgesprühten Flüssigseife geprüft.

Um zu überprüfen, ob die Schweißnähte, welche zwei Blechteile miteinander vakuumdicht verbinden, hinreichend gasdicht und flüssigkeitsdicht sind, wird eine Flüssigkeit aus einem Sprühbehälter auf die Schweißnaht gesprüht. Die Flüssigkeit wird aus dem Sprühbehälter mit einer handbetriebenen Pumpe auf die vorbestimmte zu überprüfenden Fläche gesprüht. Die Flüssigkeit umfasst einen Anteil von herkömmlicher Flüssigseife in einer wässrigen Lösung. Als Flüssigseife in der wässrigen Lösung eignen sich beispielsweise Kaliumseifen mit einem Fettsäureanteil von 15 bis 20%, z.B. Kokosfettsäuren und/oder Ölsäure. Die Flüssigseife zeichnet sich insbesondere durch eine Unbrennbarkeit, hohe Umweltverträglichkeit, hinreichende biologische Abbaubarkeit und Lösemittelfreiheit aus ohne Anwesenheit von Fluor-Chlorkohlenwasserstoffe, usw. Durch die Anwesenheit ggf. zusätzlich von oberflächenaktiven Substanzen wird die Eigenschaft der Flüssigseife in der wässrigen Lösung erhöht, bereits kleine geringfügige Bläschen anzuzeigen. In einer weiteren Ausgestaltung werden auf die vorbestimmte mit der Flüssigkeit besprühte oder benetzte Fläche der Schweißnaht der Kammern des Randsegments oder der Bodensegmente werden die Kammern mit einem Überdruck beaufschlagt, so dass im Fall von Undichtigkeit Blasen in der aufgesprühten Flüssigseifelösung im Bereich der Schweißnaht auftreten.

Auf die vorbestimmte mit der Flüssigkeit besprühte oder benetzte Fläche der Schweißnaht wird eine Vakuumhaube angesetzt. In der Vakuumhaube wird ein Vakuum von 0,8 bis - 1,0 bar erzeugt, so dass im Fall von Undichtigkeit Blasen in der aufgesprühten Flüssigseifelösung auftreten. Die Vakuumhaube umfasst einen umlaufenden Rahmen mit einer herkömmlichen druck- und vakuumfesten mit dem Rahmen vakuumdicht verbundenen durchsichtigen Scheibe mit Glas oder Kunststoff. An dem Rahmen sind Durchbrüche ausgefräst, an welchen Ventile angeschlossen sind. Über die Durchbrüche kann der Innenraum der Vakuumhaube kontrolliert evakuiert oder belüftet oder mit Flüssigkeit befüllt werden. So kann gegen die vorbestimmte zu kontrollierende Fläche der Schweißnaht die Vakuumhaube angesetzt und über ein Ventil evakuiert werden. Über ein weiteres Ventil wird eine Flüssigkeit ohne Bereitstellung des Druckausgleichs in den Innenraum der Vakuumhaube überführt zwecks Prüfung auf Bläschenbildung in der Flüssigkeit.

Die Zwischenräume, hier Zwischenkammer 1 des Randsegmentes, und Zwischenkammern 2 und 3 der beiden Bodensegmente können als Überwachungsräume zur Überprüfung der Gas- und Flüssigkeitsdichtigkeit des Tankbauwerks dienen. An die Überwachungsräume können herkömmliche nach dem Unterdruckprinzip arbeitende Leckanzeiger über o.g. Stutzrohre angeschlossen werden. Beispielsweise werden als Leckanzeiger Unterdruckleckanzeiger angeschlossen, die in dem Überwachungsraum einen Unterdruck von beispielsweise 250 mbar erzeugen können.

Das erfindungsgemäße Tankbauwerk und das erfindungsgemäße Verfahren zur Bereitstellung der Dichtigkeit von im Tankboden undichten herkömmlichen Tankbauwerken zeichnen sich dadurch aus, dass
durch das Anlegen von Randsegment und den beiden miteinander benachbarten halbkreisförmigen Bodensegmente
weder der Tankboden, noch die auf dem Tankboden aufgebrachte Schicht mit glasfaserverstärktem kunststoffartigen Material beschädigt werden;
auch besteht nicht die Gefahr der Erhitzung von Tankboden und Schicht.

Ebenso zeichnen sich das erfindungsgemäße Tankbauwerk und das erfindungsgemäße Verfahren durch ein spannungsfreies Abheften und ein zuverlässiges Verschweißen der Teile der Bodensegmente und der Randsegmente mit dem Tankmantel aus.

Auch kann durch das Verwenden von Blechbahnenüberlappungen, beispielsweise der Überlappungen von oberen Blechbahnen, die Anbringung von Quernähten, zusätzlichen Schweißarbeiten, zusätzlichen Wärmeeinbringungen, usw. vermieden werden.

Ebenso wird der Prüfumfang der Quernähte deutlich verringert.

Auch erweisen sich das erfindungsgemäße Tankbauwerk und das erfindungsgemäße Verfahren von Vorteil, weil bei Anbringung von Prüf-, Saug- und Messstutzen zusätzliche Halterungen am äußeren Tankmantel überflüssig sind. Zudem eignen sich die erfindungsgemäße Kammerüberwachungsanordnung Tankbauwerk und das erfindungsgemäße Verfahren für Tankbauwerke, die metallene Werkstoffe, wie Eisen- oder Stahllegierungen, nicht metallene Werkstoffe, wie kunststoffartige, oder Mischungen derselben enthalten oder mit solchen hergestellt sind. Die erfindungsgemäße Kammerüberwachungsanordnung und das erfindungsgemäße Tankbauwerk zeichnen sich durch eine hohe Stabilität aus, so dass der Einbau der erfindungsgemäßen Kammerüberwachungsanordnung in das herkömmliche Tankbauwerk die Stabilität des Tankmantels und damit die des Tankbauwerks nicht beeinträchtigt. Im Gegensatz zu den herkömmlichen Abdichtungsvorrichtungen kann die Kraftbeaufschlagung des Tankmantels durch z.B. die Abstützung auf den Tankboden derart verringert werden, dass nach Einbau der erfindungsgemäßen Kammerüberwachungsanordnung Risse und Spalten weder in dem Tankmantel, in dem Übergangsbereich von Tankmantel zu Tankboden noch in dem Tankboden nicht auftreten. Die Ableitung der Kräfte in Richtung zu dem Tankboden und Verringerung der Kraftbeaufschlagung des Tankmantels werden durch
die besondere Ausbildung des von dem Randsegment ausgestalteten L-förmigen Zwischenraums,
der besonderen Verbindung des Randsegmentes an das oder die Bodensegmente,
die besondere Ausbildung des Bodensegmentes mit zwei voneinander beabstandeten Bodenblechen,
die besondere Ausbildung des Bodensegmentes im Bereich der Kammertrennung
die besondere Ausbildung des Bodensegmentes im Bereich der Bahnentrennungm
im Vergleich zu den herkömmlichen Abdichtungsvorrichtungen gefördert.

Das Anbringen von Schweißnähten zwischen Tankmantel und Stutzenrohr kann vermieden werden durch Verwendung einer Verstärkungshülse oder eines Verstärkungsrohrs.

Auch können die Verschweißungen mit Hilfe des WIG-Schweißverfahrens ohne Argonspülung durchgeführt werden.

Zudem vermeidet das erfindungsgemäße Verfahren zur zuverlässigen Überprüfung von Undichtigkeiten von Schweißnähten die Beaufschlagung der Kammer des Randsegmentes mit Überdruck und Abschäumen mit einem herkömmlichen Lecksuchspray als Schaum.

Ebenso wird durch das erfindungsgemäße Verfahren vermieden, dass der auf die zu überprüfende Stelle aufgesprühte Schaum des Lecksuchsprays durch Ungeschicklichkeit des Benutzers weggeblasen wird.

Ebenfalls berücksichtigt das erfindungsgemäße Verfahren das Verbot der Verwendung des Treibmittels FCKW und der Verwendung von einem in einem Sprühbehälter mit einem Druck beaufschlagten Lecksuchschaum in einem geschlossenen Raum durch Verwendung eines Handsprühgerätes, welches eine mittels handbetätigtbare Pumpe umfasst.

Durch die Verwendung einer Vakuumhaube in dem erfindungsgemäßen Verfahren wird die vorbestimmte Fläche überprüft und die durch Ungeschicklichkeit des Benutzers ungewollte Abdeckung von Schweißnahtfehlern vermieden.

Gleichfalls zeichnet sich das erfindungsgemäße Verfahren durch die Reparatur sowohl von Tankböden von Tankbauwerken ohne und mit einer Schicht mit glasfaserverstärkten kunststoffartigen Materialien aus.

Die Bodenblechbahnen können in Form von Rollen aufgerollt angeliefert, in das Tankbauwerk verbracht und leicht in diesem verlegt werden, zumal die Dicke D 1 der unteren Steh- oder Liegeblechbahn, der oberen Steh- oder Liegeblechbahn dem 3Fachen der Dicke D2 einer unteren oder oberen Bodenblechbahn entsprechen kann.

Hinzutretend vermeidet das erfindungsgemäße Verfahren die kostenträchtige und gesundheitsschädliche Entfernung der Schicht mit glasfaserverstärkten kunststoffartigen Materialien.

Die Vorteile des erfindungsgemäßen Verfahrens sind darüber hinaus Verbleib der Schicht mit dem glasfaserverstärkten kunststoffartigen Material in dem Tankbauwerk,
Vermeidung der Kosten zur Entfernung und Entsorgung derselben,
Vermeidung des Sandstrahlens des Tankbodens,
Vermeidung der Überprüfung auf Dichtigkeit des Tankbodens, Vermeidung von Reparaturen und Nachprüfungen des Tankbodens,
Vermeidung der Bereitstellung von Montageöffnungen in der Tankmantelwand zwecks Einbringung von großflächigen Bodenblechen,
Vermeidung einer neuen Beschichtung der Oberseite des einzubringenden Doppelbodens durch Verwendung von Edelstahldoppelboden und
Vermeidung der gesundheitlichen Beeinträchtigung und der Brandgefahr.
Ebenso vermeidet das erfindungsgemäße Verfahren
das in einem herkömmlichen Sanierungsverfahren erforderliche Einbringen der Betonschicht auf die Schicht mit glasfaserverstärktem kunststoffartigen Material,
das Einbringen des neuen Doppelbodens und zusätzlicher Oberflächenbeschichtung desselben auf die Schicht mit glasfaserverstärktem kunststoffartigen Material,
die erforderliche Verkürzung der an der Schwimmdecke innenseitig angebrachten Schwimmdachfüße,
Kosten zur Einbringen der Betonschicht,
und
Kosten für Umbau von Messanlagen, die erforderlich sind, aufgrund der Erhöhung des Tankbodenniveaus.

Das Randsegment umfasst den unteren Teil, welches das untere Liegeblech und das untere Stehblech aufweist, und den oberen Teil, welches das obere Liegeblech und das obere Stehblech aufweist. In einer weiteren Ausführungsform können in einem vorbestimmten Abstand von dem Tankmantel vorgefertigte Flacheisen mit Nieten, vorzugsweise Edelstahlnieten, im inneren Randbereich BX des Tankbehälters und des Tankbodens umlaufend auf die Schicht mit glasfaserverstärktem kunststoffartigen Material vernietet werden. Da bei herkömmlichen Tankbauwerken die Schicht mit glasfaserverstärkten kunststoffartigen Materialien im Randbereich geneigt sein kann, so dass die Oberseite der Schicht von dem inneren Randbereich BX des Tankbehälters in Richtung hin zu dem äußeren Rand B bzw. zu dem Tankmantel hin ansteigt, ist es von Vorteil, eine Betonschicht in diesem Bereich auf die Oberseite der GFK-Schicht aufzubringen, welche im Längsschnitt als Betonkeil ausgebildet ist. Die Betonschicht dient als Auflage für das untere Liegeblech. Die Betonschicht ist umlaufend um die Mitte-Längsachse M des hohlzylindrischen Tankmantels oder den Kreismittelpunkt des kreisbogenförmigen Tankbodens angeordnet und verläuft in der Draufsicht ringförmig. Die gegen den Tankmantel und den Tankboden angegossene Betonschicht enthält eine herkömmliche Zusammensetzung.

In dem dem Tankmantel zugewandten oberen Bereich der Betonschicht ist eine um den die Mitte-Längsachse M ringförmig verlaufende Kehle eingezogen; nach dem Aushärten der Betonschicht wird eine Feuerschutzdecke auf die Kehle und gegen die der Kehle zugewandte Innenseite des Tankmantels L-förmig gelegt und mit diesen verklebt. Auf die Feuerschutzdecke wird eine Aluminiumfolie L-förmig gelegt und mit dieser verklebt. Die Feuerschutzdecke und die Aluminiumfolie bilden die L-förmige Zweischichtenanordnung. Die Feuerschutzdecke und die Aluminiumfolie können als Feuer- und Wärmeschutz beim Schweißen der Kehlnaht bzw. Schweißnaht zwischen dem unteren Liegeblech und dem unteren Stehblech dienen, um ein Entzünden des glasfaserverstärkten kunststoffartigen Materials der Schicht zu vermeiden. Das untere Liegeblech, das untere Stehblech, das obere Stehblech und das obere Liegeblech werden aus Bahnen oder Segmenten jeweils zusammengesetzt, die als untere Liegeblechbahnen, untere Stehblechbahnen, obere Stehblechbahnen und obere Liegeblechbahnen bezeichnet werden. Die benachbarten Bahnen eines Blechs, wie eines Stehblechs oder eines Liegeblechs, liegen mit den Kanten ihrer angrenzenden Seiten Stoß an Stoß einander an, wobei die eine Bahn die benachbarte mit einem an ihrer Rückseite angeschweißten plattenförmigen Flacheisen zumindest teilweise untergreifen kann. So kann vor der Montage des unteren Liegeblechs und des unteren Stehblechs, als auch des oberen Stehblechs und des oberen Liegeblechs gegen deren dem Tankboden zugewandten Seite, Rückseite genannt, von jeder Bahn oder Blech ein Flacheisen angelegt und zur Bereitstellung einer Schweißbadsicherung mit der Rückseite verschweißt, z.B. punktweise verschweißt, vorzugsweise geheftet oder verheftet, werden.

Die vorgefertigten Liegebleche können als untere Liegeblechbahnen auf die Betonschicht Fläche auf Fläche ausgelegt werden, wobei beispielsweise jeweils zwei benachbarte gleichartig ausgebildete untere Liegeblechbahnen mit ihren einander angrenzenden Seiten bzw. deren Kanten Stoß auf Stoß unter Ausbildung einer Stoßstelle einander anliegen, auf dem über die Seite der einen unteren Liegeblechbahn hinaus hervorragenden Teil des Flacheisens die benachbarte andere gleichartig ausgebildete untere Liegeblechbahn zumindest teilweise aufliegt und im Bereich der Stoßstelle die andere Liegeblechbahn mit der einen Liegebahn an das Flacheisen der einen Liegeblechbahn punktweise verschweißt, vorzugsweise geheftet, werden können. Das Heften erfolgt vorteilhafterweise erst nach dem Abschluss des Ver- oder Auslegens aller erforderlichen unteren Liegeblechbahnen.

Vorgefertigte Stehbleche werden als untere Stehblechbahnen gegen den Tankmantel und gegen die unteren Liegeblechbahnen unter Bildung eines Winkels γ mit dem Tankmantel angesetzt, wobei jeweils zwei gleichartig ausgebildete benachbarte untere Stehblechbahnen mit ihren einander angrenzenden Seiten bzw. deren Kanten Stoß auf Stoß unter Ausbildung einer Stoßstelle anliegen, auf dem über die Seite der einen unteren Stehblechbahn hinaus hervorragenden Teil des plattenförmigen Flacheisens die benachbarte andere gleichartig ausgebildete untere Stehblechbahn zumindest teilweise aufliegen und im Bereich der Stoßstelle die andere untere Stehblechbahn an die eine Stehblechbahn oder an das Flacheisen der einen unteren Stehblechbahn punktweise verschweißt, vorzugsweise geheftet, werden können. In dem Bereich, an welchem die unteren Stehblechbahnen gegen die unteren Liegeblechbahnen angesetzt sind, können die unteren Stehblechbahnen mit den unteren Liegeblechbahnen punktweise miteinander verschweißt, vorzugsweise geheftet werden. Das Heften erfolgt vorteilhafterweise erst nach dem Verlegen aller erforderlichen unteren Stehblechbahnen.

Anschließend können die jeweils im Bereich der Stoßstellen einander angrenzenden Seiten oder deren Kanten der unteren Liegeblechbahnen unter Bildung von Stoßnähten, vorzugsweise mit Hilfe eines WIG-Schweißverfahrens, vakuumdicht verschweißt, werden, ohne dass eine Argonspülung erforderlich ist, und die jeweils einander angrenzenden Seiten oder deren Kanten der unteren Stehblechbahnen unter Bildung von Stoßnähten, vorzugsweise mit Hilfe eines WIG-Schweißverfahrens, vakuumdicht verschweißt, ohne dass eine Argonspülung erforderlich ist.

Unter WIG-Schweißverfahren wird auch im Sinne der Erfindung verstanden ein Wolfram-Inertgasschweißen.

Danach kann das Verschweißen der äußeren Randbereiche, auch Ansatzstellen genannt, der unteren Stehblechbahnen mit dem Tankmantel, insbesondere mit Hilfe des Schweißverfahrens mit Elektrode, erfolgen, ohne dass eine Argonspülung erforderlich ist. Daraufhin kann der Bereich, auch Ansatzstelle genannt, an welchem die unteren Stehblechbahnen gegen die unteren Liegeblechbahnen angesetzt und miteinander geheftet sind, unter Bildung einer Schweiß- oder Verbindungsnaht vakuumdicht verschweißt werden, vorzugsweise durch ein Schweißverfahren mit Elektrode. Danach werden die Schweißnähte gesäubert, insbesondere gebürstet, und zur Dichtheitsprüfung vorbereitet. Nach erfolgter Prüfung wird das untere Liegeblech des unteren Teils des Randsegmentes an Abstandshalter geheftet.

Die Montage und das Verschweißen erfolgt in der oben bereits ausgeführten Vorgehensweise wie bei der Montage des unteren Liegeblechs und des unteren Stehblechs des unteren Teils des Randsegmentes, wobei auch die vakuumdichte Schweiß- oder Verbindungsnaht zwischen dem inneren Randbereich des oberen Stehblechs mit dem oberen Liegeblech bereitgestellt wird.

Die vorgefertigten Liegebleche können als obere Liegeblechbahnen gegen die unteren Liegeblechbahnen und die Abstandshalter angesetzt werden, wobei jeweils zwei benachbarte gleichartig ausgebildete obere Liegeblechbahnen mit ihren einander angrenzenden Seiten bzw. deren Kanten Stoß auf Stoß unter Ausbildung einer Stoßstelle einander anliegen, auf dem über die Seite der einen oberen Liegeblechbahn hinaus hervorragenden Teil des plattenförmigen Flacheisens die benachbarte andere obere Liegeblechbahn zumindest teilweise aufliegen und die andere obere Liegeblechbahn an das Flacheisen der einen oberen Liegeblechbahn punktweise verschweißt, vorzugsweise geheftet, werden können. In dem Bereich, an welchem die oberen Liegeblechbahnen gegen die unteren Liegeblechbahnen angesetzt sind, können die oberen Liegeblechbahnen mit den unteren Liegeblechbahnen punktweise miteinander verschweißt, vorzugsweise geheftet werden. Das Heften erfolgt vorteilhafterweise erst nach dem Verlegen aller erforderlichen unteren Stehblechbahnen.

Vorgefertigte Stehbleche werden als obere Stehblechbahnen gegen den Tankmantel und gegen die oberen Liegeblechbahnen unter Bildung eines Winkels δ mit dem Tankmantel als Ansatzstelle angesetzt, wobei jeweils zwei benachbarte gleichartig ausgebildete obere Stehblechbahnen mit ihren einander angrenzenden Seiten bzw. deren Kanten Stoß auf Stoß unter Ausbildung einer Stoßstelle anliegen, auf dem über die Seite der einen oberen Stehblechbahn hinaus hervorragenden Teil des plattenförmigen Flacheisens die benachbarte andere obere Stehblechbahn zumindest teilweise aufliegen und die andere obere Stehblechbahn an das Flacheisen der einen oberen Stehblechbahn punktweise verschweißt, vorzugsweise geheftet, werden können. In dem Bereich, an welchem die oberen Stehblechbahnen gegen die oberen Liegeblechbahnen als Ansatzstelle angesetzt sind, werden die oberen Stehblechbahnen mit den oberen Liegeblechbahnen punktweise miteinander verschweißt, vorzugsweise geheftet.

Anschließend können die jeweils im Bereich der Stoßstellen einander angrenzenden Seiten oder deren Kanten der oberen Liegeblechbahnen unter Bildung von Stoßnähten, vorzugsweise mit Hilfe eines WIG-Schweißverfahrens, vakuumdicht verschweißt werden, ohne dass eine Argonspülung erforderlich ist, und die jeweils einander angrenzenden Seiten oder deren Kanten der oberen Stehblechbahnen unter Bildung von Stoßnähten, vorzugsweise mit Hilfe eines WIG-Schweißverfahrens, vakuumdicht verschweißt werden, ohne dass eine Argonspülung erforderlich ist. Daraufhin kann der Bereich, an welchem die oberen Liegeblechbahnen gegen die unteren Liegeblechbahnen angesetzt und miteinander punktweise verschweißt, vorzugsweise geheftet, sind, unter Bildung einer Schweiß- oder Verbindungsnaht oder Stoßnaht, vorzugsweise durch Schweißverfahren mit Elektrode , vakuumdicht verschweißt werden. Danach werden die Schweißnähte gesäubert, insbesondere gebürstet, und zur Dichtheitsprüfung vorbereitet und auf Dichtigkeit geprüft.

Danach kann das Verschweißen der äußeren Randbereiche der oberen Stehblechbahnen mit dem Tankmantel mit Hilfe des Schweißverfahrens mit Elektrode, erfolgen, ohne dass eine Argonspülung erforderlich ist. Daraufhin kann der Bereich, an welchem die oberen Stehblechbahnen gegen die oberen Liegeblechbahnen angesetzt und miteinander punktweise verschweißt, vorzugsweise geheftet, sind, unter Bildung einer Schweiß- oder Verbindungsnaht oder Stoßnaht, vorzugsweise durch Schweißverfahren mit Elektrode, vakuumdicht verschweißt werden. Danach werden die Schweißnähte gesäubert, insbesondere gebürstet, und zur Dichtheitsprüfung vorbereitet und auf Dichtigkeit geprüft.

Durch die Bereitstellung des umlaufenden Randsegmentes mit den unteren und den oberen Liegeblechbahnen und den unteren und oberen Stehblechbahnen wird die Zwischenkammer 1 des Randsegmentes als Überprüfungskammer bereitgestellt, deren Dichtigkeit mit Hilfe des Mess-, Saug- und Prüfstutzens überprüft werden kann.

Die Positionen der Mess-, Saug- und Prüfstutzen z.B. dieser Kammer wird festgelegt. In einer weiteren Ausführungsform des erfindungsgemäßen Verfahrens kann anschließend ein Durchbruch durch den Tankmantel für das Rohr, auch Stutzenrohr genannt, gefräst werden. Der vorgefertigte Saug-, Mess- und Prüfstutzen für diese Kammer kann mit dem dem Durchbruch des Tankmantels begrenzenden Bereich miteinander punktweise verschweißt, vorzugsweise geheftet werden, vorzugsweise mittels WIG-Schweißverfahren. Gleichfalls wird ein Durchbruch aus dem oberen Liegeblech herausgefräst und das untere Ende des Stutzenrohrs kann mit dem Bereich des den Durchbruch begrenzenden oberen Liegeblechs vakuumdicht verschweißt werden, vorzugsweise mittels WIG-Schweißverfahren ohne Argonspülung. Ein Verstärkungsring kann über das Stutzenrohr geschoben und gesetzt werden, welcher sowohl mit dem oberen Liegeblech als auch mit dem Stutzenrohr, vorzugsweise mittels WIG-Schweißverfahren ohne Argonspülung, verschweißt werden kann. Die Schweißnähte werden gesäubert, gebürstet und geprüft. Nach einem herkömmlichen Verfahren werden der Mess-, Saug- und Prüfstutzen mit einem Blinddeckel verschlossen und an das Stutzenrohr ein herkömmlicher nach dem Unterdruckprinzip arbeitender Leckanzeiger, vorzugsweise ein Vakuumschreiber mit zusätzlichem Wetterschreiber, und eine Vakuumpumpe zur Erzeugung von - 600mbar angeschlossen.

Auch kann der vorgefertigte Saug-, Mess- und Prüfstutzen als ein Rohr mit einem Edelstahlmaterial mit einer Rohrwanddicke von 1 " ausgebildet sein, um eine Heftung des Edelstahlrohrs an dem Tankmantel zu vermeiden; vor dem ggf. Biegen des Rohrs wird die Verstärkungshülse auf das Edelstahlrohr geschoben und die Verstärkungshülse mit dem Rohr verschweißt (mit Hilfe des WIG-Schweißverfahrens).

In einer weiteren Ausführungsform des erfindungsgemäßen Verfahrens können die beiden Bodensumpfbehälter, welche voneinander beabstandet sind, an Kragenbleche, vorzugsweise mittels WIG-Schweißverfahren, angeschweißt, gesäubert und geprüft werden. Anschließend kann das untere Kragenblech, an dessen Unterseite der obere Rand des unteren Bodensumpfbehälters und an dessen dem oberen Bodensumpfbehälter zugewandten Rand der obere Rand des oberen Bodensumpfbehälters angeschweißt sind, unterseitig mit der Dreischichtenanordnung versehen und mit dem Tankboden und der Schicht vernietet werden. Die Schichtanordnung umfasst als obere Lage eine Aluminiumfolie, eine mittlere Lage mit Stahlgittergewebe und eine untere Schicht mit Aluminiumfolie. Diese Dreischichtenanordnung, auch Schichtenanordnung genannt, dient zur Beabstandung des unteren Kragenblechs von der Schicht mit dem glasfaserverstärkten kunststoffartigen Material und schützt vor der Einwirkung der Wärme, die von nachfolgenden Schweißarbeiten erzeugt wird, um Brand- und Gesundheitsgefahren durch Entstehen der Schweißgase auszuschließen. Auch an den dem Bodensumpfbehälter zugewandten Rand des oberen Kragenblechs kann der obere Rand des oberen Bodensumpfbehälters, vorzugsweise mittels WIG-Schweißverfahren, angeschweißt werden. Zwischen dem oberen Kragenblech und dem unteren Kragenblech kann eine Schicht mit verzinktem Stahlgittergewebe angeordnet und mit Klebeband fixiert werden. Der in dem Tankboden eingelassene untere Bodensumpfbehälter mit dem unteren Kragenblech kann den oberen Bodensumpfbehälter aufnehmen. Die den Bodensumpfbehältern abgewandten Ränder der unteren und der oberen Kragenbleche können miteinander mittels WIG-Schweißverfahren, vorzugsweise punktweise verschweißt, also geheftet werden.

Die Montage der Auflagen für die Schwimmdachfüße wird mit zwei Hydraulikpressen durchgeführt. Jeder Schwimmdachfuß wird in Richtung zu dem Schwimmdach hoch gedrückt und die Auflagebleche für die Schwimmdachfüße mit dem oberen und unteren Bodenblech entsprechend der Anordnung der Bodensümpfe auf der Schicht mit glasfaserverstärktem kunststoffartigen Material montiert. Die Montage der Verstärkungsplatten der Saug-, Messund Prüfstutzen der Zwischenkammern der Bodensegmente kann baugleich entsprechend der Montage der Bodensümpfe und Auflagen erfolgen (siehe unten). Als sogenannte Schweißbadsicherung kann an der dem Tankboden zugewandten Rück- oder Unterseite von jedem bodenseitigen Unterlegflacheisen ein plattenförmiges Flacheisen punktweise angeschweißt, vorzugsweise angeheftet, werden, welche zur Trennung der Bahnen und/oder zur Kopplung der Bodenblechbahnen eines Bodensegmentes verwendet werden können, so dass ein Teil des Flacheisens über die Seite des bodenseitigen Unterlegflacheisens hinausragt und der vorstehende Teil zur flächigen Auflage eines benachbarten Unterlegflacheisens bei Verlegung derselben in Reihe und Stoß an Stoß dient. Als sogenannte Schweißbadsicherung kann auch an der dem Tankboden zugewandten Rück- oder Unterseite von jedem bodenseitigen Unterlegflacheisen für die Kammertrennung von zwei Bodensegmenten und/oder zur Kopplung der inneren Randbereiche von zwei Bodensegmenten ein plattenförmiges Flacheisen punktweise angeschweißt, vorzugsweise angeheftet, werden, wobei ein Teil des Flacheisens über die Seite des einen bodenseitigen Unterlegflacheisens hinausragt und der vorstehende Teil zur Auflage eines benachbarten Unterlegflacheisens dient.

Von der Achse 0°/360° können in Richtung Achse 180° auf der Schicht mit dem glasfaserverstärktem kunststoffartigen Material in Reihe die Unterlegflacheisen, auch Bleche oder Bodenflacheisen genannt, der Kammertrennung mit einer Dreischichtenanordnung, welche eine äußere Schicht mit Aluminiumfolie, eine innere Schicht mit Stahlgittergewebe und eine äußere Schicht mit Aluminiumfolie umfasst, als Unterbau Stoß an Stoß auf die GFK-Schicht verlegt werden, so dass der vorstehende Teil des Flacheisens des einen Unterlegflacheisens das benachbarte Unterlegflacheisen unterzugreifen und das benachbarte Unterlegflacheisen flächig zumindest teilweise oder vollflächig auf diesen aufzuliegen vermag. Die Unterlegflacheisen können mit der unter den Unterlegflacheisen angeordneten Dreischichtenanordnung, der GFK-Schicht und dem Tankboden vernietet und an den unteren Teil des Randsegments angepasst, ggf. verkürzt, und mit den unteren Liegeblechbahnen verschweißt werden.

Danach können nach dem gleichen Prinzip mehrere parallele Reihen von in Reihe angeordneter Unterlegflacheisen, auch Bleche oder Bodenflacheisen genannt, der Bahnentrennung bzw. Überlappung derselben 90° versetzt zu den Unterlegflacheisen zur Kammertrennung auf der Dreischichtenanordnung, die auf der Schicht mit dem glasfaserverstärkten kunststoffartigen Material aufliegt, als Unterbau in Richtung Achse 90° und 270° Stoß an Stoß verlegt werden, so dass die Flacheisen die benachbarten Unterlegflacheisen untergreifen und flächig an diesen anliegen. Die Unterlegflacheisen können mit der Dreischichtenanordnung, der GFK-Schicht und dem Tankboden vernietet, an den unteren Teil des Randsegments angepasst, ggf. verkürzt, und /oder mit den unteren Liegeblechbahnen verschweißt werden.

Bei Kollision der Unterlegflacheisen mit dem Bodensumpf, den Auflagen für die Schwimmdachfüße und den Verstärkungsplatten der Saug-, Mess- und Prüfrohre der Kammern 2 und 3 werden die Unterlegflacheisen angepasst, und an das entsprechende Bauteil des unteren Bodens angeschweißt. Anschließend können alle Stoßstellen, -nähte und Schweißnähte der Kammertrennung und Bahnentrennung verschweißt, vorzugsweise mittels WIG-Schweißverfahren ohne Argonspülung verschweißt und gebürstet werden. Das Prüfen der Schweißnähte erfolgt erst im Zusammenhang mit der kompletten Unterbodenprüfung.

Die in der Werkstatt vorgefertigten unteren Bodenblechbahnen können auf den bodenseitigen Unterlegflacheisen der Bahnentrennung ausgerollt werden. Im Bereich der Auflagebleche der Schwimmdachfüße, werden Löcher eingeschnitten, so dass eine Überlappung über die Auflagebleche erfolgen kann. Im Bereich der Verstärkungsplatten der Saug-, Mess- und Prüfrohre wird eine Öffnung geschnitten. Beim Bodensumpf erfolgt der Anschluss durch Schneiden eines Lochs, so dass eine Überlappung erfolgen kann. Auf der Kammertrennung überlappt das Bodenblech, auf der Bahnentrennung und auf dem unteren Randsegment in vorbestimmter Weise.

Jede untere Bodenblechbahn kann nunmehr umlaufend punktweise verschweißt, vorzugsweise geheftet mit einer WIG-Spezialpunktpistole, z.B. mit Punktabstand von 10 bis 15 mm, ohne Schweißzusatz gepunktet bzw. geheftet werden.

Danach wird der komplette Unterboden WIG-verschweißt, indem die unteren Bodenblechbahnen mit den bodenseitigen Unterlegflacheisen, vorzugsweise mittels eines WIG-Schweißverfahrens ohne Argonspülung sowohl bei Kammertrennung als auch bei Bahnentrennung vakuumdicht verschweißt oder durchgeschweißt werden. Jetzt werden alle Schweißnähte gesäubert, gebürstet und zur Dichtheitsprüfung vorbereitet.

Nach erfolgter Dichtheitsprüfung kann die Montage Kammertrennung und Bahnentrennung des oberen Bodenblechs beginnen. Bei den oberseitigen Unterlegflacheisen der Kammertrennung können an der Rückseite von jedem Unterlegflacheisen ein plattenförmiges Flacheisen als Schweißbadsicherung angeheftet werden. So kann als sogenannte Schweißbadsicherung an der dem Tankboden zugewandten Rück- oder Unterseite von jedem oberseitigen Unterlegflacheisen ein Flacheisen punktweise angeschweißt, vorzugsweise angeheftet, werden, so dass ein Teil des Flacheisens über die Seite des oberseitigen Unterlegflacheisens um ein Maß hinausragt und der vorragende Teil zur flächigen Auflage eines benachbarten oberseitigen Unterlegflacheisens bei Verlegung derselben in Reihe und Stoß an Stoß dient.

Bei den Flacheisen der Bahnentrennung entfällt diese Schweißbadsicherung, da diese durch Überlappung des oberen Bodenblechs nicht erforderlich ist. Diese Stöße werden nur geheftet.

Jetzt können sowohl die oberseitigen Unterlegflacheisen der Kammertrennung mit Schweißbadsicherung als auch die oberseitigen Unterlegflacheisen der Bahnentrennung mittig auf die jeweiligen bodenseitigen Unterlegflacheisen geheftet und an den oberen Teil des Randsegments, oder an Flacheisen des Randsegmentes sowie den Bauteilen des oberen Bodens (Bodensumpf, Auflage für Schwimmdachfüße, Verstärkungsplatten der Saug-, Mess- und Prüfrohre Kammer 2 und 3) angepasst werden; die oberseitigen Unterlegflacheisen der Kammertrennung können nur auf der einen z.B. der Kammer 2 zugewandten Seite mit dem bodenseitigen Unterlegflacheisen vakuumdicht verschweißt, wie komplett durchgeschweißt, hingegen die andere der Kammer 2 abgewandte Seite der oberseitigen Unterlegflacheisen kann mit den bodenseitigen Unterlegflacheisen punktweise verschweißt, vorzugsweise geheftet, werden. Damit ist die Trennung der beiden Kammern hergestellt; die oberseitigen Unterlegflacheisen der Bahnentrennung verbleiben nur mit den bodenseitigen Unterlegflacheisen geheftet.

Nunmehr kann die Montage des oberen Bodens mit Bahnentrennung und Kammertrennung beginnen. Die vorgefertigten Blechbahnen des oberen Bodenblechs können nach folgendem Verfahren ausgelegt werden. Auf die eine den oberseitigen Unterlegflacheisen benachbarte erste untere Bodenblechbahn kann eine Schicht mit verzinktem Stahlgitter von einer Rolle abgerollt, zugeschnitten und mit Klebeband auf der ersten unteren Bodenblechbahn fixiert werden. Eine erste zugeschnittene obere Bodenblechbahn kann auf dieser Schicht und dem oberseitigen Unterlegflacheisen ausgerollt werden, so dass ein Teil der oberseitigen Unterlegflacheisen von der ersten oberen Bodenblechbahn überlappt werden kann; z.B. können auch in die Schicht und in die obere Bodenblechbahn an den Auflageblechen der Schwimmdachfüße Löcher eingeschnitten werden, so dass eine Überlappung über die Auflagebleche erfolgen kann. Bei den Verstärkungsplatten der Saug-, Mess- und Prüfrohre wird eine Öffnung geschnitten mit Überlappung. Beim Bodensumpfbehälter erfolgt der Anschluss durch Schneiden eines Lochs, so dass eine Überlappung erfolgen kann.

Jetzt kann umlaufend die erste obere Bodenblechbahn mit den oberseitigen Unterlegflacheisen und mit den Teilen, auf denen die erste obere Bodenblechbahn aufliegt, punktweise verschweißt, vorzugsweise geheftet, werden, zum Beispiel mit einer WIG-Spezialpunktpistole, z.B. mit einem Punktabstand von 10 bis 15 mm, ohne Schweißzusatz zwecks Sicherstellung deren Lageausrichtung.

Auf die andere auch auf den oberseitigen Unterlegflacheisen in derselben Weise aufliegende benachbarte untere Bodenblechbahn kann gleichfalls eine Schicht mit verzinktem Stahlgitter von einer Rolle abgerollt, zugeschnitten und mit Klebeband auf der unteren Bodenblechbahn fixiert werden. Eine andere zugeschnittene obere Bodenblechbahn kann auf der Schicht und die oberseitigen Unterlegflacheisen ausgerollt werden, so dass ein Teil der ersten oberen Bodenblechbahn bzw. der Seitenbereich derselben von dem Seitenbereich der anderen oberen Bodenblechbahn überlappt wird; eine Überlappung der anderen liegt mit der ersten oberen Bodenblechbahn vor.

Bei der Ausgestaltung der Kammertrennung können die oberen Bodenblechbahnen des einen Bodensegmentes im inneren Randbereich des einen Bodensegments und die oberen Bodenblechbahnen des zweiten Bodensegmentes im inneren Randbereich des zweiten Bodensegments jeweils zum Teil auf den oberseitigen Unterlegflacheisen voneinander beabstandet aufliegen. Zwecks Sicherstellung deren Lageausrichtung werden diese mit den oberseitigen Unterlegflacheisen geheftet.

Nach der Heftung können die andere obere Bodenblechbahn mit der ersten oberen Bodenblechbahn, ggf. auch mit den Teilen, auf denen die andere obere Bodenblechbahn aufliegt, vakuumdicht verschweißt, vorzugsweise mittels WIG-Verfahren ohne Argonspülung verschweißt und die oberen Bodenblechbahnen des einen Bodensegmentes im inneren Randbereich des einen Bodensegments und die oberen Bodenblechbahnen des zweiten Bodensegmentes im inneren Randbereich des zweiten Bodensegments vakuumdicht verschweißt, vorzugsweise mittels WIG-Verfahren ohne Argonspülung verschweißt, werden.

Die Weiterverarbeitung erfolgt wie beschrieben. Nach dieser Vorgehensweise wird das komplette obere Bodenblech ausgelegt, gepunktet und verschweißt. Jetzt werden alle Schweißnähte gesäubert, gebürstet und zur Dichtheitsprüfung vorbereitet. Nach erfolgter Dichtheitsprüfung erfolgt die Montage der Saug-, Mess- und Prüfleitungen der Zwischenkammern der Bodensegmente. Die in der Werkstatt vorgefertigten Saug-, Mess- und Prüfstutzen für Zwischenkammern der Bodensegmente können in die Tankmantelwand eingeheftet werden. Am Boden können die Rohre an die obere Verstärkungsplatte angeschweißt und anschließend kann ein Verstärkungsring sowohl auf der Verstärkungsplatte als auch mit dem Stutzenrohr verschweißt werden. Alle Nähte werden gebürstet und geprüft. Die Prüfstutzen können mit Blinddeckeln verschlossen werden. Am Messstutzen kann ein Vakuumschreiber mit zusätzlichem Wetterschreiber angeschlossen werden. Nach erfolgter Prüfung auf Dichtigkeit wird die komplette Montage des Oberbodens bzw. Bodensegmentes abgeschlossen.

### Ausführungsbeispiele

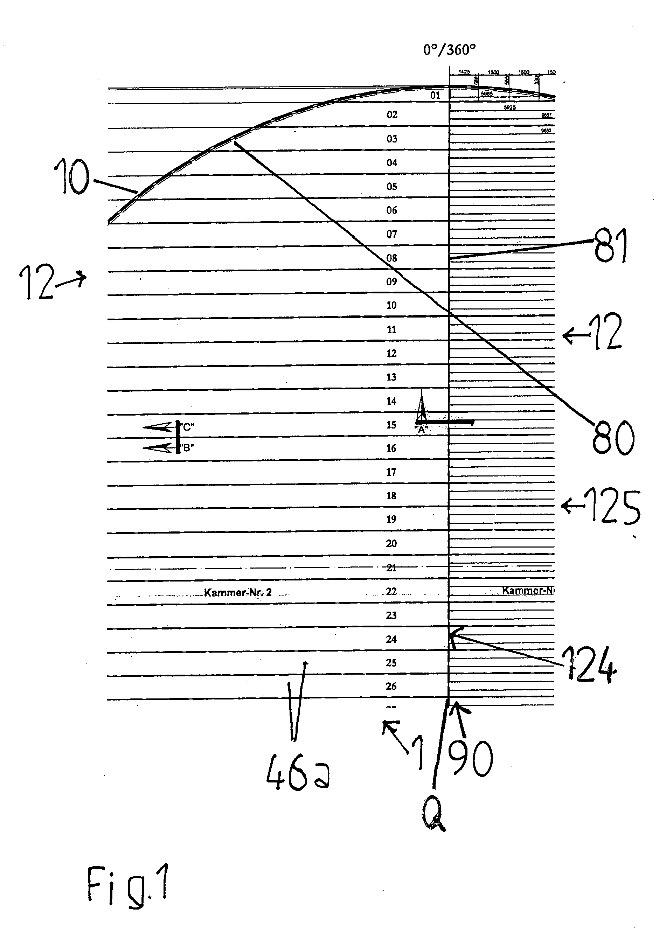

Die Zeichnungen zeigen aufgrund einer zeichnerischen Vereinfachung in schematischer, stark vergrößerter Weise, ohne Anspruch auf eine maßstabsgetreue Wiedergabe in
Fig. 1 Draufsicht auf einen Teil des Tankbodens des erfindungsgemäßen Tankbauwerks,

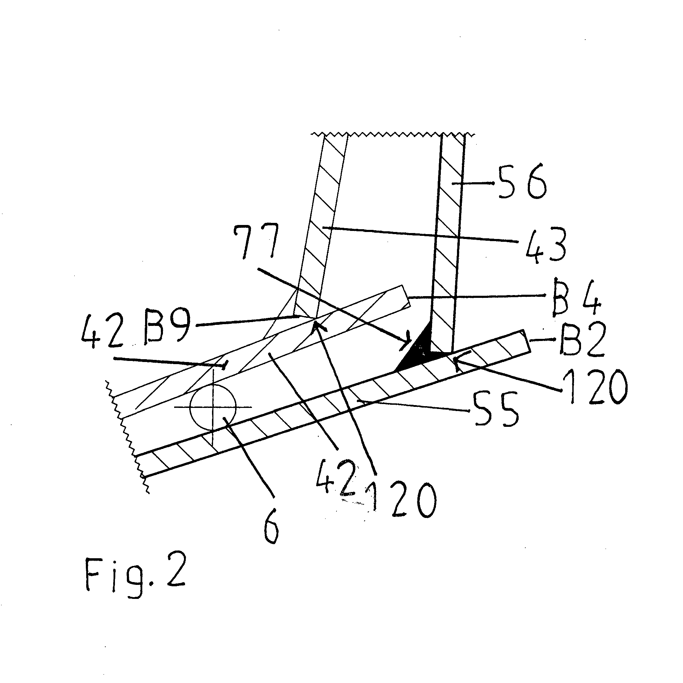

Fig. 2 Längsschnitt durch die Ansatzstellen der äußeren Randbereiche der Liegebleche mit den Stehblechen von Randsegment,

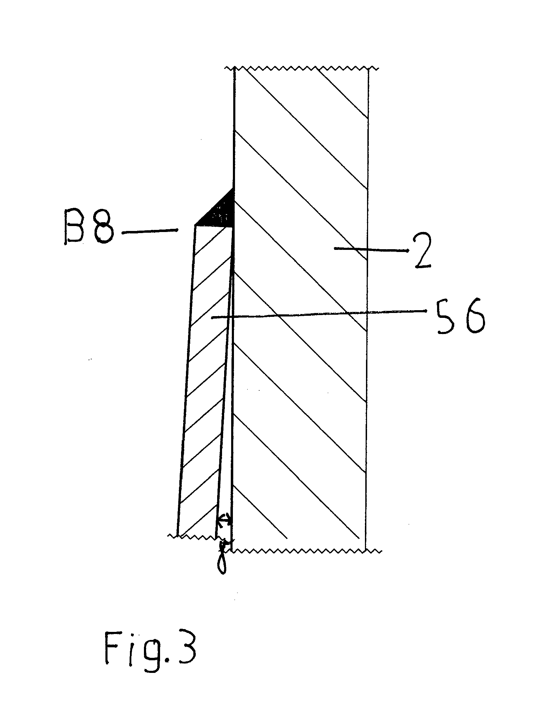

Fig. 3 Längsschnitt durch die Ansatzstelle von unterem Stehblech mit Tankwand von Randsegment,

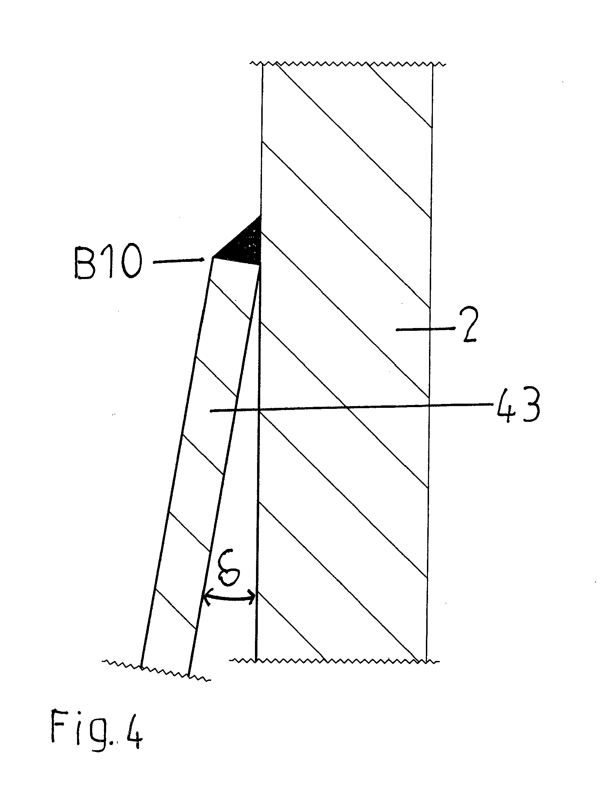

Fig. 4 Längsschnitt durch die Ansatzstelle von oberen Stehblech mit Tankwand von Randsegment,

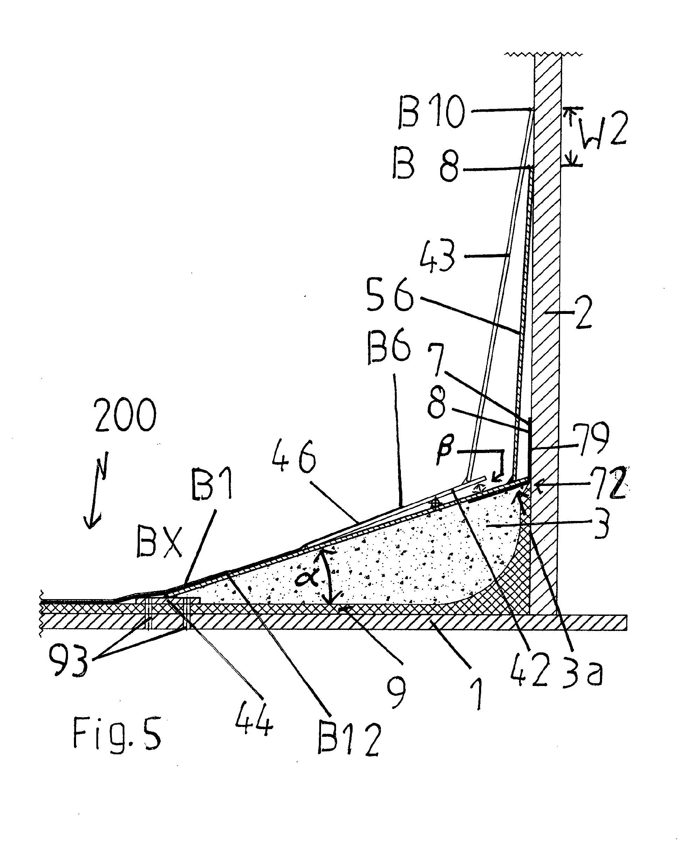

Fig. 5 Längsschnitt durch das Randsegment des erfindungsgemäßen Tankbauwerks mit Schicht mit GFK und mit Zweischichtenanordnung mit dem Tankboden zugewandter Feuerschutzdecke und dem Tankboden abgewandter Aluminium-Folie,

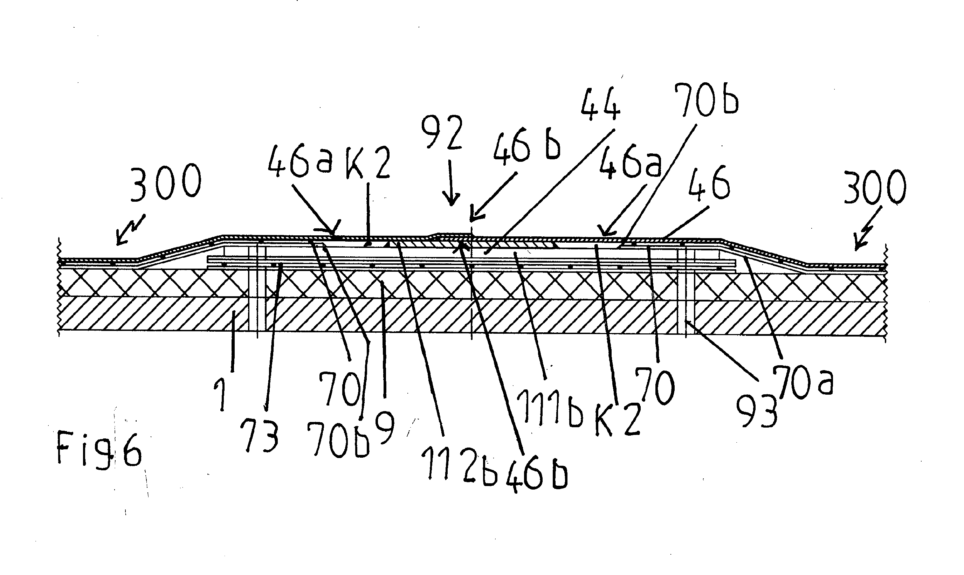

Fig. 6 Schnitt B-C gem. Fig. 1 mit markiertem oberem Flacheisen als oberseitiges Unterlegflacheisen als Bereich der Bahnentrennung mit Dreischichtenanordnung,

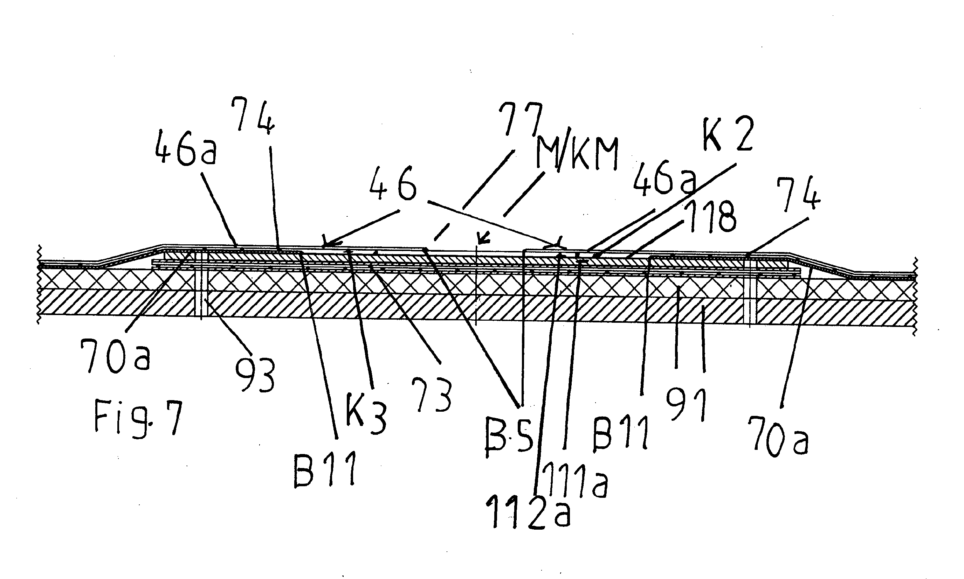

Fig. 7 Schnitt A gem. Fig. 1 als Bereich der Kammertrennung mit Dreischichtenanordnung und oberem markiertem Flacheisen als oberseitiges Unterlegflacheisen,

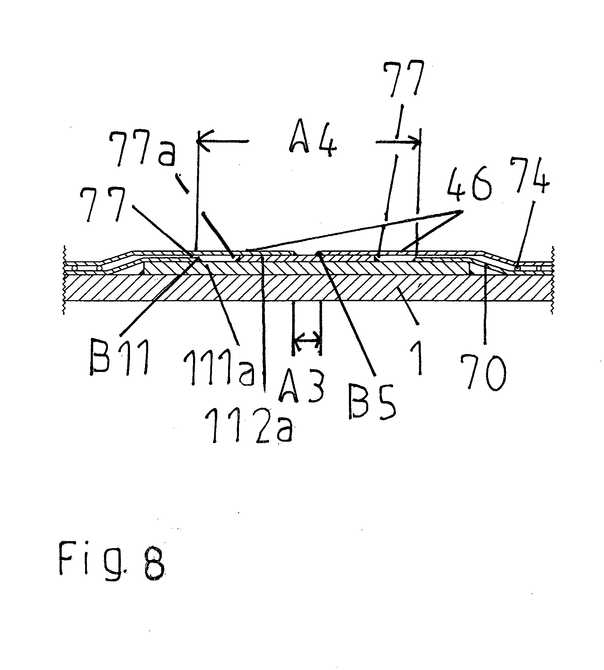

Fig. 8 Schnitt A gem. Fig. 1 als Bereich der Kammertrennung mit oberem markiertem Flacheisen als oberseitiges Unterlegflacheisen ohne Dreischichtenanordnung,

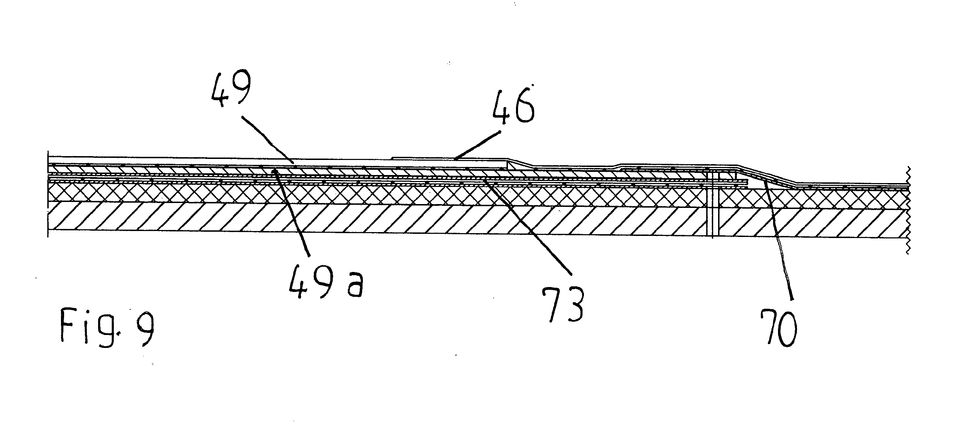

Fig. 9 Längsschnitt durch Auflage des Tankbodens für Schwimmdachfüße,

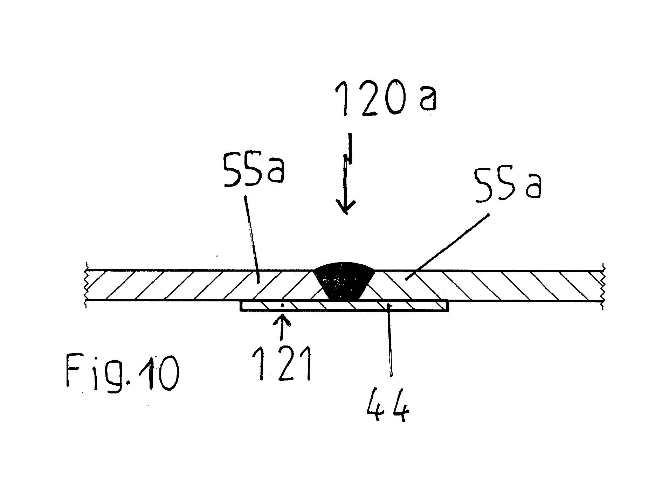

Fig. 10 Längsschnitt durch zwei benachbarte Liegeblechbahnen von z.B. einem ersten unteren Liegeblech mit Schweißnaht und unterseitig angeordnetem Flacheisen zur Schweißbadsicherung, welches das benachbarte zweite untere Liegeblech untergreift (=Untergriff),

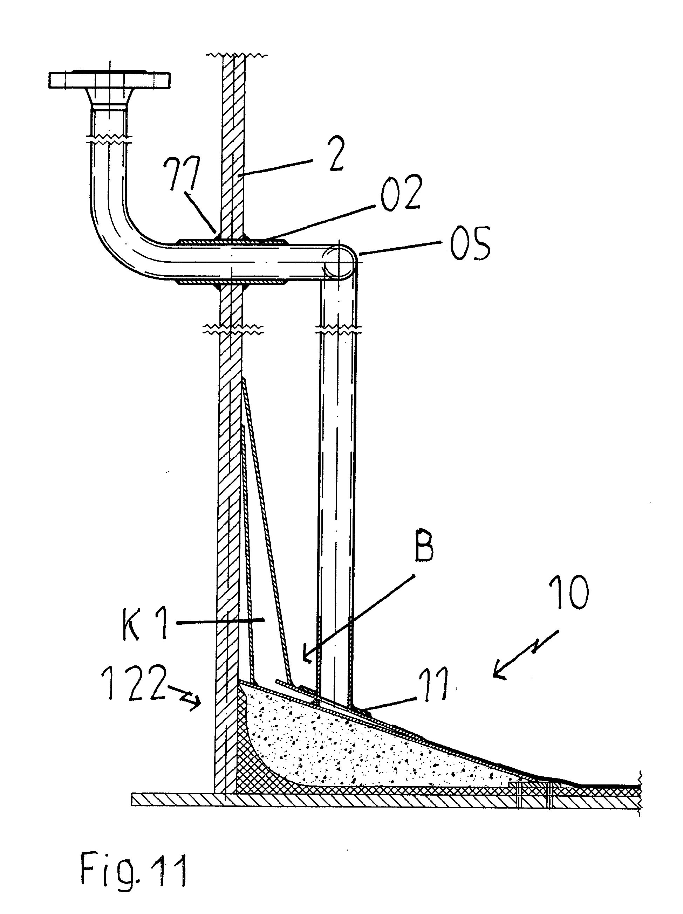

Fig. 11 Längsschnitt durch Rohr als Stutzen mit Verstärkungsrohr und Tankmantel,

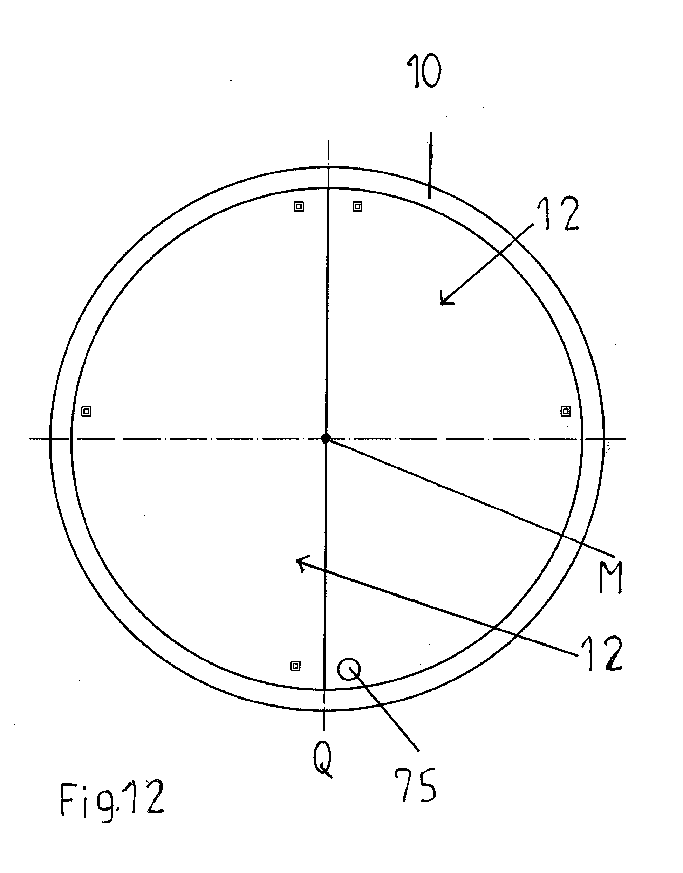

Fig. 12 Draufsicht auf Tankboden des erfindungsgemäßen Tankbauwerks mit Bodensumpf,

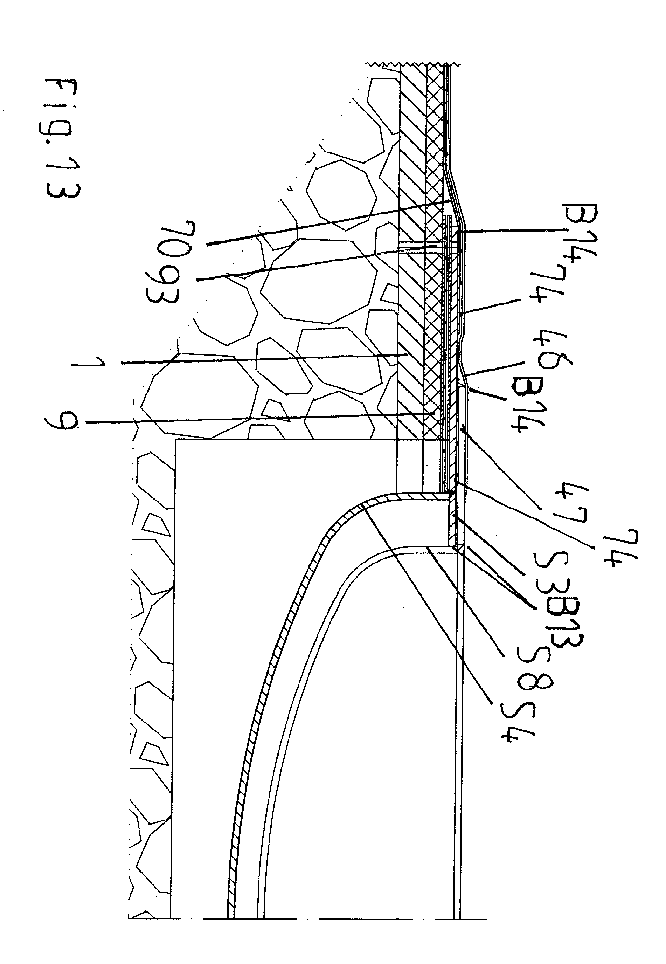

Fig. 13 Längsschnitt durch Bodensümpfe mit unterem markiertem Bodensumpfbehälter,

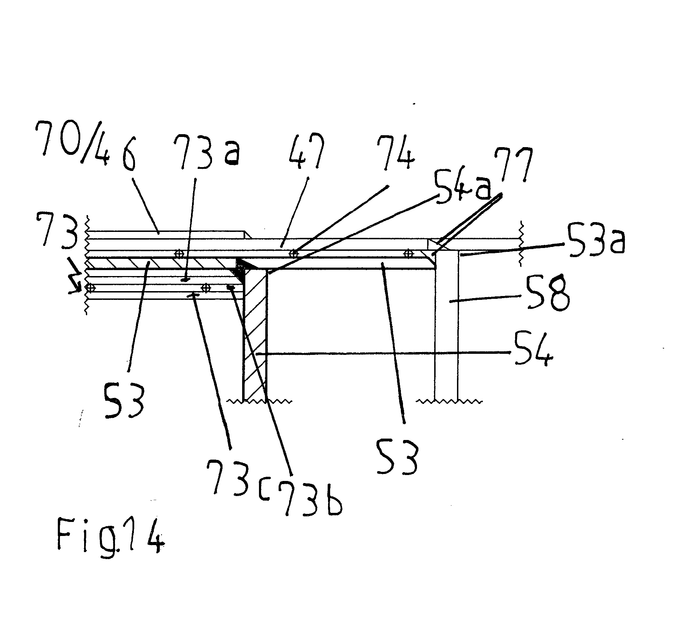

Fig. 14 Längsschnitt durch Bodensümpfe mit unterem markierten Kragenblech,

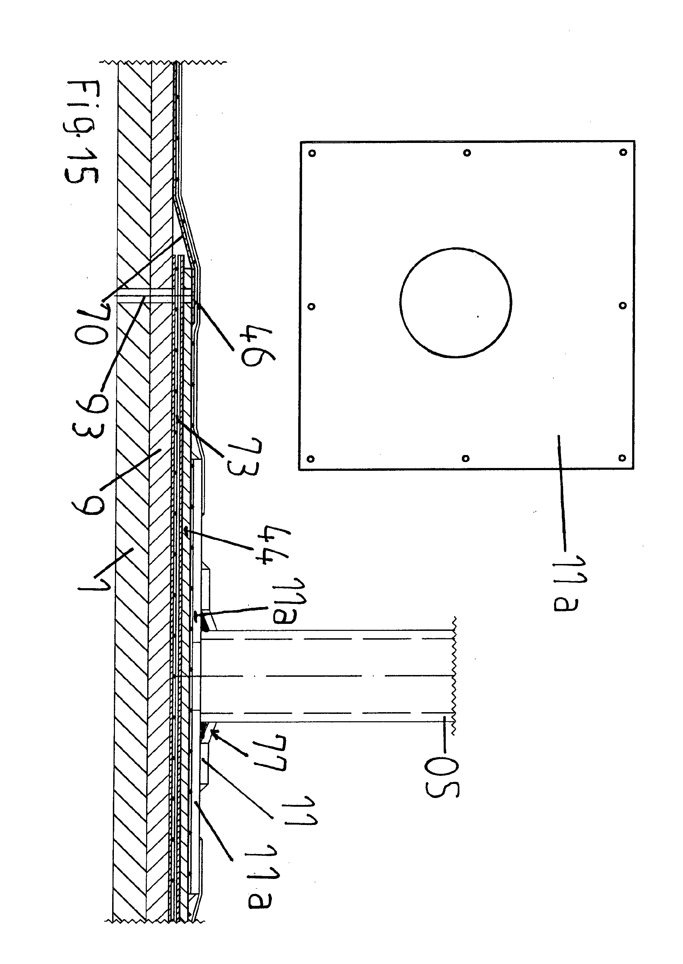

Fig. 15 Längsschnitt durch Rohr als Stutzen, Bodenbleche, Schicht mit GFK und Schweißnähte sowie Draufsicht auf Verstärkungsplatte,

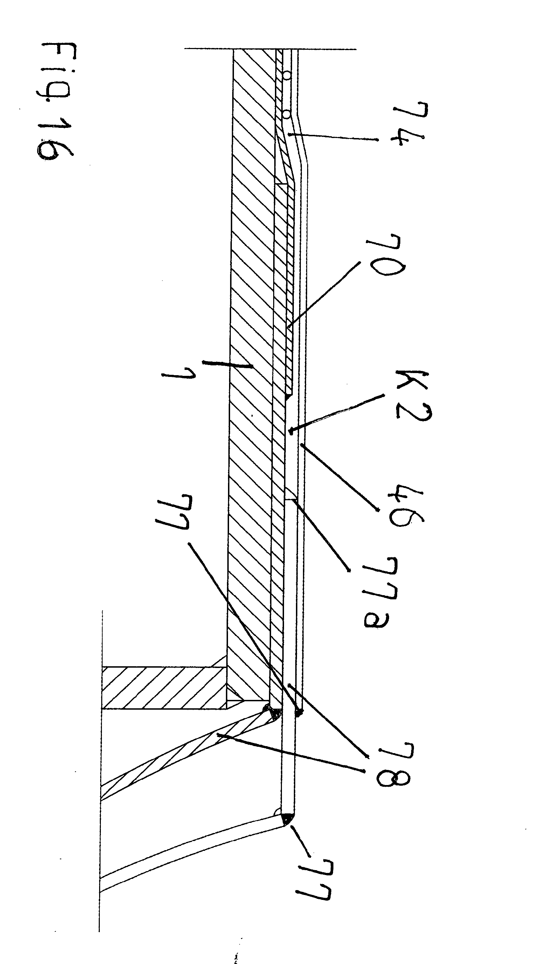

Fig. 16 Längsschnitt durch Schlammtasse mit unteren und oberen Bodenblechen, mit gehefteter Schweißung 77a und, vorzugsweise vakuumdichten, Schweißnähten 77,

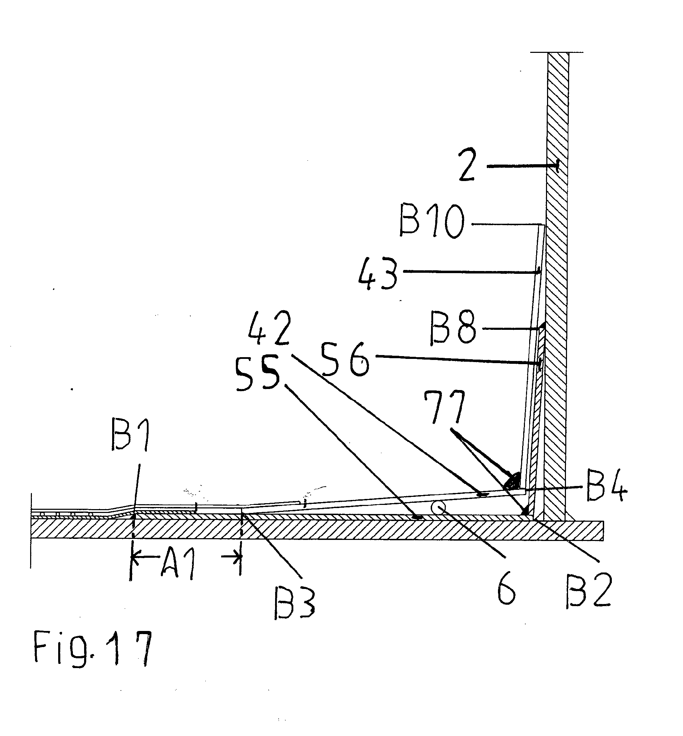

Fig. 17 Längsschnitt durch das Randsegment des erfindungsgemäßen Tankbauwerks ohne Schicht mit GFK,

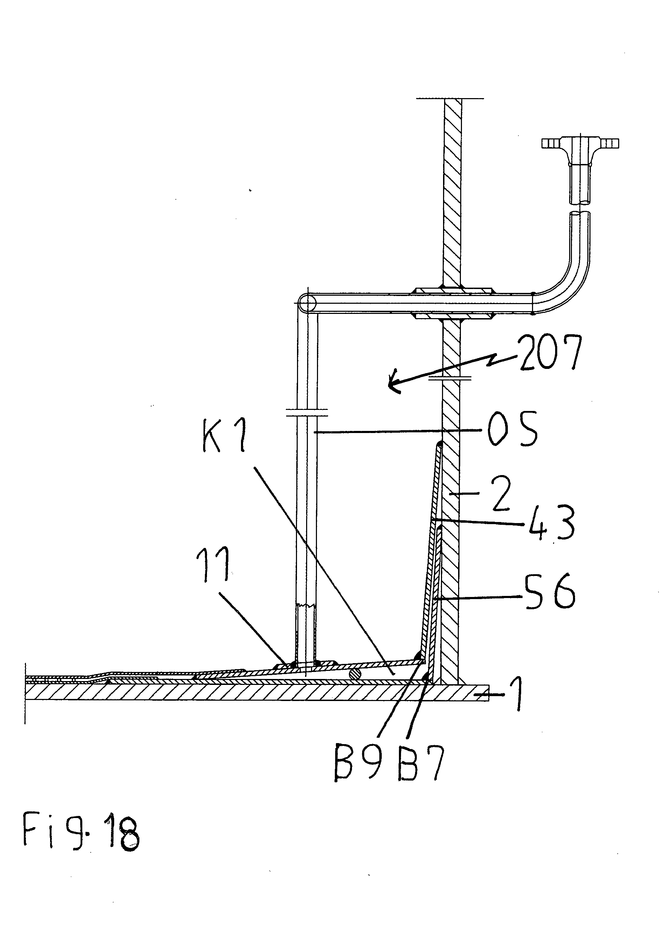

Fig. 18 Längsschnitt durch das Randsegment des erfindungsgemäßen Tankbauwerks mit Rohr als Messstutzen für Kammer 1 ohne GFK-Schicht,

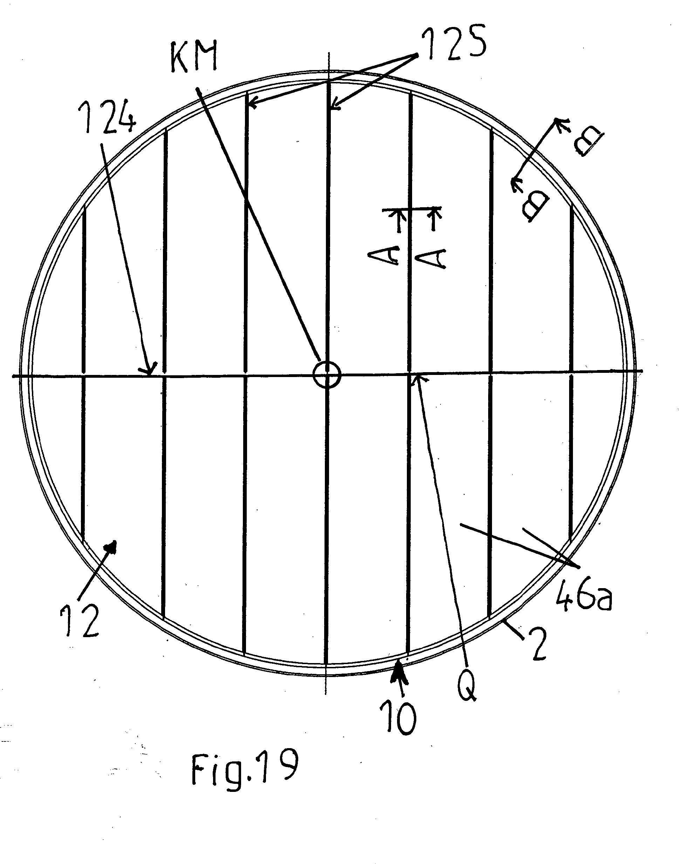

Fig. 19 Draufsicht auf Bodensegment und Randsegment ohne GFK-Schicht,

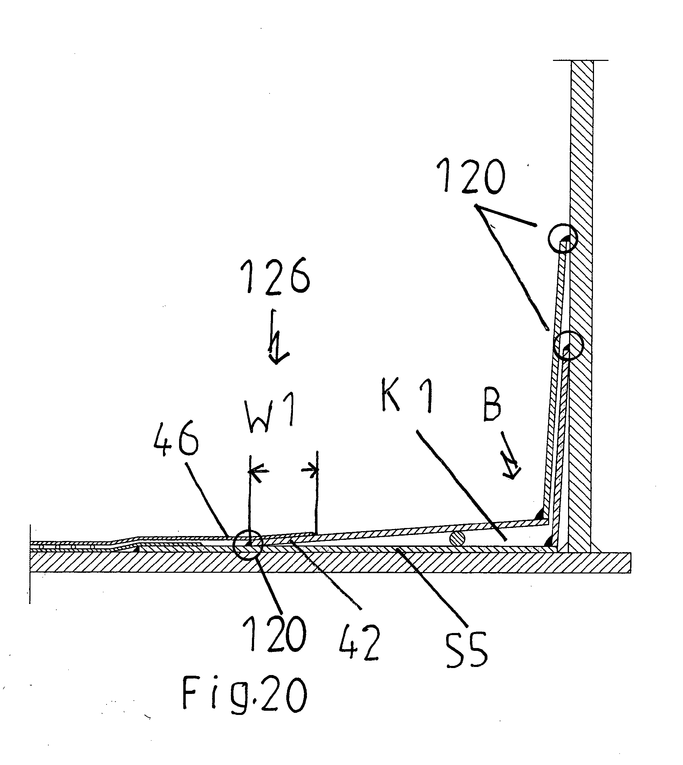

Fig. 20 Schnitt B-B von Randsegment gem. Fig. 19,

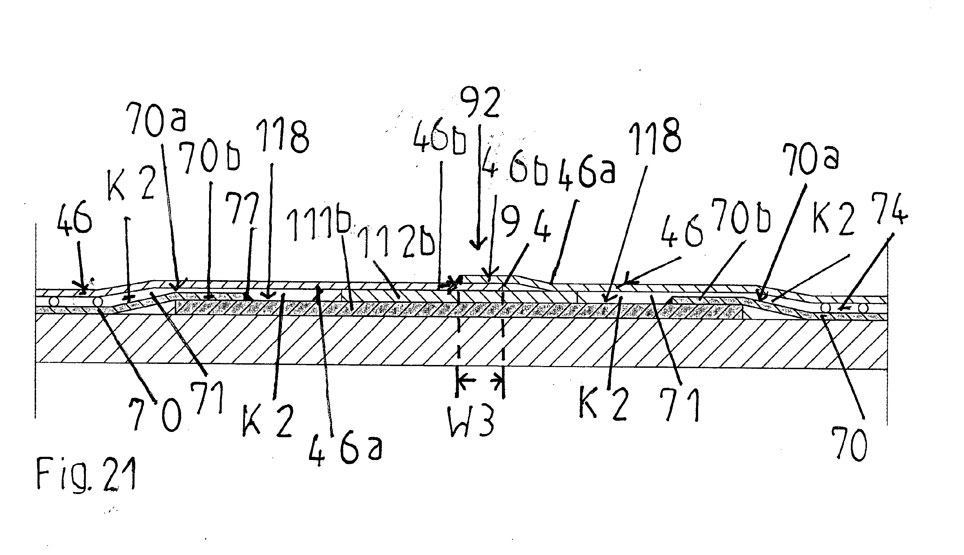

Fig. 21 Schnitt A-A von Bodensegmenten gem. Fig. 19 als Bereich der Bahnentrennung mit Längsschnitt durch Überlappungsbereich von unteren und oberen Bodenblechen,
Fig. 22 Längsschnitt durch ein erfindungsgemäßes Tankbauwerk mit einem abgewinkelten Liegeblech, einem Bodenblech sowie einem Zwischenraum als Überwachungskammer,
Fig. 23 Längsschnitt durch ein erfindungsgemäßes Tankbauwerk mit einem abgewinkelten Liegeblech, einem mit einem parallel zum Tankboden verlaufenden bodenseitigen Liegeblech, einem Bodenblech sowie einem Zwischenraum als Überwachungskammer,
Fig. 24 Längsschnitt durch ein erfindungsgemäßes Tankbauwerk mit einem parallel zum Tankboden verlaufenden Liegeblech, einem Bodenblech sowie einem Zwischenraum als Überwachungskammer,
Fig. 25 Längsschnitt durch ein erfindungsgemäßes Tankbauwerk mit einem parallel zum Tankboden verlaufenden Liegeblech, einem mit einem parallel zum Tankboden verlaufenden bodenseitigen Liegeblech, zwei parallel zum Tankboden verlaufenden Bodenblechen sowie einem Zwischenraum als Überwachungskammer,
Fig. 26 Längsschnitt durch ein erfindungsgemäßes Tankbauwerk mit einem Stehblech, einem Liegeblech, einem Bodenblech sowie einem Zwischenraum als Überwachungskammer,
Fig. 27 Längsschnitt durch ein erfindungsgemäßes Tankbauwerk mit zwei abgewinkelten Liegeblechen, zwei Bodenblechen sowie einem Zwischenraum als Überwachungskammer,
Fig. 28 Längsschnitt durch ein erfindungsgemäßes Tankbauwerk mit einem Stehblech, einem Liegeblech, zwei Bodenblechen sowie zwei Zwischenräumen als Überwachungskammem,
Fig. 29 Längsschnitt durch ein erfindungsgemäßes Tankbauwerk mit zwei Liegeblechen, nämlich einem abgewinkelten Liegeblech und einem bodenseitigen Liegeblech, zwei Bodenblechen sowie zwei Zwischenräumen als Überwachungskammer,
Fig. 30 Längsschnitt durch ein erfindungsgemäßes Tankbauwerk mit einem Stehblech, zwei Liegeblechen, nämlich einem geneigten Liegeblech und einem bodenseitigen Liegeblech, einem oberen Bodenblech, einem unteren Bodenblech, einem weiteren Bodenblech sowie zwei Zwischenräumen als Überwachungskammern,
Fig. 31 Längsschnitt durch ein erfindungsgemäßes Tankbauwerk mit zwei Stehblechen, zwei Liegeblechen, einem parallel zum Tankboden verlaufenden Bodenblech, zwei Bodenblechen, nämlich einem unteren und einem oberen Bodenblech, sowie zwei Zwischenräumen als Überwachungskammern
   und
Fig. 32 Längsschnitt durch ein erfindungsgemäßes Tankbauwerk mit einem Stehblech, einem Liegeblech, einem Bodenblech sowie zwei Zwischenräumen als Überwachungskammer.

Das erfindungsgemäße Tankbauwerk mit einer Dreikammerüberwachungsanordnung als Dreikammerüberwachungssystem für Flüssigkeiten, insbesondere organische Flüssigkeiten, z.B. Dieselkraftstoffe, aus Stahl als metallischer Werkstoff umfasst einen hohlzylindrischen Tankbehälter mit einem gegen einen festen Untergrund abgestützten kreisrunden als Flachboden ausgestalteten Tankboden 1 und einem von diesem Tankboden 1 vorstehenden mit diesen verbundenen zylindrisch ausgebildeten Tankmantel 2. Die erfindungsgemäße Kammerüberwachungsanordnung umfasst ein Randsegment 10 und zwei Bodensegmente 12 und drei gas- und flüssigkeitsdichte Zwischenräume K1, K 2, K3 als Überwachungskammer zur Überwachung der Dichtigkeit des Tankbauwerks gegenüber Flüssigkeiten. Das in dem äußeren Randbereich B des Tankbodens 1 in Draufsicht um den Kreismittelpunkt KM des Tankbodens 1 umlaufende Randsegment 10 ist gegen eine dem unteren Bereich 122 der dem Tankboden 1 zugewandte Innenseite des Tankmantels 2 angelegt und mit der Innenseite vakuumdicht verschweißt; der Zwischenraum K1 des Randsegments 10 ist im Längsschnitt L-förmig ausgebildet von einem unteren Liegeblech 55, einem oberen Liegeblech 46, einem unteren Stehblech 56 und einem oberen Stehblech 43. Unter äußerem Randbereich wird im Sinne der Erfindung auch der dem Tankmantel 2 zugewandte Bereich verstanden; unter innerem Randbereich wird im Sinne der Erfindung auch der dem Tankmantel 2 abgewandte Bereich oder der der Mitte-Längsachse des Tankbehälters zugewandte verstanden. Das Randsegment 10 und jedes der Bodensegmente 12 weisen je eine Überwachungskammer K1, K 2, K3 auf und liegen auf der Innenseite des Tankbodens 1. Das Randsegment 10 ist auch gegen die Innenseite des Tankmantels 2 angesetzt und mit den Bodensegmenten 12 in dem Randsegment-Bodensegment-Übergangsbereich 126 derart vakuumdicht verschweißt, dass der Randsegment-Bodensegment-Übergangsbereich 126 als Verschweißungsbereich vakuum- bzw. gasdicht begrenzt, wie abgedichtet, ist. Der Randsegment-Bodensegment-Übergangsbereich 126 ist aufgrund der vakuumdichten Verschweißung auch vakuumdicht und dauerhaft verschlossen, so dass der von dem Tankmantel 2 und dem Randsegment 10 sowie dem Bodensegment begrenzte Innenraum 207 des Tankbauwerks in vorteilhafter Weise abgedichtet ist. Im Randsegment-Bodensegment-Übergangsbereich 126 ist die Überwachungskammer K1 des Randsegments 10 von den Überwachungskammern K2, K3 der Bodensegmente 12 abgeschlossen oder -dichtet, so dass aufgrund des hermetischen Verschlusses zwischen dem Randsegment 10 und den Bodensegmenten 12 kein Gas- oder kein Flüssigkeitsaustausch zwischen der Überwachungskammer K1 des Randsegments 10 einerseits und den Überwachungskammem K2, K3 der Bodensegmente 12 andererseits erfolgt. Die Bodensegmente 12 schließen ab oder begrenzen mindestens einen Teil der Innenseite des Tankbodens 1 und das Randsegment 10 schließt ebenso mindestens einen Teil der Innenseite des Tankbodens 1 und den unteren Bereich 122 der Innenseite des Tankmantels 2 dicht gegenüber dem Innenraum 207 des Tankbauwerks ab.

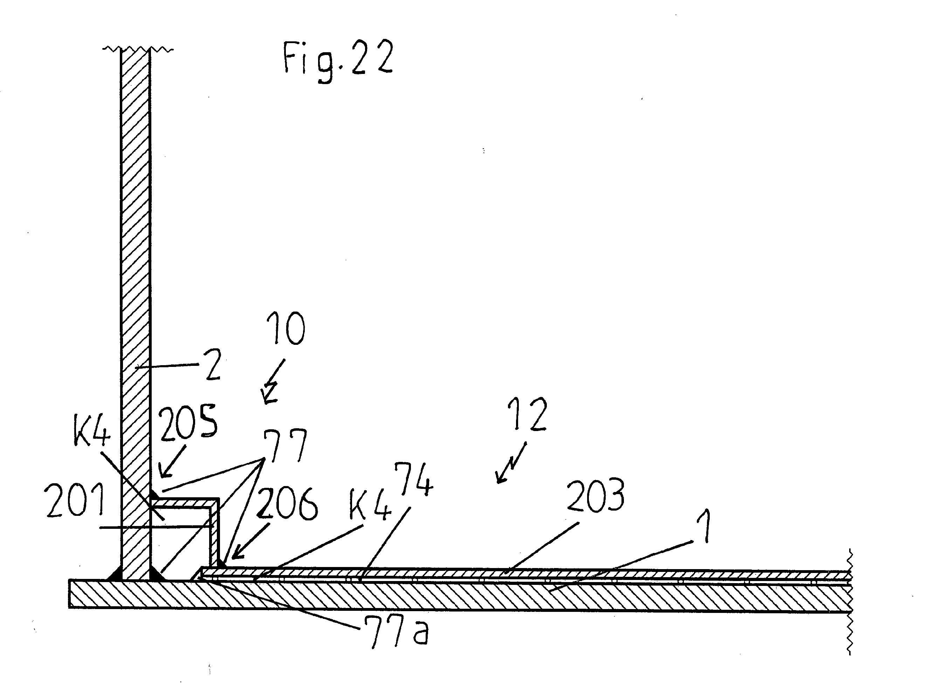

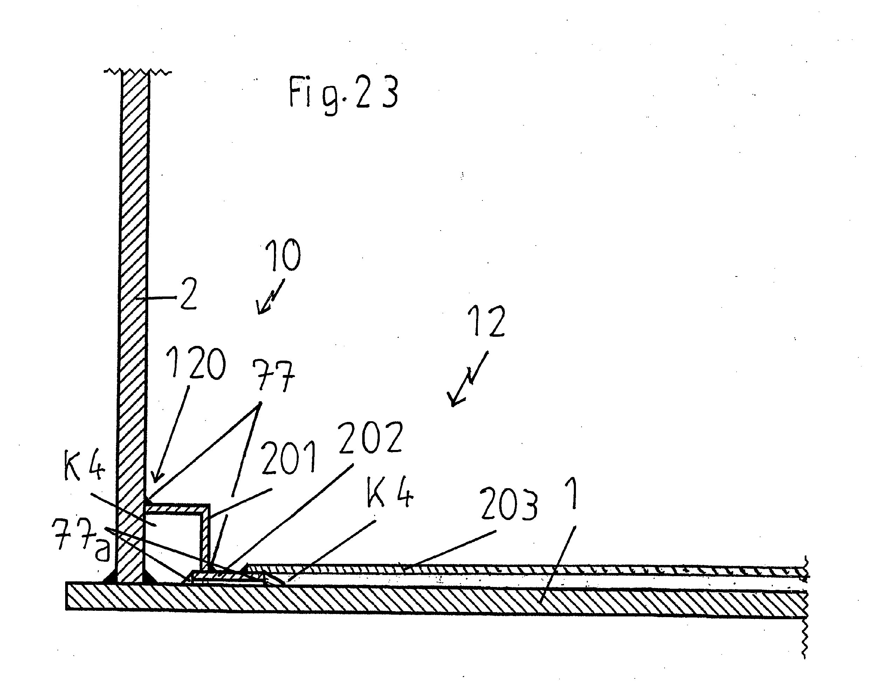

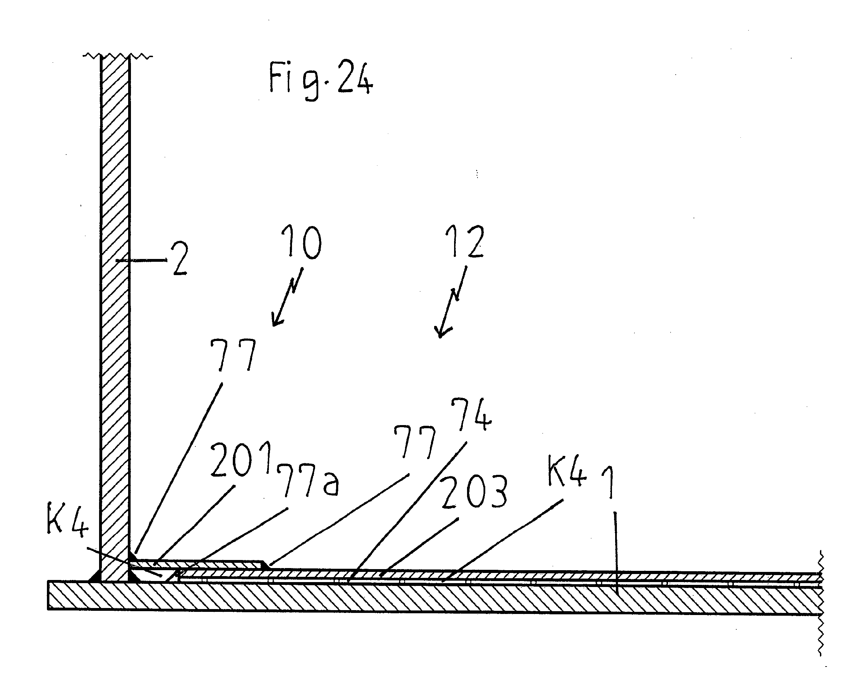

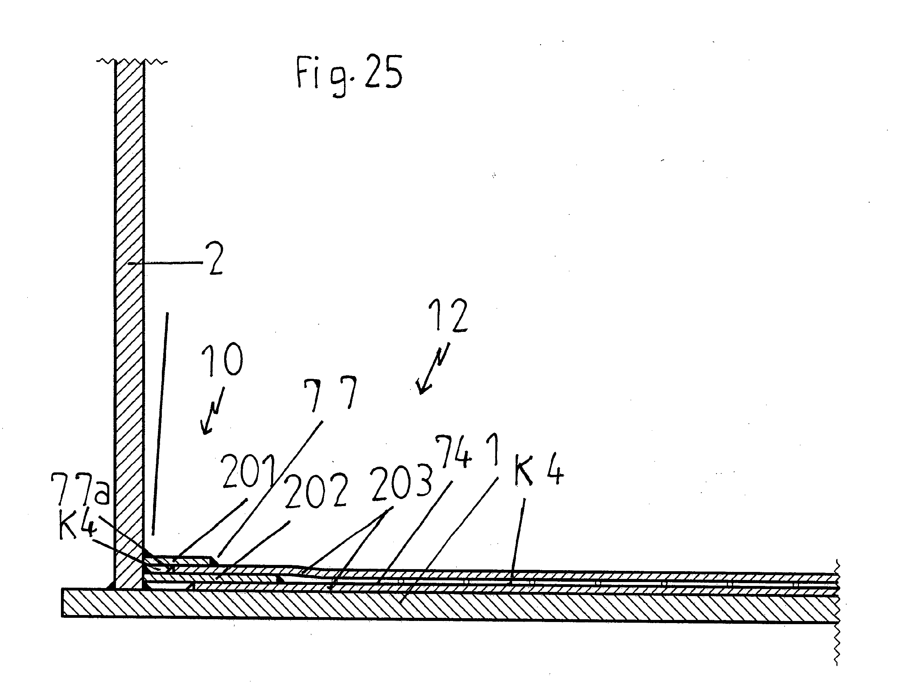

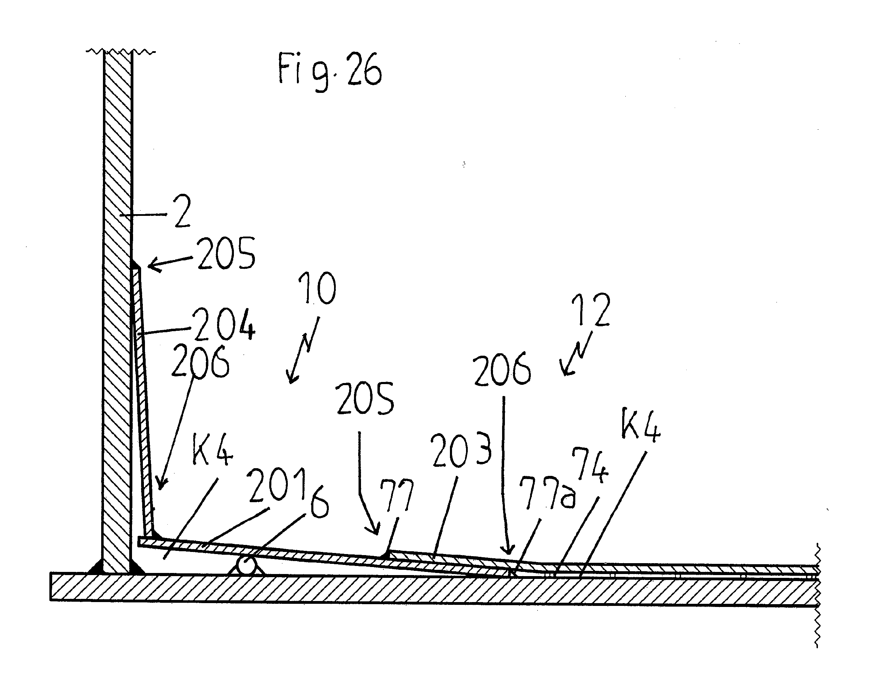

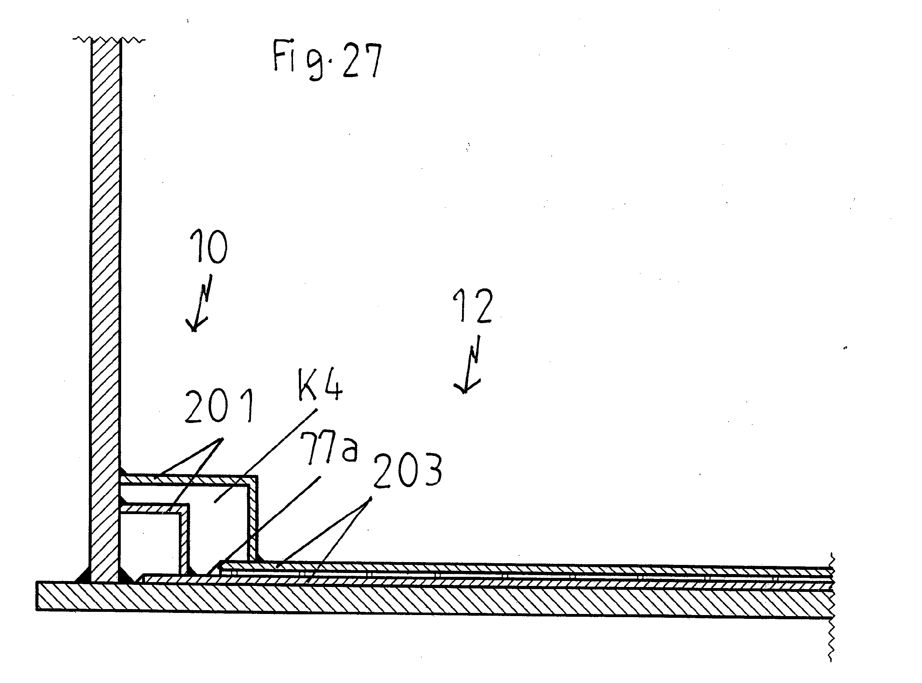

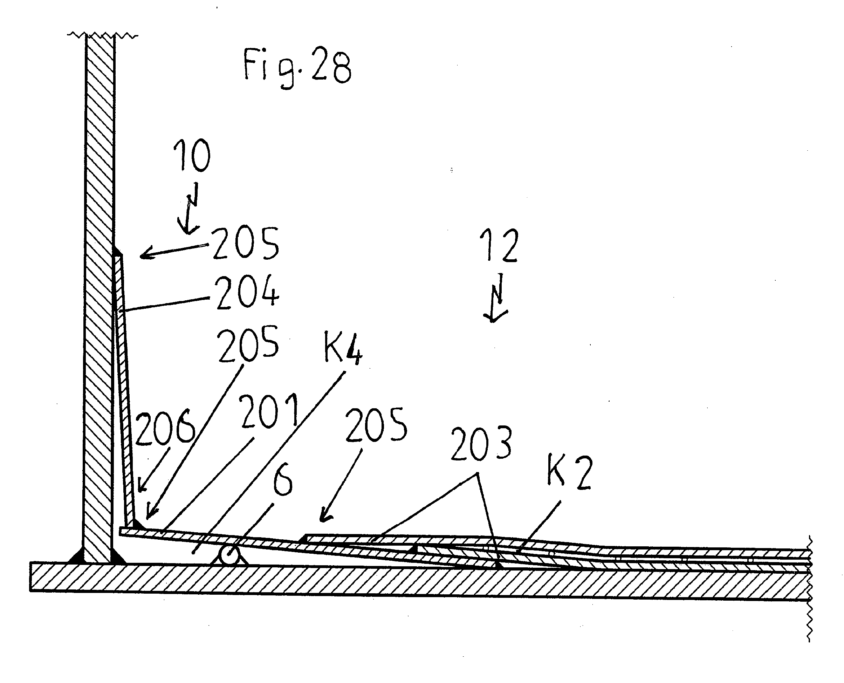

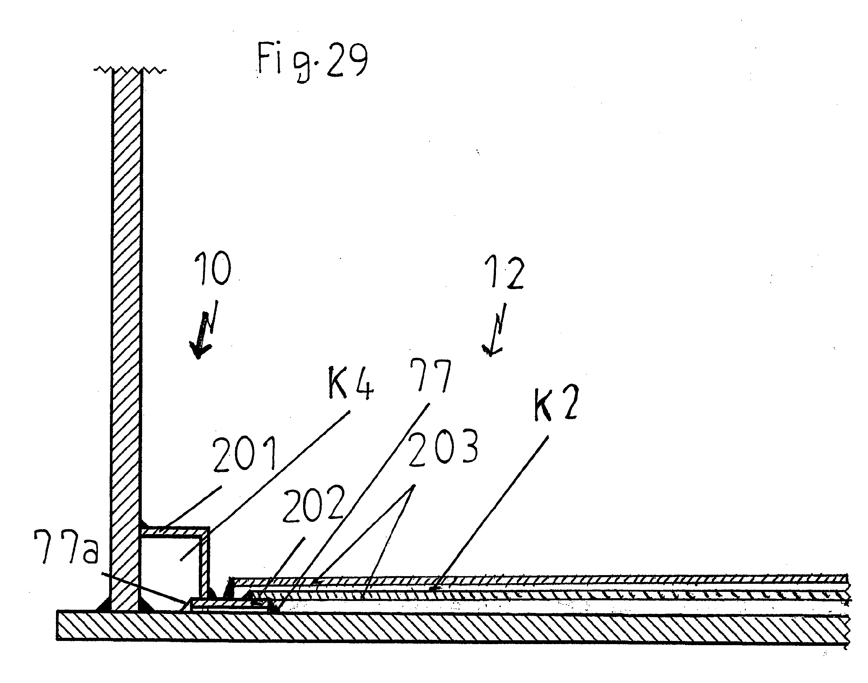

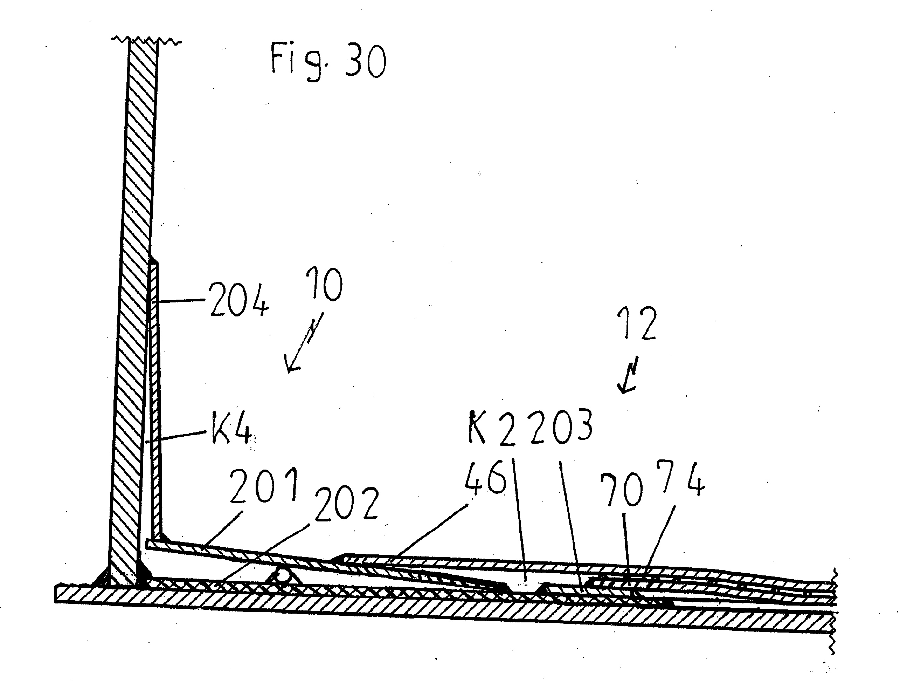

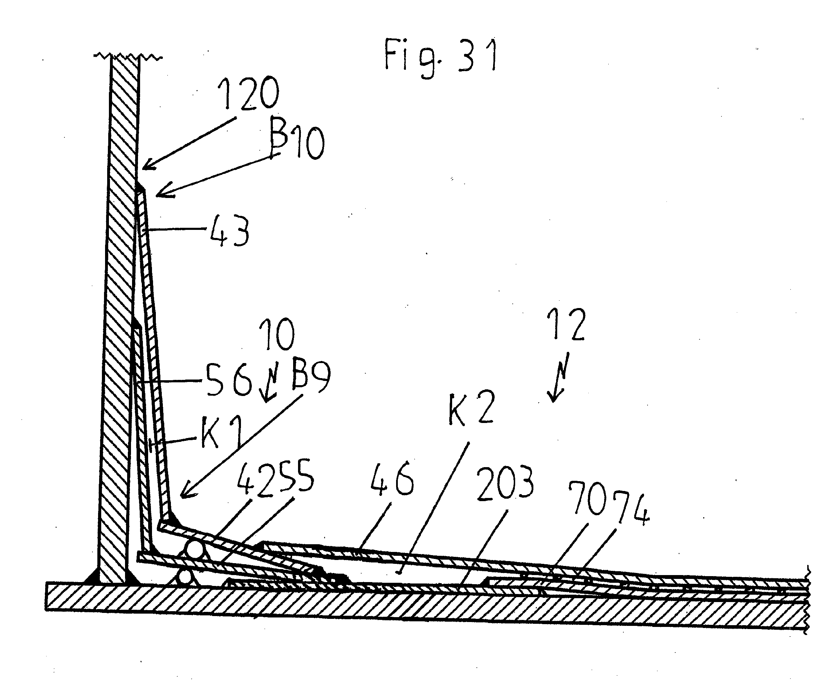

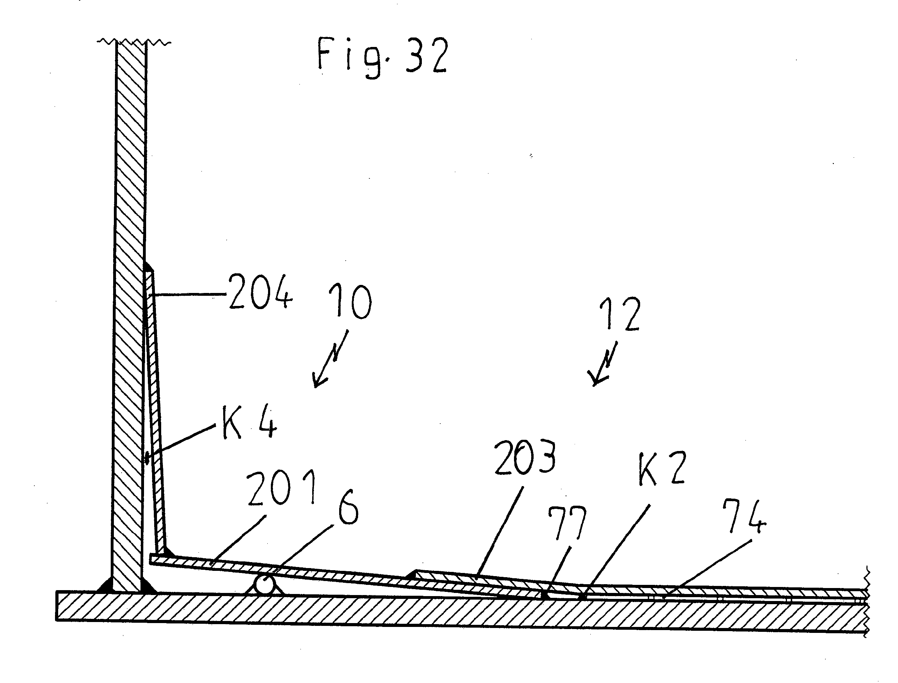

Der Bereich der gasdichten Verbindung zwischen dem Randsegment 10 und den Bodensegmenten 12 entspricht auch im Sinne der Erfindung der vakuumdichten Verbindung zwischen dem Randsegment 10 und dem Bodensegment 12, so dass der gas- und flüssigkeitsdichte Abschluss der Kopplungsstelle nach außen in Richtung Innenraum 207 des Tankbauwerks ermöglicht werden kann und der Raum, der unterseitig von dem Tankboden 1 und oberseitig von dem Randsegment 10 und Bodensegment 12 begrenzt ist, von dem Innenraum 207 abgeschlossen ist; gleichwohl sind in weiteren Ausführungsbeispielen der von dem Randsegment 10 oder von einem Teil desselben und von dem Bodensegment 12 oder von einem Teil desselben begrenzte Zwischenraum K4 für Gase und Flüssigkeiten durchgängig ausgebildet ist (siehe Fig. 22 bis Fig. 27) oder der von dem Randsegment 10 oder einem Teil desselben begrenzte Zwischenraum K2 und der von dem Bodensegment oder einem Teil desselben begrenzte Zwischenraum K2, K3 voneinander ebenso gut abgeschlossen oder begrenzt (siehe Fig. 28 bis 32), wie nachfolgend gezeigt wird.

Das obere Bodenblech 46 ist mit dem oberen Liegeblech 42 an den Ansatzstellen 120 vakuumdicht unter Bildung von vakuumdichten Schweißnähten 77 verschweißt. Das untere von dem oberen Bodenblech 46 auf Abstand angeordnete Bodenblech 70 ist mit dem unteren Liegeblech 55 ebenso an den Ansatzstellen 120 vakuumdicht unter Bildung von vakuumdichten Schweißnähten 77 verschweißt. Das zu dem Tankboden 1 hin geneigte, untere Stehblech 56 und das zu dem Tankboden 1 hin geneigte obere Stehblech 43 sind mit dem Tankmantel 2 an den Ansatzstellen 120 und das untere Stehblech 56 ist mit dem, zu dem Tankboden 1 hin geneigten, unteren Liegeblech 55 sowie das obere Stehblech (43) ist mit dem zu dem Tankboden (1) hin geneigten, oberen Liegeblech (42) an den Ansatzstellen 120 vakuumdicht unter Bildung von vakuumdichten Schweißnähten 77 verschweißt. Die Zwischenräume K2, K3 der Bodensegmente 10 sind unterseitig von unteren Bodenblechen 70 und oberseitig von oberen Bodenblechen 46 begrenzt und die Zwischenräume K2, K3 sind seitlich mit den von den übereinander angeordneten voneinander beabstandeten Schlammtassen 78 und Bodensumpfbehältern 54, 58 ausgebildeten Zwischenräumen flüssigkeits- und gasmäßig verbunden, so dass ein Austausch an Flüssigkeiten und Gasen zwischen diesen Zwischenräumen 71 erfolgen kann. Undichtigkeiten oder Leckagen in diesen werden mittels an dem Zwischenraum K2 des Bodensegments 12 und dem Zwischenraum K1 des Randsegmentes 10 angeschlossener Leckanzeiger erkannt.

In einem weiteren Ausführungsbeispiel weist der Tankboden 1 innenseitig eine Schicht 9 mit einem glasfaserverstärktem kunststoffartigen Material auf und in dem äußeren Randbereich B des Tankbodens 1 ist eine in Draufsicht um den Kreismittelpunkt KM des Tankbodens 1 umlaufende Betonschicht 3 auf der Schicht 9 aufgetragen; die Innenseite des Tankbodens 1 wird im Längsschnitt durch die in Richtung zu dem Kreismittelpunkt KM hin geneigte Betonschicht 3 und von dem von der Betonschicht 3 seitlich begrenzten Teil 200 der Schicht 9 ausgebildet. Auf der Innenseite, also der der Betonschicht 3 und der zumindest eines Teils der Schicht 9 liegen das Bodensegment 12 und das Randsegment 10 auf.

In weiteren Ausführungsbeispielen umfasst das erfindungsgemäße Tankbauwerk eine Kammerüberwachungsanordnung, welche ein Randsegment 10 und mindestens ein Bodensegment 12 sowie mindestens einen gas- und flüssigkeitsdichten Zwischenraum K4 als Überwachungskammer zur Überwachung der Dichtigkeit des Tankbauwerks gegenüber Flüssigkeiten umfasst, wobei das Randsegment 10 oder ein Teil desselben sowie das Bodensegment 12 oder ein Teil desselben den Zwischenraum K4 begrenzen, das Randsegment 10 mit dem Tankmantel 2 vakuumdicht verschweißt ist, das Randsegment 10 mit dem Bodensegment 12 vakuumdicht oder gas - bzw. flüssigkeitsdicht verbunden ist. Unter gas- und/oder flüssigkeitsdichter Verbindung z.B. des Randsegments 12 mit dem Bodensegment 10 wird im Sinne der Erfindung auch verstanden, dass der Übergangsbereich 126 zwischen dem Randsegment 10 und dem Bodensegment 12 gegenüber dem Innenraum des Tankmantels gas- und flüssigkeitsdicht begrenzt, abgegrenzt, verschlossen oder abgedichtet ist, so dass keine Flüssigkeit oder kein Gas aus dem über von der Kammerüberwachungsanordnung und dem Tankmantel 2 begrenzten Innenraum des Tankbehälters über den Randsegment-Bodensegment-Übergangsbereich 126 in den von dem Randsegment 10 und dem Bodensegment 12 einerseits und dem Tankboden 1 andererseits gebildeten Raum dringen kann.

In einem Ausführungsbeispiel umfasst ein erfindungsgemäßes Tankbauwerk mit einem vakuumdichten Zwischenraum 71 als Überwachungskammer K4 das Randsegment 10 ein Liegeblech 201, welches im Längsschnitt L-förmig ausgebildet ist, und ein Bodensegment 12 mit einem Bodenblech 203. Der äußere Randbereich 205 des Liegeblechs 201 ist gegen den Tankmantel 2 angesetzt und an diesen Ansatzstellen 120 mit dem Tankmantel 2 vakuumdicht verschweißt unter Bildung von vakuumdichten Schweißnähten 77. Das Bodenblech 203 liegt auf einer Schicht 74 mit Stahlgittergewebe auf. Die Schicht 74 mit Stahlgittergewebe ist auf der Innenseite des Tankbodens 1 angeordnet. Der äußere Randbereich 205 des Bodenblechs 203 ist mit dem Tankboden 1 geheftet unter Bildung von gehefteten Verschweißungsstellen 77a. Aufgrund der gehefteten Verschweißungsstellen 77a wird der Zwischenraum 71 als Überwachungskammer K4 begrenzt von dem Liegeblech 201, dem Bodenblech 203 und den dem Liegeblech 201 jeweilig zugewandten Bereichen von Tankmantel 2 und Tankboden 1 und dem Bodenblech 203 zugewandten Bereich von Tankboden 1. Der innere Randbereich 206 des Liegeblechs 201 ist gegen den äußeren Randbereich 205 des Bodenblechs 203 angesetzt und gleichfalls mit diesem vakuumdicht unter Bildung von vakuumdichten Schweißnähten 77 verschweißt.

Ein weiteres Ausführungsbeispiel betrifft ein erfindungsgemäßes Tankbauwerk mit einem vakuumdichten Zwischenraum 71 als Überwachungskammer K4. Das Randsegment 10 umfasst ein im Längsschnitt L-förmiges Liegeblech 201 und ein bodenseitiges Liegeblech 202 und ein Bodensegment 12 umfasst ein Bodenblech 203. Der äußere Randbereich 205 des L-förmigen Liegeblechs 201 ist gegen den Tankmantel 2 im Bereich der Ansatzstelle 120 angesetzt und vakuumdicht verschweißt unter Bildung von vakuumdichten Schweißnähten 77. Der innere Randbereich 206 des L-förmigen Liegeblechs 201 ist gegen die Oberseite des bodenseitigen Liegeblechs 202, welche dem Tankboden 1 abgewandt ist, unter Bildung von vakuumdichten Schweißnähten 77 vakuumdicht verschweißt. Das bodenseitige Liegeblech 202 ist von der Innenseite des Tankbodens 1 beabstandet, wobei der äußere Randbereich 205 des bodenseitigen Liegeblechs 202 und der innere Randbereich 206 desselben lediglich mit dem Tankboden 1 verheftet sind unter Bildung von gehefteten Verschweißungsstellen 77a. Diese gehefteten Verschweißungsstellen 77a sind lediglich punktförmige Verschweißungsstellen und daher nicht vakuumdicht und ermöglichen die gas- oder flüssigkeitsmäßige Durchgängigkeit. Das Bodenblech 203 ist von der Innenseite des Tankbodens 1 beabstandet und verläuft parallel zu der Innenseite des Tankbodens 1, wobei der äußere Randbereich 205 des Bodenblechs 203 auf dem inneren Randbereich 206 des bodenseitigen Liegeblechs 202 aufliegt und mit diesem vakuumdicht unter Bildung von vakuumdichten Schweißnähten 77 verschweißt ist. Der Zwischenraum 71 wird begrenzt von dem L-förmigen Liegeblech 201, dem bodenseitigen Liegeblech 202 und dem Bodenblech 203 und den jeweiligen Bereichen von Tankmantel 2 und Tankboden 1, die den Liegeblechen 201 und dem Bodenblech 203 zugewandt sind.

Ein zusätzliches Ausführungsbeispiel betrifft ein erfindungsgemäßes Tankbauwerk mit einem vakuumdichten Zwischenraum 71 als Überwachungskammer K4 mit einem Randsegment 10 mit einem Liegeblech 201 und einem Bodensegment 12 mit einem Bodenblech 203. Das Liegeblech 201 und das Bodenblech 203 verlaufen parallel zu der Innenseite des Tankbodens 1. Der äußere Randbereich 205 des Liegeblechs 201 ist gegen den Tankmantel 2 angesetzt und ist mit diesem vakuumdicht unter Bildung von vakuumdichten Schweißnähten 77 verschweißt; der innere Randbereich 206 des Liegeblechs 201 liegt auf dem äußeren Randbereich 205 des Bodenblechs 203 auf und ist gleichfalls mit dem äußeren Randbereich 205 bzw. mit dessen Oberseite, die dem Tankboden 1 abgewandt ist, vakuumdicht unter Bildung von vakuumdichten Schweißnähten 77 verschweißt. Zwischen dem Bodenblech 203 und dem Tankboden 1 ist eine Schicht 74 mit Stahlgittergewebe angeordnet zwecks Beabstandung des Bodenblechs 203 von dem Tankboden 1. Der äußere Randbereich 205 des Bodenblechs 203 ist mit dem Tankboden 1 lediglich geheftet unter Bildung von gehefteten Schweißstellen 77a. Der Zwischenraum 71 wird begrenzt im Wesentlichen von dem Liegeblech 201, dem Bodenblech 203 und den jeweiligen Bereichen von Tankmantel 2 und Tankboden 1, die dem Liegeblech 201 und dem Bodenblech 203 zugewandt sind.

In einem weiteren Ausführungsbeispiel des erfindungsgemäßen Tankbauwerks mit einem vakuumdichten Zwischenraum 71 als Überwachungskammer K4 umfasst das Randsegment 10 ein bodenseitiges Liegeblech 202 und ein von diesem beabstandetes Liegeblech 201 und das Bodensegment 12 umfasst zwei Bodenbleche 203. Das bodenseitige Liegeblech 202 ist von der Innenseite des Tankbodens 1 durch ein zwischen dem bodenseitigen Liegeblech 202 und dem Tankboden 1 angeordnetes Bodenblech 203 beabstandet. Das bodenseitige Bodenblech 203 liegt auf der Innenseite des Tankbodens 1 auf, wobei dessen äußerer Randbereich 205 mit dem Tankboden 1 unter Bildung von gehefteten Verschweißungsstellen 77a verheftet ist. Das bodenseitige Liegeblech 202 ist mit seinem äußeren Randbereich 205 mit dem Tankmantel 2 vakuumdicht unter Bildung von vakuumdichten Schweißnähten 77 und mit seinem inneren Randbereich 206 mit dem Bodenblech 203, welches bodenseitig angeordnet ist, gleichfalls vakuumdicht unter Bildung von vakuumdichten Schweißnähten verschweißt. Das obere Bodenblech 203 ist von dem bodenseitigen Bodenblech 203 beabstandet durch die zwischen beiden angeordnete Schicht 74 mit Stahlgittergewebe. Der äußere Randbereich 205 des Bodenblechs 203, welches von dem bodenseitigen Bodenblech 203 beabstandet ist, liegt auf dem bodenseitigen Liegeblech 202 auf und ist mit diesem unter Bildung von gehefteten Schweißstellen 77a verheftet. Das Liegeblech 201, welches von dem bodenseitigen Liegeblech 202 beabstandet ist, ist mit seinem äußeren Randbereich 205 mit dem Tankmantel 2 vakuumdicht unter Bildung von vakuumdichten Schweißnähten 77 verschweißt und mit seinem inneren Randbereich 206 gleichfalls mit dem oberen Bodenblech 203 vakuumdicht unter Bildung von vakuumdichten Schweißnähten 77 verschweißt. Zwischen dem oberen Liegeblech 201 und dem bodenseitigen Liegeblech 202 ist der äußere Randbereich 05 des Bodenblechs 203, welcher von dem bodenseitigen Bodenblech 203 beabstandet ist, eingezogen. Der Zwischenraum 71 als Überwachungskammer K4 ist begrenzt von dem bodenseitigen Liegeblech 202, dem Liegeblech 201 und den beiden voneinander beabstandeten Bodenblechen 203.

In einem weiteren Ausführungsbeispiel des erfindungsgemäßen Tankbauwerks mit einem vakuumdichten Zwischenraum 71 als Überwachungskammer K4 umfasst das Randsegment 10 ein Stehblech 204 und ein Liegeblech 201 und das Bodensegment 12 umfasst ein Bodenblech 203. Das Stehblech 204 und das Liegeblech 201 sind in Richtung zu dem Tankboden 1 hin wiederum geneigt, so dass deren äußere Randbereiche 205 einen größeren Abstand zu dem Tankboden 1 aufweisen als deren innere Randbereiche 206. Der äußere Randbereich 205 des Stehblechs 204 ist gegen den Tankmantel 2 angesetzt und mit diesem vakuumdicht unter Bildung von vakuumdichten Schweißnähten 77 verschweißt. Der innere Randbereich 206 des Stehblechs 204 ist gegen den äußeren Randbereich 205 des Liegeblechs 201 angesetzt und gleichfalls mit diesem unter Bildung von vakuumdichten Schweißnähten 77 vakuumdicht verschweißt. Die Neigung des Liegeblechs 201 wird durch einen Abstandshalter 6 unterstützt, welcher im äußeren Randbereich 205 des Liegeblechs 201 zwischen dem Liegeblech 201 und dem Tankboden 1 angeordnet ist. Das Liegeblech 201 ist mit seinem inneren Randbereich 206 gegen die Innenseite des Tankbodens 1 angeordnet und mit diesem lediglich geheftet unter Bildung von gehefteten Schweißstellen 77a. Das Bodenblech 203 wird durch eine zwischen dem Bodenblech 203 und dem Tankboden 1 angeordnete Schicht mit Stahlgittergewebe 74 auf Abstand von dem Tankboden 1 gehalten. Der äußere Randbereich 205 des Bodenblechs 203 liegt auf dem inneren Randbereich 206 des Liegeblechs 201 auf und ist mit dem Liegeblech 201 unter Bildung von vakuumdichten Schweißnähten 77 vakuumdicht verschweißt. Der Zwischenraum 71 als Überwachungskammer K4 wird im Wesentlichen begrenzt von dem Stehblech 204 , dem Liegeblech 201 und dem Bodenblech 203 und den jeweiligen Bereichen von Tankmantel 2 und Tankboden 1, die dem Stehblech 204, Liegeblech 201 und Bodenblech 203 zugewandt sind.

Ein weiteres Ausführungsbeispiel des erfindungsgemäßen Tankbauwerks mit einem vakuumdichten Zwischenraum 71 als Überwachungskammer K4 umfasst ein Randsegment 10 mit zwei im Längsschnitt L-förmigen Liegeblechen 201 und ein Bodensegment 12 mit zwei Bodenblechen 203. Die Liegebleche 201 sind voneinander beabstandet. Die äußeren Randbereiche 205 der Liegebleche 201 sind gegen den Tankmantel 2 angesetzt und mit diesem vakuumdicht unter Bildung von vakuumdichten Schweißnähten 77 verschweißt. Der innere Randbereich 206 des L-förmigen Liegeblechs 201, welches dem Tankboden 1 zugewandt ist, ist gegen den äußeren Randbereich 205 des Bodenblechs 203 angesetzt und mit diesem vakuumdicht unter Bildung von vakuumdichten Schweißnähten 77 vakuumdicht verschweißt, welcher dem Tankboden 1 zugewandt ist. Das L-förmige Liegeblech 201, welches dem Tankboden 1 abgewandt ist, ist mit seinem inneren Randbereich 206 gegen den äußeren Randbereich 205 des oberen Bodenblechs 203 angesetzt und ist mit diesem vakuumdicht unter Bildung von vakuumdichten Schweißnähten 77 verschweißt. Das Bodenblech 203, welches dem Tankboden 1 zugewandt ist, verläuft parallel zu der Innenseite des Tankbodens 1. Der äußere Randbereich 205 des bodenseitigen Bodenblechs 203 ist mit dem Tankboden 1 lediglich unter Bildung von gehefteten Verschweißungsstellen 77a verheftet. Zwischen dem oberen Bodenblech 203 und dem bodenseitigen Bodenblech 203 ist eine Schicht 74 mit Stahlgittergewebe eingezogen. Die so voneinander auf Abstand gehaltenen Bodenbleche 203 verlaufen parallel zu der Innenseite des Tankbodens 1. Der äußere Randbereich des oberen Bodenblechs ist mit dem unteren Bodenblech 203 lediglich unter Bildung von gehefteten Verschweißungsstellen 77a verheftet. Der Zwischenraum K4 wird begrenzt von den beiden L-förmigen voneinander beabstandeten Liegeblechen 201 und den beiden voneinander beabstandeten Bodenblechen 203.

In weiteren Ausführungsbeispielen umfasst das erfindungsgemäße Tankbauwerk eine Kammerüberwachungsanordnung, welche ein Randsegment 10 und mindestens ein Bodensegment 12 sowie mindestens einen gas- und flüssigkeitsdichten Zwischenraum K2, K4 als Überwachungskammer zur Überwachung der Dichtigkeit des Tankbauwerks gegenüber Flüssigkeiten umfasst, wobei das Randsegment 10 oder ein Teil desselben sowie das Bodensegment 12 oder ein Teil desselben die Zwischenräume K2, K4 begrenzen, das Randsegment 10 mit dem Tankmantel 2 vakuumdicht verschweißt ist, das Randsegment 10 mit dem Bodensegment 12 vakuumdicht oder gas - bzw. flüssigkeitsdicht verbunden ist. Unter gas- und/oder flüssigkeitsdichter Verbindung z.B. des Randsegments 12 mit dem Bodensegment 10 wird im Sinne der Erfindung auch verstanden, dass der Übergangsbereich 126 zwischen dem Randsegment 10 und dem Bodensegment 12 gegenüber dem Innenraum 207 des Tankmantels 2 gas- und flüssigkeitsdicht begrenzt, abgegrenzt, verschlossen oder abgedichtet ist, so dass keine Flüssigkeit oder kein Gas aus dem von der Kammerüberwachungsanordnung und dem Tankmantel 2 begrenzten Innenraum 207 des Tankbehälters über den Randsegment-Bodensegment-Übergangsbereich 126 in den von dem Randsegment 10 und dem Bodensegment 12 einerseits und dem Tankboden 1 andererseits gebildeten Raum dringen als auch zwei voneinander vakuumdicht abgetrennte Zwischenräume 71 als Überwachungskammern K2, K4 bereitgestellt werden.

So umfasst in einem Ausführungsbeispiel des erfindungsgemäßen Tankbauwerks mit zwei vakuumdichten Zwischenräumen 71 als Überwachungskammern K4 und K2 das Randsegment 10 ein Stehblech 204 und ein Liegeblech 201 und umfasst das Bodensegment 12 zwei Bodenbleche 203 . Das Stehblech 204 und das Liegeblech 201 sind in Richtung zu dem Tankboden 1 hin geneigt, so dass der äußere Randbereich 205 des Stehblechs 204 und der äußere Randbereich 205 des Liegeblechs 201 weiter von dem Tankboden 1 und dessen Innenseite beabstandet sind als der innere Randbereich 206 des Stehblechs 204 und der innere Randbereich 206 des Liegeblechs 201 von der Innenseite des Tankbodens 1. Der äußere Randbereich 205 des Stehblechs 204 ist wiederum gegen den Tankmantel 2 angesetzt und vakuumdicht unter Bildung von vakuumdichten Schweißnähten 77 verschweißt, der innere Randbereich 206 des Stehblechs 204 ist gegen den äußeren Randbereich 205 des Liegeblechs 201 angesetzt und mit diesem gleichfalls vakuumdicht unter Bildung von vakuumdichten Schweißnähten 77 verschweißt. Der innere Randbereich 206 des Liegeblechs 201 ist gegen die Innenseite des Tankbodens 1 angesetzt und mit diesem vakuumdicht unter Bildung von vakuumdichten Schweißnähten 77 verschweißt. Ein Abstandshalter 6 unterstützt die Neigung des Liegeblechs 201 in Richtung zu dem Tankboden, welcher Abstandshalter 6 im äußeren Randbereich 205 des Liegeblechs 201 angeordnet ist. Das Bodenblech 203, welches dem Tankboden 1 zugewandt ist und als bodenseitig bezeichnet wird, liegt auf der Innenseite des Tankbodens auf, wobei dessen äußerer Randbereich 205 auf dem inneren Randbereich 206 des Liegeblechs 201 aufliegt. Der äußere Randbereich 205 des bodenseitigen Liegeblechs 203 ist mit dem Liegeblech vakuumdicht unter Bildung von vakuumdichten Schweißnähten 77 verschweißt. Das Bodenblech 203, welches von dem bodenseitigen Bodenblech 203 beabstandet ist durch die Anordnung einer Schicht 74 mit Stahlgittergewebe zwischen beiden, liegt mit seinem äußeren Randbereich 205 auf dem Liegeblech 201 auf und ist mit diesem vakuumdicht unter Bildung von vakuumdichten Schweißnähten 77 verschweißt. Der Zwischenraum K4 wird im Wesentlichen begrenzt von dem Stehblech 204 und dem Liegeblech 201 und den jeweiligen Bereichen von Tankmantel 2 und Tankboden 1 , die dem Stehblech 204 und dem Liegeblech 201 zugewandt sind. Der Zwischenraum K2 wird gebildet bzw. begrenzt im Wesentlichen von den beiden Bodenblechen 203.

In einem weiteren Ausführungsbeispiel des erfindungsgemäßen Tankbauwerks mit zwei vakuumdichten Zwischenräumen 71 als Überwachungskammern K4 und K2 umfasst das Randsegment 10 ein im Längsschnitt L-förmiges Liegeblech und ein bodenseitiges Liegeblech 202 und umfasst das Bodensegment 12 zwei Bodenbleche 203. Das L-förmige Liegeblech 201 ist wiederum mit seinem äußeren Randbereich 205 gegen den Tankmantel 2 angesetzt und mit diesem vakuumdicht unter Bildung von vakuumdichten Schweißnähten 77 verschweißt; sein innerer Randbereich 206 ist gegen das bodenseitige Liegeblech 202 angesetzt und mit dessen äußeren Randbereich 205 gleichfalls vakuumdicht unter Bildung von vakuumdichten Schweißnähten 77 verschweißt. Das bodenseitige Liegeblech 202 ist von der Innenseite des Tankbodens 1 beabstandet. Der äußere Randbereich 205 des bodenseitigen Liegeblechs 202 ist unter Bildung von gehefteten Schweißstellen 77a lediglich mit dem Tankboden 1 verheftet, hingegen der innere Randbereich 206 des bodenseitigen Liegeblechs 202 ist mit Tankboden 1 vakuumdicht unter Bildung von vakuumdichten Schweißnähten 77 verschweißt. Die beiden Bodenbleche 203 sind voneinander beabstandet, da zwischen den beiden Bodenblechen 203 eine Schicht 74 mit Stahlgittergewebe angeordnet ist. Die beiden äußeren Randbereiche 205 der beiden Bodenbleche sind mit dem bodenseitigen Liegeblech 202 vakuumdicht unter Bildung von vakuumdichten Schweißnähten 77 verschweißt, wobei der äußere Randbereich 205 des bodenseitigen Bodenblechs 203 von dem Tankmantel 2 weiter beabstandet ist als der des oberen dem Tankboden 1 abgewandten Bodenblechs 203. Der eine Zwischenraum K4 wird begrenzt von dem L-förmigen Liegeblech 201 und dem bodenseitigen Liegeblech 202 und den jeweiligen dem L-förmigen Liegeblech und dem bodenseitigen Liegeblech zugewandten Bereichen von Tankmantel 2 und Tankboden 1 . Der zweite Zwischenraum K2 wird begrenzt von den beiden Bodenblechen 203 und einem Teil des bodenseitigen Liegeblechs 202.

In einem Ausführungsbeispiel (nicht gezeigt) umfasst das erfindungsgemäße Tankbauwerk mit zwei vakuumdichten Zwischenräumen 71 als Überwachungskammer K4 das Randsegment 10 ein Liegeblech 201, welches im Längsschnitt L-förmig ausgebildet ist, und ein Bodensegment 12 mit einem Bodenblech 203. Der äußere Randbereich 205 des Liegeblechs 201 ist gegen den Tankmantel 2 angesetzt und an diesen Ansatzstellen 120 vakuumdicht verschweißt unter Bildung von vakuumdichten Schweißnähten 77. Das Bodenblech 203 liegt auf einer Schicht 74 mit Stahlgittergewebe auf. Die Schicht 74 mit Stahlgittergewebe ist auf der Innenseite des Tankbodens 1 angeordnet. Der äußere Randbereich 205 des Bodenblechs 203 ist mit dem Tankboden 1 vakuumdicht verschweißt unter Bildung von vakuumdichten Verschweißungsstellen 77, so dass ein Zwischenraum als Überwachungskammer K4 von dem Tankboden 1 und dem Bodenblech 203 begrenzt ist. Eine weitere Zwischenkammer wird als Überwachungskammer K4 begrenzt von dem Liegeblech 201, dem dem Liegeblech 201 zugewandten Bereichen von Tankmantel 2 und Tankboden 1. Der innere Randbereich 206 des Liegeblechs 201 ist gegen den äußeren Randbereich 205 des Bodenblechs 203 angesetzt und gleichfalls mit diesem vakuumdicht unter Bildung von vakuumdichten Schweißnähten 77 verschweißt.

Ein weiteres Ausführungsbeispiel des erfindungsgemäßen Tankbauwerks mit zwei Zwischenräumen, die vakuumdicht sind, als Überwachungskammern K2 und K4 umfasst als Randsegment 10 ein Stehblech 204 , ein bodenseitiges Liegeblech 202 und ein geneigtes Liegeblech 201 sowie als Bodensegment 12 ein oberes Bodenblech 46 , ein unteres Bodenblech 70 und ein bodenseitiges Bodenblech 203. Das Stehblech 204 und das Liegeblech 201 sind wiederum in Richtung zu dem Tankboden 2 hin geneigt. Der äußere Randbereich 205 des Stehblechs 204 ist gegen den Tankmantel 2 angesetzt und mit diesem vakuumdicht unter Bildung von vakuumdichten Schweißnähten 77 verschweißt, der innere Randbereich 206 des Stehblechs 204 ist gegen den äußeren Randbereich 205 des Liegeblechs 201 angesetzt und gleichfalls mit diesem vakuumdicht unter Bildung von vakuumdichten Schweißnähten 77 verschweißt. Auf der Innenseite des Tankbodens 1 liegt ein bodenseitiges Liegeblech 202 auf. Das bodenseitige Liegeblech 202 ist mit seinem äußeren Randbereich 205 mit dem Tankmantel 2 vakuumdicht unter Bildung von vakuumdichten Schweißnähten 77 verschweißt und mit seinem inneren Randbereich 206 mit dem Tankboden 1 unter Bildung von gehefteten Verschweißungsstellen 77a verheftet. Der innere Randbereich 206 des geneigten Liegeblechs 201 ist mit dem bodenseitigen Liegeblech 202 gleichfalls vakuumdicht unter Bildung von vakuumdichten Schweißnähten 77 verschweißt. Im Bereich des inneren Randbereichs 206 des bodenseitigen Liegeblechs 202 liegt auf diesem das bodenseitige Bodenblech 203 auf. Zumindest der äußere Randbereich 205 des bodenseitigen Bodenblechs ist mit dem bodenseitigen Liegeblech 202 vakuumdicht unter Bildung von vakuumdichten Schweißnähten 77 verschweißt. Auf dem inneren Randbereich 206 des bodenseitigen Bodenblechs 203 liegt der äußere Randbereich 206 des unteren Bodenblechs 70 auf. Auf dem unteren Bodenblech 70 liegt eine Schicht 74 mit Stahlgittergewebe auf. Auf der Schicht mit Stahlgittergewebe 74 liegt das obere Bodenblech 46 auf, dessen äußerer Randbereich 205 sich bis zum Liegeblech 201 erstreckt und mit dem Liegeblech 201 vakuumdicht unter Bildung von vakuumdichten Schweißnähten 77 verschweißt ist. Der Zwischenraum K4 wird begrenzt von dem Stehblech 204 und dem Liegeblech 201 und dem bodenseitigen Liegeblech 202 und dem Bereich des Tankmantels 2, welcher dem Stehblech 204 und dem Liegeblech 201 zugewandt ist. Der Zwischenraum K2 wird begrenzt von dem oberen Bodenblech 46 , dem unteren Bodenblech 70, dem bodenseitigen Bodenblech 203 und einem Teil des bodenseitigen Liegeblechs 202.

Ein weiteres Ausführungsbeispiel des erfindungsgemäßen Tankbauwerks mit zwei vakuumdichten Zwischenräumen 71 als Überwachungskammern K1 und K2 umfasst als Randsegment zwei Stehbleche 43, 56, zwei Liegebleche 42, 55, und als Bodensegment 12 das obere Bodenblech 46 und das untere Bodenblech 70 sowie ein weiteres Bodenblech 203. Die Stehbleche 43, 56 und die Liegebleche 42, 55 sind in Richtung zu dem Tankboden 1 hin geneigt. Der äußere Randbereich B 10 des oberen Stehblechs 43 ist gegen den Tankmantel 2 angesetzt und mit diesem vakuumdicht unter Bildung von vakuumdichten Schweißnähten 77 verschweißt. Der äußere Randbereich B8 des unteren Stehblechs 56 ist gleichfalls gegen den Tankmantel 2 angesetzt und mit diesem vakuumdicht unter Bildung von vakuumdichten Schweißnähten 77 verschweißt. Der innere Randbereich B9 des oberen Stehblechs 43 ist gegen den äußeren Randbereich B4 des oberen Liegeblechs 42 angesetzt und gleichfalls vakuumdicht unter Bildung von vakuumdichten Schweißnähten 77 verschweißt. Der innere Randbereich B7 des unteren Stehblechs 56 ist gegen den äußeren Randbereich B2 des unteren Liegeblechs 55 angesetzt und gleichfalls mit diesem vakuumdicht verschweißt unter Bildung von vakuumdichten Schweißnähten 77. Die Neigung des unteren Liegeblechs 55 wird unterstützt durch einen Abstandshalter 6, der im äußeren Randbereich B2 des unteren Liegeblechs 55 zwischen dem unteren Liegeblech 55 und dem Tankboden 1 sich befindet. Auch die Neigung des oberen Liegeblechs 42 wird durch einen Abstandshalter 6 unterstützt, der im Bereich des äußeren Randbereichs B4 des oberen Liegeblechs 42 und dem äußeren Randbereich B2 des unteren Liegeblechs 55 sich befindet. Der innere Randbereich B1 des unteren Liegeblechs 55 ist gegen ein Bodenblech 203 angesetzt und mit diesem vakuumdicht unter Bildung von vakuumdichten Schweißnähten 77 verschweißt. Der innere Randbereich B3 des oberen Liegeblechs 42 ist gegen das untere Liegeblech 55 angesetzt und gleichfalls mit diesem vakuumdicht unter Bildung von vakuumdichten Schweißnähten 77 verschweißt. Das bodenseitige Bodenblech 203 verläuft parallel zu der Innenseite des Tankbodens 1. Der äußere Randbereich 205 des bodenseitigen Bodenblechs 203 ist mit dem Tankboden unter Bildung von gehefteten Verschweißungsstellen 77a verheftet. Ebenfalls ist der innere Randbereich 206 des bodenseitigen Bodenblechs 203 mit dem Tankboden lediglich unter Bildung von gehefteten Verschweißungsstellen 77a verheftet. Das untere Bodenblech 70 liegt mit seinem äußeren Randbereich B 12 auf dem inneren Randbereich 206 des bodenseitigen Bodenblechs 203 auf und ist mit diesem vakuumdicht unter Bildung von vakuumdichten Schweißnähten 77 verschweißt. Zwischen dem unteren Bodenblech 70 und dem oberen Bodenblech 46 ist eine Schicht 74 mit Stahlgittergewebe angeordnet, um das obere Bodenblech 46 von dem unteren Bodenblech 70 auf Abstand zu halten. Der äußere Randbereich B6 des oberen Bodenblechs 46 liegt auf dem Liegeblech 42 auf und ist mit diesem gleichfalls vakuumdicht unter Bildung von vakuumdichten Schweißnähten 77 verschweißt. Der Zwischenraum K1 wird begrenzt vakuumdicht von dem oberen Stehblech 43, dem unteren Stehblech 56, dem oberen Liegeblech 42 und dem unteren Liegeblech 55. Der weitere vakuumdichte Zwischenraum K2 wird begrenzt von dem oberen Bodenblech 46, dem unteren Bodenblech 70, einem Teil des bodenseitigen Bodenblechs 203 und einem Teil des oberen Liegeblechs 42 und des unteren Liegeblechs 55.

Ein Ausführungsbeispiel für ein erfindungsgemäßes Tankbauwerks mit zwei vakuumdichten Zwischenräumen 71 als Überwachungskammern K2 und K4 umfasst als Randsegment ein Stehblech 204 und ein Liegeblech 201 und als Bodensegment 12 ein Bodenblech 203. Das Stehblech 204 und das Liegeblech 201 sind wiederum in Richtung zu dem Tankboden 1 hin geneigt. Der äußere Randbereich 205 des Stehblechs 204 ist gegen den Tankmantel 2 angesetzt und mit diesem vakuumdicht verschweißt unter Bildung von vakuumdichten Schweißnähten 776. Der innere Randbereich 206 des Stehblechs 204 ist gegen den äußeren Randbereich 205 des Liegeblechs 201 angesetzt und wiederum mit diesem vakuumdicht unter Bildung von vakuumdichten Schweißnähten 77 verschweißt. Das Liegeblech 201 liegt mit seinem inneren Randbereich 206 gegen den Tankboden 1 auf und ist mit diesem vakuumdicht unter Bildung von vakuumdichten Schweißnähten 77 verschweißt. Das Bodenblech 203 verläuft parallel zu der Innenseite des Tankbodens 1. Der äußere Randbereich 205 des Bodenblechs 203 liegt auf dem Liegeblech 201 ist mit diesem vakuum+dicht unter Bildung von vakuumdichten Schweißnähten 77 verschweißt. Der Zwischenraum 71 als Überwachungskammer K4 wird begrenzt im Wesentlichen von dem Stehblech 204, dem Liegeblech 201 und den dem Stehblech 204 und dem Liegeblech 201 zugewandten Bereichen des Tankmantels 2 und Tankbodens 1. Der Zwischenraum 71 als Überwachungskammer K2 wird begrenzt im Wesentlichen von dem Bodenblech 203 und dem Tankboden 1.

In einem Ausführungsbeispiel des erfindungsgemäßen Tankbauwerks mit drei vakuumdichten Zwischenkammern 71 und Verfahrens sind zwei in Draufsicht halbkreisförmige Bodensegmente 12 auf den Tankboden 1 und das Randsegment 10 auf den Tankboden 1 angeordnet, wobei die Bodensegmente 12 mit dem Randsegment 10 in dem Rand-Bodensegment-Übergangsbereich 126 und die beiden Bodensegmente im Kammertrennungsbereich 124 miteinander vakuumdicht verbunden sind und kein Gas- und Flüssigkeitsaustausch zwischen dem Innenraum 207 des Tankbehälters und dem Raum zwischen den Bodensegmenten 12 und dem Randsegment 10 einerseits und dem Tankboden 1 andererseits stattfindet. Die Bodensegmente 12 werden jeweils mit einer über einen Teil des Tankbodens 1 sich erstreckenden in Draufsicht halbkreisförmigen Überwachungskammer K2, K3 ausgebildet, das Randsegment 10 wird mit einer über den inneren Randbereich BX bis zum äußeren Randbereich B des Tankbehälters sich erstreckenden Überwachungskammer K1 ebenso ausgebildet. Das Randsegment 10 wird mit der Innenseite des Tankmantels 2 vakuumdicht verschweißt, wobei die Überwachungskammer K1 des Randsegments 10 im Längsschnitt L-förmig ausgestaltet wird. In einem Ausführungsbeispiel des erfindungsgemäßen Tankbauwerks mit fünf vakuumdichten Zwischenkammern 71 und Verfahrens werden vier in Draufsicht viertelkreisförmige Bodensegmente 12 auf den Tankboden 1 und das Randsegment 10 auf den Tankboden 1 angeordnet, wobei die vier Bodensegmente 12 mit dem Randsegment 10 in dem Rand-Bodensegment-Übergangsbereich 126 und die vier Bodensegmente in den Kammertrennungsbereichen 124 miteinander vakuumdicht verbunden wird, wobei ein Kammertrennungsbereich 124 parallel zu der Querachse Q, der andere Kammertrennungsbereich 124 quer zu der Querachse verläuft. Die Bodensegmente 12 sind jeweils mit einer über einen Teil des Tankbodens 1 sich erstreckenden in Draufsicht viertelkreisförmigen Überwachungskammer K2, K3 ausgebildet, das Randsegment 10 wird mit einer über den inneren Randbereich BX bis zum äußeren Randbereich B des Tankbehälters sich erstreckenden Überwachungskammer K1 ebenso ausgebildet. Das Randsegment 10 wird mit der Innenseite des Tankmantels 2 vakuumdicht verschweißt, wobei die Überwachungskammer K1 des Randsegments 10 im Längsschnitt L-förmig ausgestaltet wird.

Das Herstellen eines unteren Teils des Randsegmentes 10 umfasst in einem Ausführungsbeispiel:
a. Anlegen von um eine Mitte-Längsachse M des Tankbehälters verlaufenden bodenseitigen Flacheisen 44 auf den Tankboden 1 und Vernieten der Flacheisen 44 dem Tankboden 1,
b. Auflegen von gleichartig ausgebildeten unteren Liegeblechbahnen 55a mit unterseitig angehefteten vorstehenden Flacheisen als Schweißbadsicherung mit Untergriff der Flacheisen für das untere ringförmige Liegeblech 55 auf den Tankboden 1 und die Flacheisen 44 und Verheften der Liegeblechbahnen mit den Flacheisen und der benachbarten unteren Liegeblechbahnen 55a miteinander,
c. Heften der inneren Randbereiche B1 der unteren Liegeblechbahnen 55a an die bodenseitigen angehefteten Flacheisen 44 im Bereich der Ansatzstellen 120,
d. Ansetzen von gleichartig ausgebildeten unteren Stehblechbahnen mit unterseitig angehefteten vorstehenden Flacheisen zur Schweißbadsicherung mit Untergriff der Flacheisen für das untere ringförmige Stehblech 56 gegen die unteren Liegeblechbahnen 55a und Verheften der benachbarten unteren Stehblechbahnen miteinander unter Ausbildung von geheftete Verschweißungsstellen 77a,
e. Heften der äußeren Randbereiche B 8 der unteren Stehblechbahnen an den Tankmantel 2 im Bereich der Ansatzstellen 120 unter Ausbildung von gehefteten Verschweißungsstellen 77a,
f. Heften der inneren Randbereiche B 7 der unteren Stehblechbahnen an die unteren Liegeblechbahnen 55a im Bereich der Ansatzstellen 120,
g. vakuumdichtes Verschweißen, vorzugsweise ohne Argonspülung, der benachbarten unteren Liegeblechbahnen 55a miteinander,
h. vakuumdichtes Verschweißen, vorzugsweise ohne Argonspülung, der benachbarten unteren Stehblechbahnen miteinander,
i. vakuumdichtes Verschweißen der inneren Randbereiche B7 der unteren Stehblechbahnen mit den Liegeblechbahnen 55a und der äußeren Randbereiche B8 der unteren Stehblechbahnen mit dem Tankmantel,
j. Überprüfen der Dichtigkeit der Schweißnähte.

In einem weiteren Ausführungsbeispiel werden zum Herstellen eines unteren Teils des Randsegmentes 10 anstelle des Schritts a., nämlich des Anlegens der bodenseitigen Flacheisen 44 auf den Tankboden 1, mit Schritt b. begonnen und die gleichartig ausgebildeten unteren Liegeblechbahnen 55a mit unterseitig angehefteten vorstehenden Flacheisen als Schweißbadsicherung mit Untergriff der Flacheisen für das untere ringförmige Liegeblech 55 auf den Tankboden 1 gelegt, die inneren Randbereiche der unteren Liegeblechbahnen mit dem Tankboden geheftet oder vakuumdicht verschweißt und die benachbarten unteren Liegeblechbahnen 55a miteinander verheftet sowie die weiteren Schritte d. bis j. durchgeführt.

Das Herstellen des oberen Teils des Randsegmentes 10 erfolgt in einem Ausführungsbeispiel durch die Schritte:
a. Ansetzen von Abstandshaltern 6 auf die unteren Liegeblechbahnen 55a und Heften der Abstandshalter 6 an die unteren Liegeblechbahnen 55a,
b. Ansetzen von gleichartig ausgebildeten oberen Liegeblechbahnen mit unterseitig angehefteten Flacheisen als Schweißbadsicherung mit Untergriff der Flacheisen für das obere ringförmige Liegeblech 42 gegen die Abstandshalter 6 und unteres Liegeblech 55 und Verheften der benachbarten oberen Liegeblechbahnen miteinander,
c. Ansetzen von gleichartig ausgebildeten oberen Stehblechbahnen mit unterseitig angehefteten Flacheisen als Schweißbadsicherung mit Untergriff der Flacheisen für das obere ringförmige Stehblech 43 gegen die oberen Liegeblechbahnen und Verheften der benachbarten oberen Stehblechbahnen miteinander,
d. Heften der inneren Randbereiche B3 der oberen Liegeblechbahnen an die unteren Liegeblechbahnen 55a im Bereich der Ansatzstellen 120,
e. Heften der äußeren Randbereiche B10 der oberen Stehblechbahnen an den Tankmantel 2 im Bereich der Ansatzstellen 120 unter Ausbildung von gehefteten Verschweißungsstellen 77a,
f. Heften der inneren Randbereiche B9 der oberen Stehblechbahnen an die oberen Liegeblechbahnen im Bereich der Ansatzstellen 120 unter Ausbildung von gehefteten Verschweißungsstellen 77a,
g. vakuumdichtes Verschweißen, vorzugsweise ohne Argonspülung, benachbarter oberer Liegeblechbahnen miteinander,
h. vakuumdichtes Verschweißen, vorzugsweise ohne Argonspülung, benachbarter oberer Stehblechbahnen miteinander und der äußeren Randbereiche B10 der oberen Stehblechbahnen mit dem Tankmantel 2,
i. vakuumdichtes Verschweißen der inneren Randbereiche B9 der oberen Stehblechbahnen mit den oberen Liegeblechbahnen und der inneren Randbereiche B3 der oberen Liegeblechbahnen mit den unteren Liegeblechbahnen 55a,
j. Überprüfen der Dichtigkeit der Schweißnähte 77.

Das Herstellen eines Teils des Bodensegmentes 12 erfolgt durch:
a. Auflegen von parallel zu einer Mitte-Querachse Q sich in einer Reihe erstreckenden bodenseitigen Unterlegflacheisen 111a mit unterseitig angehefteten Flacheisen als Schweißbadsicherung mit Untergriff der Flacheisen auf den Tankboden 1 und Vernieten der bodenseitigen Unterlegflacheisen 111a mit dem Tankboden 1,
b. Ansetzen von quer zu der Mitte-Querachse Q parallel zueinander sich erstreckenden Reihen von in Reihe angeordneter bodenseitiger Unterlegflacheisen 111b mit unterseitig angehefteten Flacheisen als Schweißbadsicherung mit Untergriff der Flacheisen auf den Tankboden 1 und Vernieten der bodenseitigen Unterlegflacheisen 111b mit denselben und Verheften der benachbarten bodenseitigen Unterlegflacheisen 111a miteinander und Verheften der benachbarten bodenseitigen Unterlegflacheisen 111b miteinander, ggf. Verschweißen der an das Randsegment angrenzenden bodenseitigen Unterlegflacheisen 111a, 111b mit unterem Teil des Randsegmentes 10, z.B. mit dem unteren Liegeblech 55,
c. vakuumdichtes Verschweißen, vorzugsweise ohne Argonspülung, benachbarter Unterlegflacheisen 111 a, 111 b miteinander,
d. Auflegen von gleichartig ausgebildeten oberseitigen Unterlegflacheisen 112a mit unterseitig angehefteten Flacheisen als Schweißbadsicherung mit Untergriff der Flacheisen mittig auf die längs der Mitte-Querachse Q verlaufenden bodenseitigen Unterlegflacheisen 111a und von gleichartig ausgebildeten oberseitigen Unterlegflacheisen 112b ohne Flacheisen mittig auf die quer zu der Mitte-Querachse verlaufenden bodenseitigen Unterlegflacheisen 111b und beabstandet von oberseitigen Unterlegflacheisen 112a, 112b und
e. Auflegen von unteren Bodenblechbahnen auf die bodenseitigen Unterlegflacheisen 111a, 111b und von äußeren Randbereichen der unteren Bodenblechbahnen B 12 auf einen Teil des unteren Liegeblechs 55 des Randsegments 10 und Heften der unteren Bodenblechbahnen an die bodenseitigen Unterlegflacheisen 111a, 111b und das untere Liegeblech 55 sowie vakuumdichtes Verschweißen von äußeren Randbereichen der unteren Bodenblechbahnen B 12 an unteres Liegeblech.

Das Herstellen der im Bereich der Mitte-Querachse Q verlaufenden Verbindung von zwei benachbarten Bodensegmenten 12 zum hermetischen Verschluss oder Trennung der beiden Überwachungskammern K2 und K3 der zwei benachbarten Bodensegmenten 12 voneinander im Kammertrennungsbereich 124 :
a. vakuumdichtes Verschweißen, vorzugsweise ohne Argonspülung, der inneren Randbereiche B 11 der unteren Bodenblechbahnen mit den bodenseitigen Unterlegflacheisen 111a,
b. vakuumdichtes Verschweißen einer Seite der oberseitigen Unterlegflacheisen 112a mit den bodenseitigen Unterlegflacheisen 111a,
c. Heften der der einen Seite gegenüber liegenden anderen Seite der oberseitigen Unterlegflacheisen 112a an die bodenseitigen Unterlegflacheisen 111a,
d. Auflegen je einer Schicht mit Stahlgittergewebe 74 auf die unteren Bodenblechbahnen oder einen Teil derselben,
e. Auflegen von oberen Bodenblechbahnen auf die Schicht mit Stahlgittergewebe 74 und auf die oberseitigen Unterlegflacheisen 112a mit voneinander beabstandeten inneren Randbereichen B5 der oberen Bodenblechbahnen und der äußeren Randbereiche B 6 derselben auf einen Teil des oberen Liegeblechs 42 des Randsegments 10,
f. Heften der voneinander beabstandeten inneren Randbereichen B5 der oberen Bodenblechbahnen an die oberseitigen Unterlegflacheisen 112a und der äußeren Randbereiche B 6 an das obere Liegeblech 42,
g. vakuumdichtes Verschweißen, vorzugsweise ohne Argonspülung, der voneinander beabstandeten inneren Randbereichen B5 der oberen Bodenblechbahnen mit den oberseitigen Unterlegflacheisen 112a und der äußeren Randbereiche B 6 an das obere Liegeblech 46.

In den Ausführungsbeispielen werden das Herstellen der Bahnentrennung eines Bodensegments 12 im Bahnentrennungsbereich 125 der Übersichtlichkeit halber getrennt von dem Verfahrens des Herstellens des Kammertrennungsbereichs 124 und dem Verfahren des Herstellens des Randsegments 10 usw. beschrieben; das erfindungsgemäße Verfahren kann jedoch diese Verfahren zum Herstellen des Bahnentrennungsbereichs 125 mit dem Verfahren zum Herstellen des Kammertrennungsbereichs 124 und /oder dem Verfahren des Herstellens des Randsegments 10 kombiniert umfassen.

Das Herstellen des Bahnentrennungsbereichs 125 erfolgt durch:
a. vakuumdichtes Verschweißen, vorzugsweise ohne Argonspülung, der Seitenbereiche 70b der unteren Bodenblechbahnen mit den bodenseitigen Unterlegflacheisen 111b,
b. Heften der oberseitigen Unterlegflacheisen 112b an die bodenseitigen Unterlegflacheisen 111b,
c. Auflegen je einer Schicht mit Stahlgittergewebe 74 auf die unteren Bodenblechbahnen,
d. Auflegen der einen oberen Bodenblechbahn 46a mit seinem Seitenbereich 46b auf einen Teil der oberseitigen Unterlegflacheisen 112b und auf die Schicht mit Stahlgittergewebe 74 sowie Heften des Seitenbereichs 46b der einen oberen Bodenblechbahn 46a an die oberseitigen Unterlegflacheisen 112b,
e. Auflegen einer weiteren oberen Bodenblechbahn 46a auf die oberseitigen Unterlegflacheisen 112b, die andere Schicht mit Stahlgittergewebe 74 sowie auf den Seitenbereich 46b der einen oberen Bodenblechbahn 46b zwecks Überlappung der Seitenbereiche 46b im Überlappungsbereich 92,
f. vakuumdichtes Verschweißen, vorzugsweise ohne Argonspülung, des von dem Tankboden 1 abgewandten Seitenbereichs 46b der weiteren oberen Bodenblechbahn 46b mit der einen oberen Bodenblechbahn 46b.

In einem Ausführungsbeispiel entspricht die Dicke D1 der unteren Steh- oder Liegeblechbahn, der oberen Steh- oder Liegeblechbahn z.B. 3 mm) dem 3Fachen der Dicke D2 der unteren oder oberen Bodenblechbahn (z.B. 1 mm); die Bodenblechbahnen werden in aufgerollter Form angeliefert, in das Tankbauwerk verbracht und leicht in diesem verlegt. Auch sind die Bodenblechbahnen aus Edelstahl mit einem hochwertigen Material (z.B. 1.4404 oder 1.4539) hergestellt.

Der eine Seitenbereich 46b der einen benachbarten oberen Bodenblechbahn 46a überragt im Bahnentrennungsbereich den einen Seitenbereich 46b der anderen oberen Bodenblechbahn 46a, die der einen oberen Bodenblechbahn benachbart ist, um einen Wert W3. In einem Ausführungsbeispiel entspricht der Wert W3 einem Fünftel oder einem Viertel des Wertes W2. Der Wert W 3 ist der Abstand der Kante 94 des einen Seitenbereichs 46b der oberen Bodenblechbahn 46a von der Kante 94 des Seitenbereichs 46 der anderen benachbarten Bodenblechbahn 46a.

Im Einzelnen: Ausführungsbeispiel: Montage des unteren Teils des Randsegmentes

Das Randsegment 10 umfasst den unteren Teil, der das untere Liegeblech 55 und das untere Stehblech 56 umfasst, und den oberen Teil, der das obere Liegeblech 42 und das obere Stehblech 43 umfasst. An den Ansatzstellen 120 sind das untere Stehblech 56 mit dem Tankmantel 2 und dem unteren Liegeblech 55, das obere Liegeblech 42 mit dem unteren Liegeblech 55 und den Abstandshaltern 6, das obere Stehblech 43 mit dem Tankmantel und dem oberen Liegeblech vakuumdicht verschweißt.

In einem besonderen Ausführungsbeispiel werden in einem vorbestimmten Abstand, z.B. von 286mm, von dem Tankmantel 2 vorgefertigte bodenseitige Flacheisen 44 mit Edelstahlnieten im inneren Randbereich BX des Tankbehälters und des Tankbodens 1 umlaufend auf die Schicht 9 mit glasfaserverstärktem kunststoffartigen Material vernietet. Da bei herkömmlichen Tankbauwerken die Schicht mit glasfaserverstärkten kunststoffartigen Materialien 9 im Randbereich geneigt ist, so dass die dem Tankboden abgewandte Oberseite der Schicht 9 von dem inneren Randbereich BX zu dem äußeren Randbereich B in Richtung hin zu dem Tankmantel 2 ansteigt, ist es von Vorteil, eine Betonschicht 3 aufzubringen, welche im Längsschnitt als Betonkeil ausgebildet ist. Die Betonschicht dient als Auflage für das untere Liegeblech 55. Die Betonschicht 3 ist umlaufend um die Mitte-Längsachse M des Tankmantels 2 oder den Kreismittelpunkt KM des kreisrunden Tankbodens 1 angeordnet und verläuft in der Draufsicht ringförmig. Die gegen den Tankmantel 2 und den Tankboden 1 angegossene Betonschicht 3 umfasst eine herkömmliche Zusammensetzung.

In dem dem Tankmantel 2 zugewandten oberen Bereich der Betonschicht 3 ist die um die Mitte-Längsachse M ringförmig verlaufende Kehle 72 eingezogen. Nach dem Aushärten der Betonschicht 3 wird eine Feuerschutzdecke 7 auf die Kehle 72 und gegen die Innenseite des Tankmantels 2 L-förmig gelegt und mit diesem verklebt. Auf die Feuerschutzdecke 7 wird eine Aluminiumfolie 8, vorzugsweise von 1 mm, Schichtdicke, L-förmig gelegt und mit dieser auch verklebt. Die Feuerschutzdecke 7 ist eine herkömmliche Hochtemperatur-Feuerschutzdecke mit anorganischen und / oder organische Stoffe als sogenannte Flammschutzmittel. Die Feuerschutzdecke 7 und die Aluminiumfolie 8 bilden die L-förmige Zweischichtenanordnung 79 . Die Feuerschutzdecke 7 und die Aluminiumfolie 8 dienen als Feuer- und Wärmeschutz beim Schweißen der Kehlnaht bzw. Schweißnaht zwischen dem unteren Liegeblech 55 und dem unteren Stehblech 56, um ein Entzünden des glasfaserverstärkten kunststoffartigen Materials der Schicht 9 zu vermeiden.

Das untere Liegeblech 55, das untere Stehblech 56, das obere Stehblech 43 und das obere Liegeblech 42 werden aus Bahnen oder Segmenten jeweils zusammengesetzt, die als untere Liegeblechbahnen 55a, untere Stehblechbahnen, obere Stehblechbahnen und obere Liegeblechbahnen bezeichnet werden. Das untere Liegeblech, das obere Liegeblech, das untere Stehblech und das obere Stehblech werden aus Segmenten oder Bahnen zusammengesetzt. An einem Teil der Rückseite jeder Bahn, z.B. der unteren Liegeblechbahn 55a, oder jedes Segments, vorzugsweise an einer Hälfte derselben, ist ein plattenförmiges Flacheisen 44 angeschweißt, vorzugsweise geheftet, so dass ein Teil 121 des Flacheisens 44 über die eine Seite der Bahn 55a um ein vorbestimmtes Maß übersteht. Das Flacheisen 44 erstreckt sich über die gesamte Länge dieser Seite der Bahn.

Bei dem Zusammensetzen oder -fügen der solcherart ausgebildeten, gleichartig ausgebildeten Bahnen, z.B. unteren Liegeblechbahnen 55a,stößt die dem vorragenden Teil 121 des Flacheisens 44 zugewandte Seite der einen gleichartig ausgebildeten Bahn, z.B. der unteren Liegeblechbahn 55a, gegen die Seite einer anderen gleichartig ausgebildeten Bahn, z.B. der unteren Liegeblechbahn 55a, an einer gemeinsamen Stoßstelle 120a Stoß an Stoß, auch Stoß gegen Stoß genannt, an, so dass die andere gleichartig ausgebildete Bahn 55a, z.B. der unteren Liegeblechbahn 55a, mit einem Teil ihrer Rückseite, vorzugsweise mit der Hälfte derselben, gegen das Flacheisen 44 der einen ihr benachbarten gleichartig ausgebildeten Bahn, z.B. der unteren Liegeblechbahn 55a, zum Anliegen gelangt. Nach dem Zusammensetzen der beiden gleichartig ausgebildeten Bahnen werden diese an ihrer gemeinsamen Stoßstelle miteinander unter Bildung von Stoßnähten geheftet, danach werden beide mittels WIG-Schweißverfahren ohne Argonspülung zur Bildung vakuumdichter Schweißnähte 77 miteinander verschweißt.

Unter Miteinanderverheften von Bahnen, z.B. unteren Liegeblechbahnen 55a, oder Verheften von Bahnen, z.B. der unteren Liegeblechbahn 55a, miteinander wird im Sinne der Erfindung das punktweise Verschweißen von zwei benachbarter an der gemeinsamen Stoßstelle einander angrenzender Bahnen auch verstanden. Im Sinne der Erfindung wird unter mit Untergriff der Flacheisen 44 auch das Ansetzen des Flacheisens 44 einer Bahn, z.B. der unteren Liegeblechbahn 55a, gegen die Rückseite einer gleichartig ausgebildeten anderen Bahn, z.B. der unteren Liegeblechbahn 55a, bei dem Zusammensetzen beider Bahnen, zur Bereitstellung z.B. des unteren Liegeblechs 55, verstanden. Im Sinne der Erfindung wird unter Schweißbadsicherung auch das Abdecken der Rückseiten und der Stoßstellen der zusammengesetzten benachbarter Bahnen, z.B. der unteren Liegeblechbahn 55a, durch an deren Rückseiten angeschweißten Flacheisen 44 verstanden, so dass eine Argonspülung bei dem vakuumdichten Verschweißen der Stoßstellen beider Bahnen, z.B. der unteren Liegeblechbahn 55a, zur Bildung vakuumdichter Schweißnähte 77 mittels WIG-Schweißverfahren sich erübrigt.

In einem Ausführungsbeispiel werden die benachbarten Bahnen oder Segmente eines Blechs, wie eines Stehblechs oder eines Liegeblechs, ringförmig oder radial um den Kreismittelpunkt KM verlegt, liegen mit den Kanten ihrer angrenzenden Seiten Stoß an Stoß an, wobei die eine Bahn die benachbarte mit ihrem an ihrer Rückseite angeschweißten Flacheisen untergreift als Untergriff mit Flacheisen bezeichnet. So wird vor der Montage des unteren Liegeblechs 55 und des unteren Stehblechs 56, als auch des oberen Stehblechs 43 und des oberen Liegeblechs 42 ein Flacheisen 44 gegen deren dem Tankboden 1 zugewandten Seite, Rück- oder Unterseite genannt, von jeder Bahn oder Blech angelegt und zur Bereitstellung einer Schweißbadsicherung mit der Rückseite verschweißt, z.B. punktweise verschweißt, vorzugsweise geheftet, welches Flacheisen z.B. 2mm stark, 20mm breit in entsprechender Länge sein kann. Auch wird der innere Randbereich B1 des unteren Liegeblechs mit dem bodenseitigen Flacheisen 44 geheftet.

In einem weiteren Ausführungsbeispiel werden die vorgefertigten Liegebleche als untere Liegeblechbahnen des unteren Liegeblechs 55 auf die Betonschicht 3 ausgelegt; wobei jeweils zwei benachbarte gleichartig ausgebildete untere Liegeblechbahnen mit ihren einander angrenzenden Seiten bzw. deren Kanten Stoß auf Stoß einander anliegen, ringförmig um den Kreismittelpunkt KM des Tankbodens 1 ausgerichtet sind, auf dem über die Seite der einen Liegeblechbahn hinaus hervorragenden Teil des Flacheisens die benachbarte andere untere Liegeblechbahn zumindest teilweise zum Aufliegen gelangt und die andere untere Liegeblechbahn an das Flacheisen der einen unteren Liegeblechbahn punktweise verschweißt, vorzugsweise geheftet, wird zwecks Lagesicherung.

Vorgefertigte Stehbleche werden im Bereich der Ansatzstellen 120 als gleichartig ausgebildete untere Stehblechbahnen des unteren Stehblechs 56 gegen den Tankmantel 2 und gegen die unteren Liegeblechbahnen unter Bildung eines Winkels γ mit dem Tankmantel 2 im Bereich der Ansatzstellen 120 angesetzt, wobei jeweils zwei benachbarte untere Stehblechbahnen mit ihren einander angrenzenden Seiten bzw. deren Kanten Stoß auf Stoß anliegen, ringförmig um den Kreismittelpunkt KM des Tankbodens 1 ausgerichtet sind, auf dem über die Seite der einen unteren Stehblechbahn hinaus hervorragenden Teil des Flacheisens 44 die benachbarte andere untere Stehblechbahn zumindest teilweise aufliegt und die andere untere Stehblechbahn an das Flacheisen der einen unteren Stehblechbahn punktweise verschweißt, vorzugsweise geheftet, wird. In dem Bereich (Ansatzstellen 120), an welchem die unteren Stehblechbahnen gegen die unteren Liegeblechbahnen angesetzt sind, werden die unteren Stehblechbahnen mit den unteren Liegeblechbahnen sowie mit dem Tankmantel 2 punktweise miteinander verschweißt, vorzugsweise geheftet. Das untere Stehblech schließt einen Winkel γ mit dem Tankmantel 2, von z.B. 3⁰ oder 4⁰ ein.

Anschließend werden die jeweils einander angrenzenden Seiten oder deren Kanten der unteren Liegeblechbahnen des unteren Liegeblechs 55 unter Bildung von Stoßnähten, vorzugsweise mit Hilfe eines WIG-Schweißverfahrens, vakuumdicht verschweißt, ohne dass eine Argonspülung erforderlich ist, und die jeweils einander angrenzenden Seiten oder deren Kanten der unteren Stehblechbahnen des unteren Stehblechs 56 unter Bildung von Stoßnähten, vorzugsweise mit Hilfe eines WIG-Schweißverfahrens, vakuumdicht verschweißt, ohne dass eine Argonspülung erforderlich ist.

Danach erfolgt das vakuumdichte Verschweißen der äußeren Randbereiche B8 der unteren Stehblechbahnen des unteren Stehblechs 56 mit dem Tankmantel 2 mit Hilfe des WIG-Schweißverfahrens mit Elektrode. Daraufhin wird der Bereich, an welchem die unteren Stehblechbahnen mit ihren inneren Randbereichen B7 gegen die unteren Liegeblechbahnen bzw. deren äußeren Randbereichen B2 angesetzt und miteinander geheftet sind, unter Bildung einer Schweiß- oder Verbindungsnaht, vorzugsweise durch ein Schweißverfahren mit Elektrode vakuumdicht verschweißt. Danach werden die Schweißnähte gesäubert, insbesondere gebürstet, und zur Dichtheitsprüfung vorbereitet. Nach erfolgter Prüfung wird das untere Liegeblech des unteren Teils des Randsegmentes an Abstandshalter 6 geheftet.

In einem Ausführungsbeispiel wird eine in einem Sprühbehälter enthaltende Flüssigkeit, welche eine Flüssigseife in einer wässrigen Lösung enthält, mittels einer handbetätigbaren Pumpe auf eine vorbestimmte Fläche einer zu überprüfenden Schweißnaht aufgesprüht, gegen die vorbestimmte Fläche einer einen Zwischenraum 71 vakuumdicht verschließenden Schweißnaht wird eine Vakuumhaube angesetzt, dann wird der Innenraum der Vakuumhaube evakuiert, insbesondere wird in der Vakuumhaube ein Vakuum, vorzugsweise von -0,8 bis - 1,0 bar, erzeugt, welche Vakuumhaube mit einer an einen Rahmen gekoppelten Scheibe mit mindestens zwei ventilgesteuerte Öffnungen ausgebildet wird, und werden der Zwischenraum 71 mit Argon mit einem Prüfdruck von 0,3 bis 0,8 bar beaufschlagt und die zu überprüfende Fläche auf Blasenentstehen in der aufgesprühten Flüssigseife geprüft.

Montage des oberen Liegeblechs und oberen Stehblechs des Randsegmentes

Die Montage und das Verschweißen erfolgt in der oben bereits ausgeführten Vorgehensweise wie bei der Montage des unteren Liegeblechs 55 und des unteren Stehblechs 56 des unteren Teils des Randsegmentes 10, wobei auch die vakuumdichte Schweiß- oder Verbindungsnaht zwischen dem inneren Randbereich des oberen Liegeblechs und mit dem unteren Liegeblech bereitgestellt wird.

So werden die vorgefertigten Liegebleche als obere Liegeblechbahnen des oberen Liegeblechs 42 gegen die unteren Liegeblechbahnen 55 und die Abstandshalter 6 angesetzt, wobei jeweils zwei benachbarte obere Liegeblechbahnen mit ihren einander angrenzenden Seiten bzw. deren Kanten Stoß auf Stoß einander anliegen, ringförmig um den Kreismittelpunkt KM des Tankbodens 1 ausgerichtet sind, auf dem über die Seite der einen oberen Liegeblechbahn hinaus hervorragenden Teil des Flacheisens die benachbarte andere obere Liegeblechbahn zumindest teilweise aufliegt und die andere obere Liegeblechbahn an das Flacheisen der einen oberen Liegeblechbahn punktweise verschweißt, vorzugsweise geheftet, wird.

Vorgefertigte Stehbleche werden als obere Stehblechbahnen des oberen Stehblechs 43 gegen den Tankmantel 2 und gegen die unteren Liegeblechbahnen angesetzt, wobei jeweils zwei benachbarte obere Stehblechbahnen mit ihren einander angrenzenden Seiten bzw. deren Kanten Stoß auf Stoß anliegen, ringförmig um den Kreismittelpunkt KM des Tankbodens 1 ausgerichtet sind, auf dem über die Seite der einen oberen Stehblechbahn hinaus hervorragenden Teil des Flacheisens die benachbarte andere obere Stehblechbahn zumindest teilweise aufliegt und die andere obere Stehblechbahn an das Flacheisen der einen oberen Stehblechbahn punktweise verschweißt, vorzugsweise geheftet, wird. In dem Bereich der Ansatzstellen 120, an welchem die oberen Stehblechbahnen gegen die oberen Liegeblechbahnen angesetzt sind, werden die oberen Stehblechbahnen mit den oberen Liegeblechbahnen sowie mit dem Tankmantel 2 punktweise miteinander verschweißt, vorzugsweise geheftet. Das obere Stehblech 43 schließt mit dem Tankmantel 2 einen Winkels δ von z.B. 8⁰ oder 10⁰ ein.

Anschließend werden die jeweils einander angrenzenden Seiten oder deren Kanten der oberen Liegeblechbahnen unter Bildung von Stoßnähten, vorzugsweise mit Hilfe eines WIG-Schweißverfahrens, vakuumdicht verschweißt, ohne dass eine Argonspülung erforderlich ist, und die jeweils einander angrenzenden Seiten oder deren Kanten der oberen Stehblechbahnen unter Bildung von Stoßnähten, vorzugsweise mit Hilfe eines WIG-Schweißverfahrens, vakuumdicht verschweißt, ohne dass eine Argonspülung erforderlich ist.

Danach erfolgt das vakuumdichte Verschweißen der äußeren Randbereiche B10 der oberen Stehblechbahnen des oberen Stehblechs 43 mit dem Tankmantel 2 mit Hilfe des Schweißverfahrens mit Elektrode (VI). Daraufhin wird der Bereich, an welchem die oberen Stehblechbahnen gegen die oberen Liegeblechbahnen und deren äußeren Randbereiche B4 angesetzt und miteinander punktweise verschweißt, vorzugsweise geheftet, sind, unter Bildung einer Schweiß- oder Verbindungsnaht, vorzugsweise durch Schweißverfahren mit Elektrode vakuumdicht verschweißt. Danach werden die Schweißnähte gesäubert, insbesondere gebürstet, und zur Dichtheitsprüfung vorbereitet und auf Dichtigkeit geprüft.

Zur Montage des Mess-, Saug- und Prüfstutzens des Randsegmentes mit Überwachungskammer kann durch die Bereitstellung des umlaufenden Randsegmentes 10 mit den unteren und den oberen Liegeblechbahnen und den unteren und oberen Stehblechbahnen wird die Kammer K1 als Überprüfungskammer bereitgestellt werden, deren Dichtigkeit mit Hilfe des Mess-, Saug- und Prüfstutzens 05 überprüft werden kann.
7

Die Positionen der Mess-, Saug- und Prüfstutzen 05 z.B. der Kammer 1 wird festgelegt. Anschließend wird ein Durchbruch durch den Tankmantel 2 für das Rohr 5, auch Stutzenrohr genannt, gefräst. Der vorgefertigte Saug-, Mess- und Prüfstutzen 05 für Kammer 1 wird mit dem dem Durchbruch des Tankmantels 2 begrenzenden Bereich miteinander punktweise verschweißt, vorzugsweise geheftet, wie mittels WIG-Schweißverfahren mit Argonspülung. Gleichfalls wird ein Durchbruch aus dem oberen Liegeblech 42 herausgefräst und das untere Ende des Stutzenrohrs 05 mit dem Bereich des den Durchbruch begrenzenden oberen Liegeblechs 42 vakuumdicht verschweißt, wie mittels WIG-Schweißverfahren ohne Argonspülung. Ein Verstärkungsring 11 wird gesetzt, welcher sowohl mit dem oberen Liegeblech 42 als auch mit dem Stutzenrohr 5 verschweißt wird, wie mittels WIG-Schweißverfahren ohne Argonspülung. Die Schweißnähte werden gesäubert, gebürstet und auf Dichtigkeit geprüft.

Nach einem herkömmlichen Verfahren werden der Mess-, Saug- und Prüfstutzen mit einem Blinddeckel verschlossen und an das Stutzenrohr 5 ein herkömmlicher Leckanzeiger, vorzugsweise ein Vakuumschreiber mit zusätzlichem Wetterschreiber, und eine Vakuumpumpe zur Erzeugung von -600mbar angeschlossen.

Auch kann der vorgefertigte Saug-, Mess- und Prüfstutzen als ein Rohr 05 mit einem Edelstahlmaterial mit einer Rohrwanddicke von 1" ausgebildet sein, um eine Heftung des Edelstahlrohrs 05 an dem Tankmantel zu vermeiden; vor dem ggf. Biegen des Rohrs wird eine Verstärkungshülse 02 als -rohr auf das Edelstahlrohr 05 geschoben und die Verstärkungshülse 02 mit dem Rohr 05 verschweißt (mit Hilfe des WIG-Schweißverfahrens ).

Montage der Bodensümpfe, der Auflagen für Schwimmdachfüße und der Verstärkungsplatten der Saug-, Mess- und Prüfstutzen der Kammern 2 und 3 der Bodensegmente
Die beiden Bodensumpfbehälter 54, 58, welche voneinander beabstandet sind, werden an Kragenbleche 53, 47 angeschweißt, gesäubert und geprüft. Anschließend wird das untere Kragenblech 53, an dessen Unterseite der obere Rand 54a des unteren Bodensumpfbehälters 54 und an dessen dem oberen Bodensumpfbehälter 58 zugewandten Rand der obere Rand 53a des oberen Bodensumpfbehälters 58 angeschweißt sind, unterseitig mit der Dreischichtenanordnung 73 versehen und mit dem Tankboden 1 und der Schicht 9 vernietet 93. Die Dreischichtenanordnung 73 umfasst als obere Lage eine Aluminiumfolie 73a, eine mittlere Lage mit Stahlgittergewebe 73b und eine untere Schicht mit Aluminiumfolie 73c. Diese Dreischichtenanordnung 73 dient zur Beabstandung des unteren Kragenblechs 53 von der Schicht mit dem glasfaserverstärkten kunststoffartigen Materials 9 und schützt sie vor der Einwirkung der Wärme, die von nachfolgenden Schweißarbeiten erzeugt wird, um Brand- und Gesundheitsgefahren durch Entstehen der Schweißgase auszuschließen. Auch an den dem oberen Bodensumpfbehälter 58 zugewandten Rand des oberen Kragenblechs 47 wird der obere Rand des oberen Bodensumpfbehälters 58 (mittels WIG-Schweißverfahren) angeschweißt.

Zwischen dem oberen Kragenblech 47 und dem unteren Kragenblech 53 wird eine Schicht mit verzinktem Stahlgittergewebe 74 (z.B. Ø 1mm/13, 1000mm breit) angeordnet und mit Klebeband fixiert. Der in dem Tankboden 1 eingelassene untere Bodensumpfbehälter 54 mit dem unteren Kragenblech 53 nimmt den oberen Bodensumpfbehälter 58 auf. Die den Bodensumpfbehältern 54, 58 abgewandten Ränder der unteren und der oberen Kragenbleche 47, 53 werden miteinander vorzugsweise geheftet. Auf dem Bereich des unteren Kragenblechs 53, welcher dem unteren Bodensumpfbehälter 54 abgewandt ist, liegt das untere Bodenblech 70 auf und ist mit diesem vakuumdicht verschweißt, wie durchgeschweißt, insbesondere der Bereich des unteren Bodenblechs, der dem unteren Bodensumpfbehälter 54 zugewandt ist.

Auf dem Bereich des unteren Kragenblechs 53, der dem unteren Bodensumpfbehälter 54 zugewandt ist, liegt eine Schicht 74 aus Stahlgittergewebe, auf welcher das obere Kragenblech 47 des oberen Bodensumpfbehälters 58 ruht, welches die Öffnung des oberen Bodensumpfbehälters 58 begrenzt. Das obere Bodenblech 46 verläuft von der dem Bodensumpfbehälter abgewandten Schicht 74 mit Stahlgittergewebe bis zu dem oberen Kragenblech. Der dem Bodensumpfbehälter zugewandte Randbereich des unteren Bodenblechs ist mit dem unteren Kragenblech und dessen äußeren Randbereich B 14 vakuumdicht verschweißt. Der dem Bodensumpfbehälter zugewandte Randbereich des oberen Bodenblechs ist vakuumdicht mit dem inneren Randbereich B 13 des oberen Kragenblechs verschweißt. Durch diese Ausgestaltung wird sichergestellt, dass der als Überwachu ngskammer bereitgestellte Zwischenraum des Bodensegmentes seitlich vakuumdicht gleichfalls verschweißt bzw. hermetisch nach außen verschlossen ist.

In der Ausgestaltung des erfindungsgemäßen Tankbauwerks mit einer auf dem Tankboden aufgetragenen GFK-Schicht 9 befindet sich unter dem unteren Kragenblech 53 die Dreischichtenanordnung 73, welche flächenmäßig mit der Unterseite des unteren Kragenblechs 53 übereinstimmt. Die Dreischichtenanordnung 73 ist mit der GFK-Schicht 9 und dem Tankboden 1 vernietet 93. Das untere Kragenblech ruht auf der Dreischichtenanordnung. Der weitere Aufbau erfolgt wie oben ausgeführt.

Die Montage der Auflagen 49, 49a für die Schwimmdachfüße wird mit zwei Hydraulikpressen durchgeführt. Jeder Schwimmdachfuß wird in Richtung zu dem Schwimmdach hoch gedrückt und die Auflagebleche 49, 49a für die Schwimmdachfüße mit dem oberen Bodenblech 46 und unteren Bodenblech 70 entsprechend der Anordnung der Bodensümpfe 54, 58 auf der Schicht mit glasfaserverstärktem kunststoffartigen Material 9 montiert.

In einem Ausführungsbeispiel weist der Bereich des Tankbodens 1 als Auflage für Schwimmdachfüße der Schwimmdecke zwei übereinander angeordnete Auflagenbleche 49, 49a auf, zwischen denen eine Schicht mit Stahlgittergewebe 74 Fläche auf Fläche angeordnet sein kann, wobei auf dem äußeren dem oberen Bodenblech zugewandte Randbereich des oberen Auflagenblechs 49 das obere Bodenblech Fläche an Fläche aufliegt und mit dem oberen Auflageblech 49 vakuumdicht verschweißt ist. Der dem oberen Bodenblech 46 zugewandte Randbereich des oberen Auflagenblechs 49 ist mit dem unteren mit dem Tankboden vernieteten Auflageblech 49a verheftet. In der Ausführung mit der auf dem Tankboden auf-gebrachten GFK-Schicht liegt das untere Auflageblech 49a auf der Dreischichtenanordnung 73 auf, welche auf der GFK-Schicht 9 angeordnet ist. Das untere Auflageblech 49a ist mit der Dreischichtenanordnung 73, der GFK-Schicht 9 und dem Tankboden 1 vernietet. Die weitere Ausgestaltung entspricht der Ausbildung ohne GFK-Schicht. Der Bereich des Tankbodens, welcher als Auflage für die Schwimmdachfüße vorgesehen ist, kann einen Aufbau aufweisen, welcher mit der Ausführungsform des erfindungsgemäßen Tankbauwerks zur Bereitstellung von Bodensümpfen weitgehend übereinstimmen kann.

Die Montage der Verstärkungsplatten der Saug-, Mess- und Prüfstutzen der Kammern 2 und 3 der Bodensegmente werden baugleich der Montage der Bodensümpfe 54, 58 und Auflagen 49, 49a montiert.

Anschließende Montage der Kammertrennung und der Bahnentrennung des unteren Bodenblechs

Der Bereich der Kammertrennung trennt zwei Bodensegmente 12 mit inneren Randbereichen 90 voneinander, der die der Mitte-Querachse zugewandten geradlinigen Begrenzungen 81 umfasst. Der Bereich der Bahnentrennung verbindet zwei benachbarte untere Bodenblechbahnen und deren Seitenbereiche 70b miteinander und zwei oberhalb von diesen angeordnete obere Bodenblechbahnen und deren Seitenbereiche 46b miteinander.

Als sogenannte Schweißbadsicherung wird an der dem Tankboden 1 zugewandten Rückseite, auch Unterseite genannt, von jedem bodenseitigen Unterlegflacheisen 111b ein Flachweisen (z.B. 2mm stark, 20mmbreit, mit entsprechender Länge) punktweise angeschweißt, vorzugsweise angeheftet, welche zur Trennung der Bahnen bzw. zur Kopplung der Bodenblechbahnen des Bodensegmentes verwendet werden können, wobei bei dem Zusammensetzen der Unterlegflacheisen ein Teil des Flacheisens über die Seite des bodenseitigen Unterlegflacheisens 111b hinausragt und zur Auflage eines benachbarten gleichartig ausgebildeten bodenseitigen Unterlegflacheisens 111b bei Verlegung derselben in Reihe und Stoß an Stoß dient.

Als sogenannte Schweißbadsicherung wird auch an der dem Tankboden zugewandten Rückseite, oder auch Unterseite genannt, von jedem bodenseitigen Unterlegflacheisen 111a für die Kammertrennung ein Flacheisen (z.B. 2mm stark, 20mmbreit, mit entsprechender Länge) punktweise angeschweißt, vorzugsweise angeheftet, welche die Kammer 2 von der Kammer 3 der Bodensegmente 12 trennen, so dass ein Teil des Flacheisens über die Seite des bodenseitigen Unterlegflacheisens 111a hinausragt und zur Auflage eines benachbarten gleichartig ausgebildeten bodenseitigen Unterlegflacheisens 111a dient.

Jetzt werden von der Achse 0°/360° in Richtung Achse 180° auf der Schicht 9 mit dem glasfaserverstärktem kunststoffartigen Material in Reihe die gleichartig ausgebildeten bodenseitigen Unterlegflacheisen 111a, auch Bleche oder Bodenflacheisen genannt, der Kammertrennung mit einer Dreischichtenanordnung 73, welche eine äußere Schicht mit Aluminiumfolie 73a, eine innere Schicht mit Stahlgittergewebe 73b und eine äußere Schicht mit Aluminiumfolie 73c umfasst, als Unterbau Stoß an Stoß verlegt, so dass das Flacheisen eines Unterlegflacheisens 111a das diesem benachbarte Unterlegflacheisen 111a unterzugreifen und zumindest teilweise flächig auf dem Flacheisen aufzuliegen vermag. Die bodenseitigen Unterlegflacheisen 111a werden mit der Schicht 9 und dem Tankboden 1 vernietet und an den unteren Teil des Randsegments 10 angepasst und mit den unteren Liegeblechbahnen verschweißt.

Danach werden nach dem gleichen Prinzip mehrere parallele Reihen von in Reihe angeordneter bodenseitiger Unterlegflacheisen 111b, auch Bleche oder Bodenflacheisen genannt, der Bahnentrennung bzw. Überlappung derselben 90° versetzt zu den Unterlegflacheisen 111 zur Kammertrennung auf der Schicht 9 mit dem glasfaserverstärkten kunststoffartigen Material als Unterbau in Richtung Achse 90° und 270° Stoß an Stoß verlegt, so dass das Flacheisen eines bodenseitigen Unterflacheisens 111b das diesem benachbarte bodenseitige Unterlegflacheisen 111b unterzugreifen und flächig auf dem Flacheisen zumindest teilweise aufzuliegen vermag. Die bodenseitigen Unterlegflacheisen 111b werden mit der Schicht 9 und dem Tankboden 1 vernietet, an den unteren Teil des Randsegments 10 angepasst und mit den unteren Liegeblechbahnen verschweißt.

Bei Kollision der Unterlegflacheisen 111a, 111b mit den Bodensumpfbehältern 54, 58 , den Auflagen 49, 49a für die Schwimmdachfüße und den Verstärkungsplatten 11a der Saug-, Mess- und Prüfrohre der Kammern 2 und 3 werden die Unterlegflacheisen angepasst, wie gekürzt, und an das entsprechende Bauteil des unteren Bodens angeschweißt, vorzugsweise geheftet.

Anschließend werden alle Stoßnähte und Schweißnähte der Kammertrennung und Bahnentrennung verschweißt, vorzugsweise mittels WIG-Schweißverfahren ohne Argonspülung verschweißt (siehe I) und gebürstet. Das Prüfen der Schweißnähte erfolgt erst im Zusammenhang mit der kompletten Unterbodenprüfung.

Die in der Werkstatt vorgefertigten unteren Bodenblechbahnen werden auf den Auflageflächen 118 der bodenseitigen Unterlegflacheisen 111b der Bahnentrennung der unteren Bodenblechbahnen ausgerollt, wobei die inneren Randbereiche B 11 der unteren Bodenblechbahnen auf den Auflageflächen 118 auch der bodenseitigen Unterlegflacheisen 111a aufliegen. Im Bereich der Auflageblechen 49, 49a der Schwimmdachfüße werden Löcher mit Durchmesser 500mm eingeschnitten, so dass eine Überlappung über die Auflagebleche 49, 49a von 50mm erfolgen kann. Im Bereich der Verstärkungsplatten 11a der Saug-, Mess- und Prüfrohre 05 wird eine Öffnung von 260mm x 260mm geschnitten - Überlappung 20mm. Im Bereich der Bodensumpfbehälter 54, 58 erfolgt der Anschluss durch Schneiden eines Lochs von Durchmesser 550mm, so dass eine Überlappung von 50mm erfolgen kann.

Auf der Kammertrennung überlappt das Bodenblech 55mm, auf der Bahnentrennung 30mm und auf dem unteren Teil des Randsegments 10 - 50mm. Jede untere Bodenblechbahn wird umlaufend punktweise verschweißt, vorzugsweise geheftet, zum Beispiel mit einer WIG-Spezialpunktpistole (Punktabstand 10 bis 15mm) ohne Schweißzusatz gepunktet.

Danach wird der komplette Unterboden WIG-verschweißt, indem die unteren Bodenblechbahnen des unteren Bodenblechs 70 mit den bodenseitigen Unterlegflacheisen 111a, 111b, vorzugsweise mittels eines WIG-Schweißverfahrens ohne Argonspülung vakuumdicht verschweißt oder durchgeschweißt werden. Jetzt werden alle Schweißnähte gesäubert, gebürstet und zur Dichtheitsprüfung vorbereitet.

Nach erfolgter Dichtheitsprüfung beginnt die Montage Kammertrennung und Bahnentrennung des oberen Bodenblechs.

Bei den oberseitigen Unterlegflacheisen 112a der Kammertrennung werden an der Rückseite von jedem oberseitigen Unterlegflacheisen 112a ein Flacheisen (z.B. 2mm stark, 20mm breit, in entsprechender Länge) als Schweißbadsicherung angeheftet 44. So wird als sogenannte Schweißbadsicherung an der dem Tankboden zugewandten Rückseite, oder auch Unterseite genannt, von jedem oberseitigen Unterlegflacheisen 112a ein Flacheisen (z.B. 2mm stark, 20mmbreit, mit entsprechender Länge) punktweise angeschweißt, vorzugsweise angeheftet, so dass ein Teil des Flacheisens über die Seite des oberseitigen Unterlegflacheisens hinausragt und zur Auflage eines benachbarten oberseitigen Unterlegflacheisens bei Verlegung derselben in Reihe und Stoß an Stoß dient.

Bei den Unterlegflacheisen 112b der Bahnentrennung entfällt diese Schweißbadsicherung, da diese durch Überlappung benachbarter Bodenblechbahnen des oberen Bodenblechs 46 nicht erforderlich ist. Diese Stöße werden nur geheftet.

Jetzt werden in einer Ausführungsbeispiel sowohl die oberseitigen Unterlegflacheisen 112a der Kammertrennung mit Schweißbadsicherung als auch die oberseitigen Unterlegflacheisen 112b der Bahnentrennung mittig auf die jeweiligen bodenseitigen Unterlegflacheisen 111a bzw. 111b geheftet und an den oberen Teil des Randsegments 10, oder an Flacheisen des Randsegmentes 10 sowie den Bauteilen des oberen Bodens (Bodensumpf, Auflage für Schwimmdachfüße, Verstärkungsplatten der Saug-, Mess- und Prüfrohre Kammer 2 und 3) angepasst und verschweißt, so dass die oberseitigen Unterlegflacheisen 112a der Kammertrennung nur auf der einen z.B. der Kammer 2 zugewandten Seite vakuumdicht verschweißt, wie komplett durchgeschweißt, hingegen die andere der Kammer 2 abgewandte Seite der oberseitigen Unterlegflacheisen 112 mit den bodenseitigen Unterlegflacheisen geheftet sind, Damit ist die Trennung der beiden Kammern hergestellt.

Nach Heftung werden die oberen Bodenblechbahnen des oberen Bodenblechs 46 mit den oberseitigen Unterflacheisen 112, ggf. auch mit den Teilen, auf denen die oberen Bodenblechbahnen aufliegen, vakuumdicht verschweißt, vorzugsweise mittels WIG-Verfahren ohne Argonspülung verschweißt.

Nunmehr beginnt die Montage des oberen Bodens mit Bahnentrennung

Die vorgefertigten Blechbahnen des oberen Bodenblechs 46 werden nach folgendem Verfahren ausgelegt. Auf die eine einem oberseitigen Unterlegflacheisen 112b benachbarte erste untere Bodenblechbahn des unteren Bodenblechs 70 wird eine Schicht 74 mit verzinktem Stahlgitter, z.B. 0 1mm/13, 1000mm breit, von einer Rolle abgerollt, zugeschnitten und mit Klebeband auf der ersten unteren Bodenblechbahn fixiert. Eine erste zugeschnittene obere Bodenblechbahn des oberen Bodenblechs 46 wird auf der Schicht 74 und dem oberseitigen Unterlegflacheisen 112b ausgerollt, so dass ein Teil des oberseitigen Unterlegflacheisens 112b von der ersten oberen Bodenblechbahn überlappt wird, wobei die inneren Randbereiche B11 der oberen Bodenblechbahnen auf den Auflageflächen 118 auch der oberseitigen Unterlegflacheisen 112a aufliegen. Z.B. werden in die Schicht 74 und in die obere Bodenblechbahn im Bereich der Auflagebleche 49, 49a der Schwimmdachfüße Löcher 0 300mm eingeschnitten, so dass eine Überlappung über die Auflagebleche 49, 49a von 50mm erfolgen kann. Im Bereich der Verstärkungsplatten 11a der Saug-, Mess- und Prüfrohre wird eine Öffnung von 160mm x 160mm geschnitten mit Überlappung 20mm. Im Bereich der Bodensumpfbehälter 54, 58 erfolgt der Anschluss durch Schneiden eines Lochs von 0 400mm, so dass eine Überlappung von 50mm erfolgen kann. Im Bereich der Kammertrennung überlappt das Bodenblech 20mm, in dem der Bahnentrennung 30mm und in dem der oberen Randsegment 50mm.

Jetzt wird umlaufend die erste obere Bodenblechbahn 46a mit dem oberseitigen Unterlegflacheisen 112 und mit den Teilen, auf denen die erste obere Bodenblechbahn 46a aufliegt, punktweise verschweißt, vorzugsweise geheftet, zum Beispiel mit einer WIG-Spezialpunktpistole (Punktabstand 10 bis 15 mm) ohne Schweißzusatz gepunktet.

Auf die andere auch auf dem oberseitigen Unterlegflacheisen 112b in derselben Weise aufliegende benachbarte untere Bodenblechbahn wird gleichfalls eine Schicht 74 mit verzinktem Stahlgitter, (z.B. Ø 1mm/13, 1000mm breit), von einer Rolle abgerollt, zugeschnitten und mit Klebeband auf der anderen unteren Bodenblechbahn fixiert. Eine andere zugeschnittene obere Bodenblechbahn 46a des oberen Bodenblechs 46 wird auf der Schicht 74 und dem oberseitigen Unterlegflacheisen 112b ausgerollt, so dass ein der anderen oberen Bodenblechbahn 46a zugewandter Teil als Seitenbereich 46b der ersten oberen Bodenblechbahn 46a im

Überlappungsbereich 92 von dem Seitenbereich146b der anderen oberen Bodenblechbahn 46a überlappt wird; eine Überlappung der anderen mit der ersten oberen Bodenblechbahn 46a kann von 10mm betragen. Die andere obere Bodenblechbahn 46a wird mit der ersten oberen Bodenblechbahn 46a und mit den Teilen, auf denen die andere obere Bodenblechbahn aufliegt, punktweise verschweißt, vorzugsweise geheftet, zum Beispiel mit einer WIG-Spezialpunktpistole (Punktabstand 10 bis 15 mm) ohne Schweißzusatz gepunktet.

Nach Heftung wird die andere obere Bodenblechbahn 46a mit der ersten oberen Bodenblechbahn 46a, ggf. auch mit den Teilen, auf denen die andere obere Bodenblechbahn 46a aufliegt, vakuumdicht verschweißt, vorzugsweise mittels WIG-Verfahren ohne Argonspülung verschweißt.

Bei der Ausgestaltung der Kammertrennung liegen die oberen Bodenblechbahnen 46a des einen Bodensegmentes 12 mit ihren inneren Randbereichen B5 im inneren Randbereich 90 des einen Bodensegments 12 und die oberen Bodenblechbahnen 46a des zweiten Bodensegmentes 12 mit ihren inneren Randbereich B5 im inneren Randbereich 90 des zweiten Bodensegments 12 jeweils zum Teil auf den oberseitigen Unterlegflacheisen 111b, welche entlang der Mitte-Querachse Q verlaufen, voneinander beabstandet auf. Zwecks Sicherstellung deren Lageausrichtung werden diese mit den oberseitigen Unterlegflacheisen geheftet.

Nach der Heftung werden die andere obere Bodenblechbahn 46a mit der ersten oberen Bodenblechbahn 46a, ggf. auch mit den Teilen, auf denen die andere obere Bodenblechbahn 46a aufliegt, vakuumdicht verschweißt, vorzugsweise mittels WIG-Verfahren ohne Argonspülung verschweißt und die oberen Bodenblechbahnen 46a des einen Bodensegmentes 12 im inneren Randbereich 92 des einen Bodensegments 12 und die oberen Bodenblechbahnen 46a des zweiten Bodensegmentes 12 im inneren Randbereich 92 des zweiten Bodensegments 12 vakuumdicht verschweißt, vorzugsweise mittels WIG-Verfahren ohne Argonspülung verschweißt.

Die Weiterverarbeitung erfolgt wie beschrieben. Nach dieser Vorgehensweise wird das komplette obere Bodenblech gepunktet und verschweißt. Jetzt werden alle Schweißnähte gesäubert, gebürstet und zur Dichtheitsprüfung vorbereitet. Nach erfolgter Dichtheitsprüfung erfolgt die Montage der Saug-, Mess- und Prüfleitungen der Kammer 2 und 3 der Bodensegmente .

### Montage von Saug-, Mess- und Prüfstutzen

Die in der Werkstatt vorgefertigten Saug-, Mess- und Prüfstutzen für Kammer 2 und 3 werden in die Tankmantelwand 2 eingeheftet. Am Boden wird das Stutzenrohr 05 an die obere Verstärkungsplatte 11a angeschweißt und anschließend wird ein Verstärkungsring 11 sowohl mit der Verstärkungsplatte 11a als auch mit dem Stutzenrohr 05 verschweißt. Alle Nähte werden gebürstet und geprüft. Die Prüfstutzen werden mit Blinddeckeln verschlossen. Am Messstutzen wird ein Vakuumschreiber mit zusätzlichem Wetterschreiber angeschlossen. Nach erfolgter Prüfung auf Dichtigkeit wird die komplette Montage des Oberbodens abgeschlossen.

### Bezugszeichenliste

- 1: Tankboden
- 2: Tankmantel
- 02: Verstärkungsrohr, auch Verstärkungshülse genannt
- 3: Betonschicht
- 3a: äußerer Randbereich der Betonschicht
- 05: Rohr, auch Stutzenrohr genannt
- 6: Abstandshalter
- 7: Feuerschutzdecke
- 8: Aluminium-Folie
- 9: Schicht mit einem glasfaserverstärkten kunststoffartigen Material = GFK-Schicht
- 10: Randsegment
- 11: Verstärkungsring
- 11a: Verstärkungsplatte
- 12: Bodensegment
- 42: oberes Liegeblech
- 43: oberes Stehblech
- 44: Flacheisen
- 46: oberes Bodenblech
- 46a: obere Bodenblechbahn
- 46b: im Überlappungsbereich angeordneter Seitenbereich der oberen Bodenblechbahn des oberen Bodenblechs und der unteren Bodenblechbahn des unteren Bodenblechs
- 47: oberes Kragenblech
- 49: oberes Auflagenblech
- 49a: unteres Auflagenblech
- 53: unteres Kragenblech
- 53a: oberer Rand des oberen Bodensumpfbehälters
- 54: unterer Bodensumpfbehälter
- 54a: oberer Rand des unteren Bodensumpfbehälters
- 55: unteres Liegeblech
- 55a: untere Liegeblechbahn
- 56: unteres Stehblech
- 58: oberer Bodensumpfbehälter
- 70: unteres Bodenblech
- 70a: untere Bodenblechbahn
- 70b: Seitenbereiche der unteren Bodenblechbahnen
- 71: Zwischenraum
- 72: Kehle
- 73: Dreischichtenanordnung
- 73a: obere Lage mit Aluminiumfolie
- 73b: mittlere Lage mit Stahlgittergewebe
- 73c: untere Lage mit Aluminiumfolie
- 74: Schicht mit Stahlgittergewebe
- 75: Bodensumpf
- 77: vakuumdichte Schweißnaht
- 77 a: geheftete Verschweißungsstellen
- 78: Schlammtasse
- 79: L-förmige Zweischichtenanordnung mit einer Feuerschutzdecke und einer Schicht mit einer Aluminiumfolie
- 80: seitliche dem Randsegment zugewandte Begrenzung von Bodensegment
- 81: geradlinige der Mitte-Längsachse oder Mitte-Querachse zugewandte Begrenzung von Bodensegment
- 90: innerer Randbereich des Bodensegments
- 92: Überlappungsbereich von benachbarten oberen Bodenblechbahnen bzw. von deren Seitenbereichen
- 93: Vernietung
- 94: Kante des Seitenbereichs der oberen Bodenblechbahn
- 111a: bodenseitiges Unterlegflacheisen für Kammertrennung
- 111b: bodenseitiges Unterlegflacheisen für Bahnentrennung
- 112a: oberseitiges Unterlegflacheisen für Kammertrennung
- 112b: oberseitiges Unterlegflacheisen für Bahnentrennung
- 118: Auflagefläche der bodenseitigen Unterlegflacheisen für untere Bodenblechbahnen
- 120: Ansatzstellen von Liegeblechen, Stehblechen
- 120a: Stoßstelle benachbarter Bleche
- 121: vorstehender Teil eines an der Rückseite einer Bahn angeschweißten Flacheisens
- 122: unterer Bereich des Tankmantels
- 124: Kammertrennungsbereich zwischen zwei Bodensegmenten
- 125: Bahnentrennungsbereich eines Bodensegmentes
- 126: Randsegment-Bodensegment-Übergangsbereich
- 200: Teil der ein glasfaserverstärktes kunststoffartiges Material enthaltenden Schicht, die von der Betonschicht seitlich begrenzt ist.
- 201: Liegeblech
- 202: bodenseitiges, z.B. unter dem Liegeblech 201 oder dem unteren Liegeblech 55 angeordnetes, Liegeblech
- 203: Bodenblech
- 204: Stehblech
- 205: äußerer Randbereich
- 206: innerer Randbereich
- 207: Innenraum von Tankbauwerk oder -behälters
- 300: Bereich zwischen zwei benachbarten quer zur Mitte-Querachse Q verlaufenden Reihen von oberseitigen oder bodenseitigen Unterlegflacheisen
- A3: Abstand der gegenüberliegenden inneren Randbereiche der oberen Bodenblechbahnen voneinander im Kammertrennungsbereich
- A4: Abstand der gegenüberliegenden inneren Randbereiche der unteren Bodenblechbahnen voneinander im Kammertrennungsbereich
- W1: Abstand zwischen dem inneren Randbereich des oberen Liegeblechs und dem äußeren Randbereich des oberen Bodenblechs,R1 des oberen Liegeblechs 42
- W2: Abstand zwischen dem äußeren Randbereich des oberen Stehblechs und dem äußeren Randbereich des unteren Stehblechs
- W3: Abstand der Kante des Seitenbereichs der einen oberen Bodenblechbahn von der Kante des Seitenbereichs von der anderen benachbarten oberen Bodenblechbahn im Überlappungsbereich
- B: äußerer Randbereich des Tankbehälters und des Tankbodens
- BX: innerer Randbereich des Tankbehälters und des Tankbodens
- B1: innerer Randbereich von unterem Liegeblech
- B2: äußerer Randbereich von unterem Liegeblech oder -bahn
- B3: innerer Randbereich von oberem Liegeblech oder -bahn
- B4: äußerer Randbereich von oberem Liegeblech oder -bahn
- B5: innerer Randbereich von oberem Bodenblech oder -bahn
- B6: äußerer Randbereich von oberem Bodenblech oder -bahn
- B7: innerer Randbereich von unterem Stehblech oder -bahn
- B8: äußerer Randbereich von unterem Stehblech oder -bahn
- B9: innerer Randbereich von oberem Stehblech oder -bahn
- B10: äußerer Randbereich von oberem Stehblech oder -bahn
- B11: innerer Randbereich von unterem Bodenblech oder -bahn
- B12: äußerer Randbereich von unterem Bodenblech oder -bahn
- B13: innerer Randbereich des unteren Kragenblechs und des oberen Kragenblechs
- B14: äußerer Randbereich des unteren Kragenblechs und des oberen Kragenblechs GFK-Schicht Schicht mit einem glasfaserverstärkten kunststoffartigen Material
- K1: Kammer 1 als Überwachungskammer 1 des Randsegmentes oder Zwischenraum genannt6
- K2: Kammer 2 als Überwachungskammer 2 des, z.B. einen, Bodensegmentes oder Zwischenraum genannt
- K3: Kammer 3 als Überwachungskammer 3 des anderen Bodensegmentes oder Zwischenraum genannt
- K4: Kammer 4 als Überwachungskammer 4 des erfindungsgemäßen Tankbauwerks oder Zwischenraum genannt
- KM: Kreismittelpunkt
- M: Mitte-Längsachse
- Q: Mitte-Querachse des Tankbehälters
- α: von der Innenseite des Tankbodens oder der dem Tankboden abgewandten Innenseite der Schicht mit GFK und dem unteren Liegeblech gebildeter Winkel
- β: von oberem Liegeblech und unterem Liegeblech gebildeter Winkel
- y: von Tankmantel und unterem Stehblech gebildeter Winkel
- δ: von Tankmantel und oberem Stehblech gebildeter Winkel

## Patentansprüche

1. Kammerüberwachungsanordnung zum Einbau in einem Tankbauwerk für Flüssigkeiten, vorzugsweise mit metallischen Werkstoffen, welches einen Tankbehälter mit einem Tankboden (1) und einem von dem Tankboden (1) vorstehenden Tankmantel (2) aufweist,
die Kammerüberwachungsanordnung ein Randsegment (10) und mindestens ein Bodensegment (12) und mindestens einen gas- und flüssigkeitsdichten Zwischenraum (K1,K 2, K3, K4) als Überwachungskammer zur Überwachung der Dichtigkeit der Kammerüberwachungsanordnung gegenüber Flüssigkeiten umfasst, **dadurch gekennzeichnet, dass**
das Randsegment (10) und das Bodensegment (12) jeweils mindestens eine Überwachungskammer (K1, K2, K3, K4) aufweisen,
das Randsegment (10) und das Bodensegment (12) auf der Innenseite des Tankbodens (1) zum Aufliegen geeignet sind,
das Randsegment (10) mit dem Bodensegment (12) vakuumdicht verbunden, vorzugsweise vakuumdicht verschweißt, ist.

2. Tankbauwerk mit einer Kammerüberwachungsanordnung für Flüssigkeiten, vorzugsweise mit metallischen Werkstoffen, welches einen Tankbehälter mit einem Tankboden (1) und einem von dem Tankboden (1) vorstehenden Tankmantel (2) aufweist,
die Kammerüberwachungsanordnung ein Randsegment (10) und mindestens ein Bodensegment (12) und mindestens einen gas- und flüssigkeitsdichten Zwischenraum (K1, K2, K3, K4) als Überwachungskammer zur Überwachung der Dichtigkeit des Tankbauwerks gegenüber Flüssigkeiten umfasst, **dadurch gekennzeichnet, dass**
das Randsegment (10) und mindestens ein Bodensegment (12) jeweils mindestens einen Zwischenraum als Überwachungskammer (K1, K2, K3, K4) aufweisen,
das Randsegment (10) und mindestens ein Bodensegment (12) auf der Innenseite des Tankbodens (1) aufliegen,
das Randsegment (10) gegen die Innenseite des Tankmantels angesetzt ist,
das Randsegment (10) mit dem Bodensegment (12) in einem Randsegment-Bodensegment-Übergangsbereich (126) vakuumdicht verbunden, vorzugsweise verschweißt, ist,
das Randsegment (10) mit dem Tankmantel (2) vakuumdicht verbunden, vorzugsweise verschweißt, ist.

3. Tankbauwerk mit einer Kammerüberwachungsanordnung, welche ein Randsegment (10) und mindestens ein Bodensegment (12) sowie mindestens einen gas- und flüssigkeitsdichten Zwischenraum (K1,K 2, K3, K4) als Überwachungskammer zur Überwachung der Dichtigkeit des Tankbauwerks gegenüber Flüssigkeiten umfasst, das Tankbauwerk einen Tankbehälter mit einem Tankboden (1) und einem von dem Tankboden (1) vorstehenden Tankmantel (2) aufweist, **dadurch gekennzeichnet, dass**
das Randsegment (10) oder ein Teil desselben den Zwischenraum (K1, K 2, K3, K4) begrenzt,
das Bodensegment (12) oder ein Teil desselben den Zwischenraum (K1, K2, K3, K4) begrenzt,
das Randsegment (10) mit dem Tankmantel (2) vakuumdicht verbunden, vorzugsweise verschweißt, ist,
das Randsegment (10) mit dem Bodensegment (12) vakuumdicht verbunden ist,
das Randsegment (10) mindestens ein Liegeblech (42, 55, 201, 202) und/oder mindestens ein Stehblech (43, 56, 204) und das Bodensegment (12) mindestens ein Bodenblech (46, 70, 203) umfassen,
mindestens ein Liegeblech (42, 55, 201, 202) und/oder mindestens ein Stehblech (43, 56, 204) auf Abstand zu der Innenseite des Tankmantels (2) und /oder der Innenseite des Tankbodens (1) gehalten sind,
mindestens ein Bodenblech (46, 70, 203) auf Abstand zu der Innenseite des Tankbodens (1) oder zu einem weiteren Bodenblech (46, 70, 203) angeordnet ist.

4. Tankbauwerk nach Anspruch 2 oder 3, **dadurch gekennzeichnet, dass** das Randsegment (10) mindestens einen Teil der Innenseite des Tankbodens (1) und den unteren Bereich (122) der Innenseite des Tankmantels (2) vakuumdicht begrenzt,
das Bodensegment (12) mindestens einen Teil der Innenseite des Tankbodens (1) mindestens einen Teil der Innenseite des Tankbodens (1) vakuumdicht begrenzt,
der Zwischenraum (K2, K3) des Bodensegments (10) unterseitig von einem unteren Bodenblech (70) und oberseitig von einem oberen Bodenblech (46) begrenzt ist,
das in dem äußeren Randbereich B des Tankbodens (1) in Draufsicht um den Kreismittelpunkt KM des Tankbodens (1) umlaufende Randsegment (10) gegen den unteren Bereich (122) der dem Tankboden (1) zugewandten Innenseite des Tankmantels (2) angesetzt ist und mit diesem vakuumdicht verschweißt ist,
der Zwischenraum (K1) des Randsegments (12) im Längsschnitt L-förmig ausgestaltet ist,
der Zwischenraum (K2, K3) des Bodensegments (12) von dem Zwischenraum (K1) des Randsegments (10) vakuumdicht verschlossen ist.

5. Tankbauwerk nach mindestens einem der Ansprüche 2 bis 4, **dadurch gekennzeichnet, dass** der Zwischenraum (K1) des Randsegments (12) von einem unteren Stehblech (56), einem oberen Stehblech (43), einem unteren Liegeblech (55), und einem oberen Liegeblech (42), ausgebildet ist und/oder der Zwischenraum (K2, K3) des Bodensegments (10) seitlich mit einem oder mehreren von übereinander angeordneten Schlammtassen (78) und /oder übereinander angeordneten Bodensumpfbehältern (54, 58) ausgebildeten Zwischenräumen flüssigkeits- und/oder gasmäßig zum Austausch von Flüssigkeiten und Gasen zwischen den Zwischenräumen von Schlammtassen (78) und /oder von Bodensumpfbehältern (54, 58) mit dem Zwischenraum (K2, K3) des Bodensegments (10) verbunden ist.

6. Tankbauwerk nach mindestens einem der Ansprüche 2 bis 5, **dadurch gekennzeichnet, dass** der Tankboden (1) innenseitig eine Schicht (9) mit einem glasfaserverstärktem kunststoffartigen Material umfasst, die Innenseite des Tankbodens (1) von einer in Draufsicht auf den Tankboden (1) um den Kreismittelpunkt KM des Tankbodens (1) umlaufenden, auf der Schicht (9) angeordneten, im Längsschnitt in Richtung zu dem Kreismittelpunkt KM hin geneigten Betonschicht (3) und von einem von der Betonschicht (3) seitlich begrenzten Teil (200) der Schicht (9) ausgebildet ist.

7. Tankbauwerk nach mindestens einem der Ansprüche 2 bis 6, **dadurch gekennzeichnet, dass** das obere Bodenblech (46) mit dem oberen Liegeblech (42) vakuumdicht verschweißt ist, das untere von dem oberen Bodenblech (46) auf Abstand angeordnete Bodenblech (70) mit dem unteren Liegeblech (55) oder mit einem bodenseitigen, unter dem unteren Liegeblech (55) angeordneten Liegeblech (202) oder mit einem mit dem unteren Liegeblech (55) verbundenen Bodenblech (203) vakuumdicht verschweißt ist.

8. Tankbauwerk nach mindestens einem der Ansprüche 2 bis 7, **dadurch gekennzeichnet, dass** das untere Stehblech (56) und das obere Stehblech (43) mit dem Tankmantel (2) vakuumdicht verschweißt sind, das untere Stehblech (56) mit dem unteren Liegeblech (55) vakuumdicht verschweißt ist, das obere Stehblech (43) mit dem oberen Liegeblech (42) vakuumdicht verschweißt ist.

9. Tankbauwerk nach mindestens einem der Ansprüche 2 bis 8, **dadurch gekennzeichnet, dass** das untere Stehblech (56), das obere Stehblech (43), das untere Liegeblech (55) und /oder das obere Liegeblech (42) zu dem Tankboden (1) hin geneigt sind.

10. Verfahren zur Abdichtung eines Tankbauwerkes mit einer Kammerüberwachungsanordnung für Flüssigkeiten, insbesondere für organische Flüssigkeiten, z.B. Dieselkraftstoffe, mit metallischen Werkstoffen nach mindestens einem der vorhergehenden Ansprüche, welches einen Tankbehälter mit einem gegen einen festen Untergrund abgestützten Tankboden (1) und einem von dem Tankboden (1) vorstehenden Tankmantel (2) aufweist, mit mindestens einem Bodensegment (12) und mindestens einem Randsegment (10) in dem Tankbauwerk, **dadurch gekennzeichnet, dass**
das von einem inneren Randbereich BX bis zu einem äußeren Randbereich B des Tankbehälters sich erstreckende Randsegment (10) mit einem im Längsschnitt L-förmigen Zwischenraum (K1) als Überwachungskammer und das Bodensegment (12) mit einem Zwischenraum (K2, K3) als Überwachungskammer auf dem Tankboden (1) angeordnet werden,
das Bodensegment (12) mit dem Randsegment (10) vakuumdicht und das Randsegment (10) mit einer Innenseite des Tankmantels (2) vakuumdicht verschweißt werden,
vorzugsweise mindestens eine Überwachungskammer (K1, K2, K3) zur Überprüfung auf Dichtheit derselben an Leckanzeiger mittels Rohren (05) anschließbar ausgebildet und/oder mindestens eine Überwachungskammer (K2, K3) des Bodensegments (10) mit von übereinander angeordneten voneinander beabstandeten Bodensumpfbehältern (54, 58) und/oder von übereinander angeordneten voneinander beabstandeten Schlammtassen (78) ausgebildeten Zwischenräumen (71) flüssigkeits- und/oder gasmäßig zum Austausch von Flüssigkeiten und Gasen zwischen den Zwischenräumen (71) verbindbar ausgestaltet werden.

11. Verfahren zur Abdichtung eines Tankbauwerkes nach Anspruch 10, **gekennzeichnet durch** die Schritte zum Herstellen eines unteren Teils des Randsegmentes (10):
Auflegen von gleichartig ausgebildeten unteren Liegeblechbahnen (55a) mit unterseitig angehefteten vorstehenden Flacheisen als Schweißbadsicherung mit Untergriff der Flacheisen zur Bereitstellung des unteren in Draufsicht ringförmigen Liegeblechs (55) auf den Tankboden (1) und Verheften der benachbarten unteren Liegeblechbahnen (55a) miteinander,
Heften der inneren Randbereiche B1 der unteren Liegeblechbahnen (55a) an den Tankboden (1) unter Ausbildung von gehefteten Verschweißungsstellen (77a),
Ansetzen von gleichartig ausgebildeten unteren Stehblechbahnen mit unterseitig angehefteten vorstehenden Flacheisen zur Schweißbadsicherung mit Untergriff der Flacheisen zur Bereitstellung des unteren in Draufsicht ringförmigen Stehblechs (56) gegen die unteren Liegeblechbahnen (55a) und den Tankmantel und Verheften der benachbarten unteren Stehblechbahnen miteinander,
Heften der äußeren Randbereiche B 8 der unteren Stehblechbahnen an den Tankmantel (2) unter Ausbildung von gehefteten Verschweißungsstellen (77a),
Heften der inneren Randbereiche B 7 der unteren Stehblechbahnen an die unteren Liegeblechbahnen (55a) unter Ausbildung von gehefteten Verschweißungsstellen (77a),
vakuumdichtes Verschweißen, vorzugsweise ohne Argonspülung, der benachbarten unteren Liegeblechbahnen (55a) miteinander, der benachbarten unteren Stehblechbahnen miteinander und der inneren Randbereiche B7 der unteren Stehblechbahnen mit den Liegeblechbahnen (55a) und der äußeren Randbereiche B8 der unteren Stehblechbahnen mit dem Tankmantel (2).

12. Verfahren zur Abdichtung eines Tankbauwerkes mit einem Kammerüberwachungssystem für Flüssigkeiten, insbesondere organische Flüssigkeiten, z.B. Dieselkraftstoffe, mit metallischen Werkstoffen, welches einen hohlzylindrischen Tankbehälter mit einem gegen einen festen Untergrund abgestützten Tankboden (1) und einem von dem Tankboden (1) vorstehenden, vorzugsweise zylindrischen, Tankmantel (2) und einer auf einem Tankboden (1) aufgetragenen Schicht (9) mit einem, vorzugsweise glasfaserverstärkten, kunststoffartigen Material aufweist, nach Anspruch 10, **gekennzeichnet durch** die Schritte zum Herstellen eines unteren Teils des Randsegmentes (10):
a. Auflegen von um eine Mitte-Längsachse M des Tankbehälters verlaufenden bodenseitigen Flacheisen (44) auf die auf dem Tankboden (1) angeordnete Schicht (9) und Vernieten der Flacheisen (44) mit der Schicht (9) und dem Tankboden (1),
b. Aufbringen einer in der Draufsicht um die Mitte-Längsachse M verlaufenden ringförmigen Betonschicht (3) zwischen einem inneren Randbereich BX und einem äußeren Randbereich B des Tankbehälters mit einer geneigten Oberseite in Richtung zu dem Tankboden (1) hin und unter Einziehen der Oberseite der Betonschicht (3) in dem äußeren Randbereich (3a) der Betonschicht (3) zur Bildung einer Kehle (72),
c. nach einem Aushärten der Betonschicht (3) Anlegen einer im Längsschnitt L-förmigen Zweischichtenanordnung (79) mit einer dem Tankboden (1) zugewandten Feuerschutzdecke (7) und einer dem Tankboden abgewandten Schicht (8) mit einer Aluminium-Folie gegen die Kehle (72) der Betonschicht (3) und die der Kehle (72) benachbarte Innenseite des Tankmantels (2),
d. Auflegen von gleichartig ausgebildeten unteren Liegeblechbahnen (55a) mit unterseitig angehefteten vorstehenden Flacheisen als Schweißbadsicherung mit Untergriff der Flacheisen zur Bereitstellung des unteren ringförmigen Liegeblechs (55) auf die Betonschicht (3) um die Mitte-Längsachse M des Tankbehälters und Verheften der benachbarten unteren Liegeblechbahnen (55a) miteinander,
f. Heften der inneren Randbereiche B1 der unteren Liegeblechbahnen (55a) an die bodenseitigen angehefteten Flacheisen (44) unter Ausbildung von gehefteten Verschweißungsstellen (77a),
g. Ansetzen von gleichartig ausgebildeten unteren Stehblechbahnen mit unterseitig angehefteten vorstehenden Flacheisen zur Schweißbadsicherung mit Untergriff der Flacheisen zur Bereitstellung des unteren ringförmigen Stehblechs (56) um die Mitte-Längsachse M des Tankbehälters gegen die unteren Liegeblechbahnen (55a) und den Tankmantel und Verheften der benachbarten unteren Stehblechbahnen miteinander,
h. Heften der äußeren Randbereiche B 8 der unteren Stehblechbahnen an den Tankmantel (2) unter Ausbildung von gehefteten Verschweißungsstellen (77a),
i. Heften der inneren Randbereiche B 7 der unteren Stehblechbahnen an die unteren Liegeblechbahnen (55a) unter Ausbildung von gehefteten Verschweißungsstellen (77a),
j. vakuumdichtes Verschweißen, vorzugsweise ohne Argonspülung, der benachbarten unteren Liegeblechbahnen (55a) miteinander, der benachbarten unteren Stehblechbahnen miteinander und der inneren Randbereiche B7 der unteren Stehblechbahnen mit den Liegeblechbahnen (55a) und der äußeren Randbereiche B8 der unteren Stehblechbahnen mit dem Tankmantel (2)

13. Verfahren nach mindestens einem der Ansprüche 10 bis 12, **gekennzeichnet durch** die Schritte zur Herstellung eines oberen Teils des Randsegmentes (10):
a. Ansetzen von Abstandshaltern (6) auf die unteren Liegeblechbahnen (55a) und Heften der Abstandshalter (6) an die unteren Liegeblechbahnen (55a),
b. Ansetzen von gleichartig ausgebildeten oberen Liegeblechbahnen mit unterseitig angehefteten Flacheisen als Schweißbadsicherung mit Untergriff der Flacheisen zur Bereitstellung des oberen in Draufsicht ringförmigen Liegeblechs (42) um die Mitte-Längsachse M des Tankbehälters gegen die Abstandshalter (6) und das untere Liegeblech (55) und Verheften der benachbarten oberen Liegeblechbahnen miteinander,
c. Ansetzen von gleichartig ausgebildeten oberen Stehblechbahnen mit unterseitig angehefteten Flacheisen als Schweißbadsicherung mit Untergriff der Flacheisen zur Bereitstellung des oberen in Draufsicht ringförmigen Stehblechs (43) um die Mitte-Längsachse M des Tankbehälters gegen die oberen Liegeblechbahnen und den Tankmantel und Verheften der benachbarten oberen Stehblechbahnen miteinander,
d. Heften der inneren Randbereiche B3 der oberen Liegeblechbahnen an die unteren Liegeblechbahnen (55a),
e. Heften der äußeren Randbereiche B10 der oberen Stehblechbahnen an den Tankmantel (2) unter Ausbildung von gehefteten Verschweißungsstellen (77a),
f. Heften der inneren Randbereiche B9 der oberen Stehblechbahnen an die oberen Liegeblechbahnen unter Ausbildung von gehefteten Verschweißungsstellen (77a),
g. vakuumdichtes Verschweißen, vorzugsweise ohne Argonspülung, benachbarter oberer Liegeblechbahnen miteinander, benachbarter oberer Stehblechbahnen miteinander und der äußeren Randbereiche B10 der oberen Stehblechbahnen mit dem Tankmantel (2) und der inneren Randbereiche B9 der oberen Stehblechbahnen mit den oberen Liegeblechbahnen und der inneren Randbereiche B3 der oberen Liegeblechbahnen an die unteren Liegeblechbahnen (55a).

14. Verfahren nach mindestens einem der Ansprüche 10, 11 und 13, **gekennzeichnet durch** die Schritte zum Herstellen eines Teils des Bodensegmentes (12):
a. Auflegen von parallel zu einer Mitte-Querachse Q sich in einer Reihe erstreckenden bodenseitigen Unterlegflacheisen (111a) mit unterseitig angehefteten Flacheisen als Schweißbadsicherung mit Untergriff der Flacheisen auf den Tankboden (1) und Vernieten der bodenseitigen Unterlegflacheisen (111a) mit dem Tankboden (1),
b. Auflegen von quer zu der Mitte-Querachse Q, parallel zueinander sich erstreckenden voneinander beabstandeten Reihen von, vorzugsweise in Reihe angeordneten, bodenseitigen Unterlegflacheisen (111b) mit unterseitig angehefteten Flacheisen als Schweißbadsicherung mit Untergriff der Flacheisen auf den Tankboden (1) und Vernieten der bodenseitigen Unterlegflacheisen (111b) mit demselben und
Verheften der benachbarten bodenseitigen Unterlegflacheisen (111a) miteinander und Verheften der benachbarten bodenseitigen Unterlegflacheisen (111b) miteinander,
c. vakuumdichtes Verschweißen, vorzugsweise ohne Argonspülung, benachbarter Unterlegflacheisen (111a, 111b) miteinander,
d. Auflegen von gleichartig ausgebildeten oberseitigen Unterlegflacheisen (112a) mit unterseitig angehefteten Flacheisen als Schweißbadsicherung mit Untergriff der Flacheisen mittig auf die längs der Mitte-Querachse Q verlaufenden bodenseitigen Unterlegflacheisen (111a) unter Bildung von Auflageflächen (118) für untere Bodenblechbahnen und von gleichartig ausgebildeten oberseitigen Unterlegflacheisen (112b) ohne Flacheisen mittig auf die quer zu der Mitte-Querachse Q verlaufenden bodenseitigen Unterlegflacheisen (111b) unter Bildung von Auflageflächen (118) für untere Bodenblechbahnen,
e. Auflegen der unteren, parallel zu den quer zur Mitte-Querachse Q angeordneten bodenseitigen Unterlegflacheisen (111b) und parallel zueinander sich erstreckenden Bodenblechbahnen (70a) auf die Auflageflächen (118) der bodenseitigen parallel zur Mitte-Querachse Q oder im Bereich derselben verlaufenden Unterlegflacheisen (111a) und/oder die Auflageflächen (118) der bodenseitigen quer zur Mitte-Querachse Q verlaufenden Unterlegflacheisen (111b) zur Überbrückung eines jeweils zwischen zwei benachbarten quer zur Mitte-Querachse Q verlaufenden Reihen von bodenseitigen Unterlegflacheisen (111b) angeordneten Bereichs (300) und Heften der unteren Bodenblechbahnen an die bodenseitigen Unterlegflacheisen (111a, 111b).

15. Verfahren zur Abdichtung eines Tankbauwerkes einer auf dem Tankboden (1) aufgetragenen Schicht (9) mit einem, vorzugsweise glasfaserverstärkten, kunststoffartigen Material nach mindestens einem der Ansprüche 10, 11 und 12, **gekennzeichnet durch** die Schritte zum Herstellen eines Teils des Bodensegmentes (12):
a. Auflegen von parallel zu einer Mitte-Querachse Q sich in Reihe erstreckenden bodenseitigen Unterlegflacheisen (111a) mit unterseitig angehefteten Flacheisen als Schweißbadsicherung mit Untergriff der Flacheisen auf eine auf der Schicht (9) angeordnete Dreischichtenanordnung (73) und Vernieten (93) der bodenseitigen Unterlegflacheisen (111a) mit der Schicht (9) und dem Tankboden (1),
b. Auflegen von quer zu der Mitte-Querachse Q parallel zueinander sich erstreckenden voneinander beabstandeten Reihen von, vorzugsweise in Reihe angeordneten, bodenseitigen Unterlegflacheisen (111b) mit unterseitig angehefteten Flacheisen als Schweißbadsicherung mit Untergriff der Flacheisen auf die auf dem Tankboden (1) angeordnete Dreischichtenanordnung (73) und Vernieten (93) der bodenseitigen Unterlegflacheisen (111b) mit derselben und dem Tankboden (1) und
Verheften der benachbarten bodenseitigen Unterlegflacheisen (111a) miteinander und Verheften der benachbarten bodenseitigen Unterlegflacheisen (111b) miteinander,
c. vakuumdichtes Verschweißen, vorzugsweise ohne Argonspülung, benachbarter Unterlegflacheisen (111a, 111b) miteinander,
d. Auflegen von gleichartig ausgebildeten oberseitigen Unterlegflacheisen (112a) mit unterseitig angehefteten Flacheisen als Schweißbadsicherung mit Untergriff der Flacheisen mittig auf die längs der Mitte-Querachse Q verlaufenden bodenseitigen Unterlegflacheisen (111a) unter Bildung von Auflageflächen (118) für untere Bodenblechbahnen und von gleichartig ausgebildeten oberseitigen Unterlegflacheisen (112b) ohne Flacheisen mittig auf die quer zu der Mitte-Querachse Q verlaufenden bodenseitigen Unterlegflacheisen (111b) unter Bildung von Auflageflächen (118) für untere Bodenblechbahnen,
e. Auflegen der unteren, parallel zu den quer zur Mitte-Querachse Q angeordneten bodenseitigen Unterlegflacheisen (111b) und parallel zueinander sich erstreckenden Bodenblechbahnen (70a) des unteren Bodenblechs (70) auf die Auflageflächen (118) der bodenseitigen parallel zur Mitte-Querachse Q oder im Bereich derselben verlaufenden Unterlegflacheisen (111a) und/oder die Auflageflächen (118) der bodenseitigen quer zur Mitte-Querachse Q verlaufenden Unterlegflacheisen (111b) unter Überbrückung des jeweils zwischen zwei benachbarten quer zur Mitte-Querachse Q verlaufenden Reihen von bodenseitigen Unterlegflacheisen (111b) angeordneten Bereichs (300) und Heften der unteren Bodenblechbahnen an die bodenseitigen Unterlegflacheisen (111a, 111b).

16. Verfahren nach mindestens einem der vorhergehenden Ansprüche, **gekennzeichnet durch** die Schritte zum Herstellen der im Bereich der Mitte-Querachse Q verlaufenden Verbindung von zwei benachbarten Bodensegmenten (12) und zum hermetischen Trennen von Überwachungskammern (K2, K3) der zwei benachbarten Bodensegmenten (12) voneinander im Kammertrennungsbereich (124):
a. vakuumdichtes Verschweißen, vorzugsweise ohne Argonspülung, der inneren Randbereiche B 11 der unteren Bodenblechbahnen (70a) mit den bodenseitigen Unterlegflacheisen (111a),
b. vakuumdichtes Verschweißen der einen Seite der oberseitigen Unterlegflacheisen (112a) mit den bodenseitigen Unterlegflacheisen (111a),
c. Heften der der einen Seite gegenüber liegenden anderen Seite der oberseitigen Unterlegflacheisen (112a) an die bodenseitigen Unterlegflacheisen (111a),
d. Auflegen je einer Schicht mit Stahlgittergewebe (74) auf die unteren Bodenblechbahnen (70a) oder einen Teil derselben,
e. Auflegen von oberen Bodenblechbahnen (46a) des oberen Bodenblechs (46) auf die Schicht mit Stahlgittergewebe (74) und auf die oberseitigen Unterlegflacheisen (112a) mit voneinander beabstandeten inneren Randbereichen B5 der oberen Bodenblechbahnen (46a),
f. Heften der voneinander beabstandeten inneren Randbereichen B5 der oberen Bodenblechbahnen an die oberseitigen Unterlegflacheisen (112a),
g. vakuumdichtes Verschweißen, vorzugsweise ohne Argonspülung, der voneinander beabstandeten inneren Randbereichen B5 der oberen Bodenblechbahnen mit den oberseitigen Unterlegflacheisen (112a).

17. Verfahren nach mindestens einem der vorhergehenden Ansprüche, **gekennzeichnet durch** die Schritte zur Bahnentrennung eines Bodensegments (12) im Bahnentrennungsbereich (125):
a. vakuumdichtes Verschweißen, vorzugsweise ohne Argonspülung, der Seitenbereiche (70b) der unteren Bodenblechbahnen (70a) mit den bodenseitigen Unterlegflacheisen (111b),
b. Heften der oberseitigen Unterlegflacheisen (112b) an die bodenseitigen Unterlegflacheisen (111b),
c. Auflegen je einer Schicht mit Stahlgittergewebe (74) auf die unteren Bodenblechbahnen,
d. Auflegen der einen oberen Bodenblechbahn (46a) mit ihrem Seitenbereich (46b) auf einen Teil der oberseitigen Unterlegflacheisen (112b) und auf die Schicht mit Stahlgittergewebe (74) zur Überbrückung des jeweils zwischen zwei benachbarten quer zur Mitte-Querachse Q verlaufenden Reihen von oberseitigen Unterlegflacheisen (112b) angeordneten Bereichs (300) sowie Heften des Seitenbereichs (46b) der einen oberen Bodenblechbahn (46a) an die oberseitigen Unterlegflacheisen (112b),
e. Auflegen einer weiteren oberen Bodenblechbahn (46a) auf die oberseitigen Unterlegflacheisen (112b), die andere Schicht mit Stahlgittergewebe (74) sowie mit ihrem Seitenbereich (46b) auf den Seitenbereich (46b) der einen oberen Bodenblechbahn (46b) zwecks Überlappung der Seitenbereiche (46b) im Überlappungsbereich (92),
f. vakuumdichtes Verschweißen, vorzugsweise ohne Argonspülung, des von dem Tankboden (1) abgewandten Seitenbereichs (46b) der weiteren oberen Bodenblechbahn (46b) mit der einen oberen Bodenblechbahn (46b).

18. Verfahren nach mindestens einem der vorhergehenden Ansprüche, **dadurch gekennzeichnet, dass** die unteren und die oberen Liegeblechbahnen (55a) und die unteren und die oberen Stehblechbahnen quer zu der Mitte-Querachse Q oder radial um die Mitte-Längsachse M des Tankbehälters ausgerichtet werden und/oder
aus dem Tankmantel (2) ein Durchbruch zur Aufnahme eines Verstärkungsrohrs (02) und aus dem oberen Liegeblech (42) ein Durchbruch herausgefräst werden,
über das Rohr (05) das Verstärkungsrohr (02) geführt und mit dem Tankmantel (2) punktweise verschweißt, vorzugsweise geheftet, wird,
ein Verstärkungsring (11) über das Rohr (05) geführt und gegen den an das Rohr (05) angrenzenden Bereich des oberen Liegeblechs (42) angesetzt und unter Bildung von vakuumdichten Schweißnähten (77) verschweißt wird,
das Rohr (05) gegen den den Durchbruch begrenzenden Bereich des oberen Liegeblechs (42) angesetzt und mit dem Verstärkungsring (11) vakuumdicht verschweißt wird,
sowie
die Vakuumdichtigkeit von Schweißnähten sowie der von dem von dem oberen Stehblech (43), dem oberen Liegeblech (42), dem unteren Liegeblech (55) und dem unteren Stehblech (56) gebildete Zwischenraum (71) als Überwachungskammer (K1) überprüft wird durch Anschließen des Rohrs (05) an Einrichtungen zum Messen, Absaugen und Befüllen der Kammer.

19. Verfahren nach mindestens einem der vorhergehenden Ansprüche, **dadurch gekennzeichnet, dass**
aus dem Tankmantel (2) ein Durchbruch zur Aufnahme eines Verstärkungsrohrs (02) und aus dem oberen Bodenblech (46) ein Durchbruch herausgefräst wird,
über das Rohr (05) das Verstärkungsrohr (02) geführt und mit dem Tankmantel (2) punktweise verschweißt, vorzugsweise geheftet, wird,
eine Verstärkungsplatte (11a) mit Durchbruch gegen den den Durchbruch begrenzenden Bereich des oberen Bodenblechs (46) unterseitig angesetzt wird,
der dem Durchbruch zugewandte Bereich des oberen Bodenblechs (46) vakuumdicht mit der Verstärkungsplatte (11a) verschweißt wird,
ein Verstärkungsring (11) über das Rohr (05) geführt und gegen den den Durchbruch der Verstärkungsplatte (11a) begrenzenden Bereich derselben angesetzt und unter Bildung von vakuumdichten Schweißnähten (77) mit der Verstärkungsplatte und dem Rohr (05) verschweißt wird
sowie
die Vakuumdichtigkeit von Schweißnähten sowie die von dem von dem oberen Stehblech (43), dem oberen Liegeblech (42), dem unteren Liegeblech (55) und dem unteren Stehblech (56) gebildeten Zwischenraum (71) als Überwachungskammer (K2, K3) überprüft werden durch Anschließen des Rohrs (05) an Einrichtungen zum Messen, Absaugen und Befüllen der Kammer.

20. Verfahren nach mindestens einem der vorhergehenden Ansprüche, **dadurch gekennzeichnet, dass** mindestens eine ein Zwischenraum als Überwachungskammer (K1, K2, K3, K4) zur Überprüfung auf Dichtheit derselben an Leckanzeiger mittels Rohren (05) anschließbar ausgebildet und/oder mindestens eine Überwachungskammer (K2, K3, K4) bzw. Zwischenraum des Bodensegments (10) mit den von übereinander angeordneten voneinander beabstandeten Bodensumpfbehältern (54, 58) und/oder von übereinander angeordneten voneinander beabstandeten Schlammtassen (78) ausgebildeten Zwischenräumen (71) flüssigkeits- und/oder gasmäßig zum Austausch von Flüssigkeiten und Gasen zwischen den Zwischenräumen (71) von Bodensumpfbehältern (54, 58) und/oder von Schlammtassen (78) und dem Zwischenraum (K2, K3, K4) des Bodensegments (10) flüssigkeits- und/oder gasmäßig zum Austausch von Flüssigkeiten und Gasen verbindbar ausgestaltet werden.
